# EUROPEAN PATENT APPLICATION

(11) **EP 2 644 757 A1**
(43) Date of publication of application: **02.10.2013**
(21) Application number: 11843463.8
(22) Date of filing: 24.11.2011
(51) Int. Cl.: D01D 5/24, B01D 69/08, B01D 69/12

(54) **HOLLOW FIBER MEMBRANE SPINNING NOZZLE, AND METHOD FOR MANUFACTURING HOLLOW FIBER MEMBRANE**

(30) Priority: 24.11.2010 JP 2010261481; 22.02.2011 JP 2011035631; 02.03.2011 JP 2011045040; 12.04.2011 JP 2011088187; 27.04.2011 JP 2011100140; 26.05.2011 JP 2011118086
(71) Applicant: Mitsubishi Rayon Co., Ltd., Tokyo 100-8253 (JP)
(72) Inventor: FUJIKI, Hiroyuki, Otake-shi Hiroshima 739-0693 (JP); SUMI, Toshinori, Otake-shi Hiroshima 739-0693 (JP); HIROMOTO, Yasuo, Otake-shi Hiroshima 739-0693 (JP); MAEHARA, Osamu, Otake-shi Hiroshima 739-0693 (JP); TANAKA, Masahiro, Tokyo 108-8253 (JP); TERAMACHI, Masashi, Toyohashi-shi Aichi 440-8601 (JP)
(74) Representative: HOFFMANN EITLE
(86) International application number: PCT/JP2011/077088
(87) International publication number: WO 2012/070629

(57) **Abstract**

A hollow fiber membrane-spinning nozzle that spins a hollow fiber membrane having a porous membrane layer and a support is provided in which the nozzle includes a resin flow channel through which a membrane-forming resin solution forming the porous membrane layer flows, the resin flow channel includes a liquid storage section that stores the membrane-forming resin solution and a shaping section that shapes the membrane-forming resin solution in a cylindrical shape and satisfies at least one of conditions (a) to (c): (a) the resin flow channel is disposed to cause the membrane-forming resin solution to branch and merge; (b) a delay means for delaying the flow of the membrane-forming resin solution is disposed in the resin flow channel; and (c) the liquid storage section or the shaping section includes branching and merging means for the membrane-forming resin solution therein. Accordingly, it is possible to provide a hollow fiber membrane-spinning nozzle and a method of manufacturing a hollow fiber membrane using the spinning nozzle which suppress occurrence of cracking along the axial direction in a resultant hollow fiber membrane even when the spinning speed is raised.

## Description

### Technical Field

The present invention relates to a hollow fiber membrane-spinning nozzle and a method of manufacturing a hollow fiber membrane.
Priority is claimed on Japanese Patent Application No. 2010-261481 filed November 24, 2010, Japanese Patent Application No. 2011-035631 filed February 22, 2011, Japanese Patent Application No. 2011-045040 filed March 2, 2011, Japanese Patent Application No. 2011-088187 filed April 12, 2011, Japanese Patent Application No. 2011-100140 filed April 27, 2011, and Japanese Patent Application No. 2011-118086 filed May 26, 2011, the contents of which are incorporated herein by reference.

### Background Art

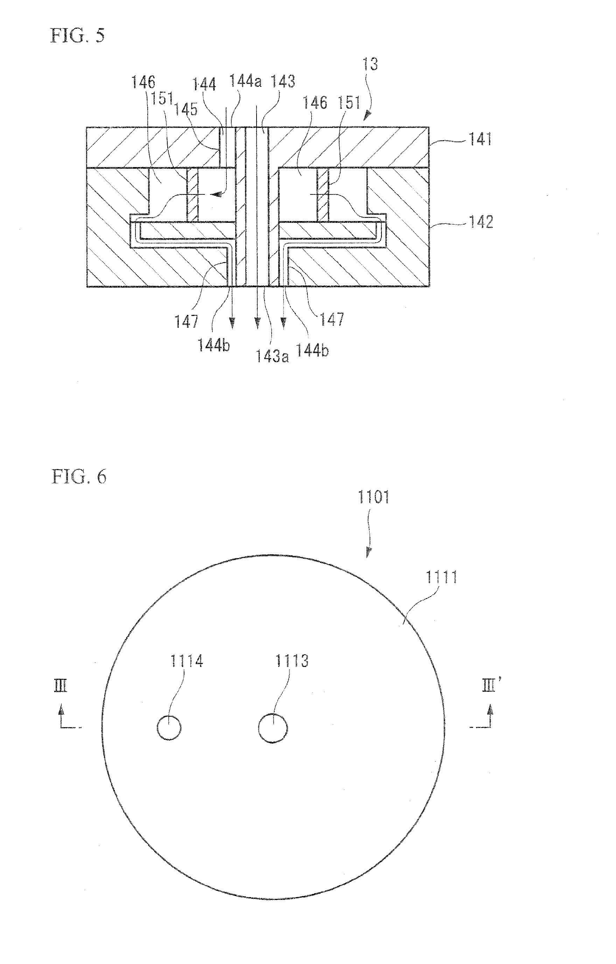

With an increase in attention to environmental pollution or an increased regulation thereof, water treatment using a filtration membrane having superior detachability and compactability has attracted more and more attention. A hollow fiber membrane having a hollow porous membrane layer is suitably used as the filtration membrane in the water treatment (for example, see PTL 1). For example, a hollow fiber membrane-spinning nozzle 1101 (hereinafter, referred to as "spinning nozzle 1101") shown in FIGS. 6 to 8 is used to manufacture such a hollow fiber membrane.

The spinning nozzle 1101 includes a first nozzle 1111 and a second nozzle 1112. The spinning nozzle 1101 further includes a support passage 1113 through which a hollow support passes and a resin flow channel 1114 through which a membrane-forming resin solution forming a porous membrane layer flows therein. The resin flow channel 1114 includes an introduction section 1115 into which the membrane-forming resin solution is introduced, a liquid storage section 1116 that stores the membrane-forming resin solution to have an annular cross-sectional shape, and a shaping section 1117 that shapes the membrane-forming resin solution in a cylindrical shape. In the spinning nozzle 1101, the hollow support is supplied from a support supply hole 1113a and is emitted from a support emitting hole 1113b, and the membrane-forming resin solution is supplied from a resin supply hole 1114a and is ejected in a cylindrical shape around the support from an ejection hole 1114b.
In spinning of a hollow fiber membrane using the spinning nozzle 1101, the membrane-forming resin solution ejected from the ejection hole 1114b of the spinning nozzle 1101 is applied to the outside of the hollow support simultaneously emitted from the support emitting hole 1113b. Thereafter, the membrane-forming resin solution is coagulated in a coagulating bath and a hollow fiber membrane is manufactured through processes such as washing and drying.

### Citation List

### Patent Literature

[PTL1] Japanese Unexamined Patent Application, First Publication No. 2009-50766

### Summary of Invention

### Technical Problem

However, in known spinning nozzles such as the spinning nozzle 1101 when a spinning speed is raised to manufacture a hollow fiber membrane with low cost and high productivity, a starting point of cracking along the axial direction is formed in the porous membrane layer formed on the outside of the support. Accordingly, when the hollow fiber membrane is deformed in a flat shape, a phenomenon may occur in which the porous membrane layer formed on the outer surface of the support cracks along the axial direction.

An object of the present invention is to provide a hollow fiber membrane-spinning nozzle which can suppress occurrence of cracking along the axial direction in a resultant hollow fiber membrane even when the spinning speed is raised.

### Solution to Problem

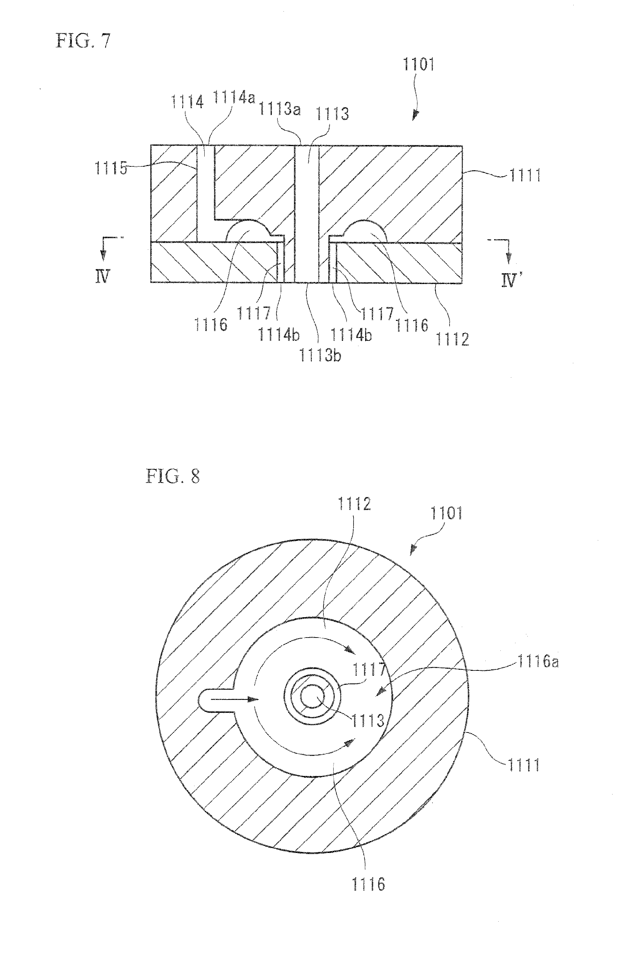

The inventors of the present invention studied the problem of cracking along the axial direction occurring in the porous membrane layer when the spinning speed is raised in spinning using the known spinning nozzle such as the spinning nozzle 1101 in detail. It was proved that a starting point of cracking along the axial direction in the porous membrane layer is formed in a portion of the liquid storage section 1116 opposite to the introduction section 1115, that is, in a portion corresponding to a merging portion 1116a (FIG. 8) in which the membrane-forming resin solution branching into two parts in the liquid storage section 1116 and flowing in an arc-like shape merges. The inventors of the present invention have made the present invention afer further studies.

That is, a hollow fiber membrane-spinning nozzle according to an aspect of the present invention has the following configurations.
[1] A hollow fiber membrane-spinning nozzle that spins a hollow fiber membrane having a porous membrane layer, including: a resin flow channel through which a membrane-forming resin solution forming the porous membrane layer flows therein, wherein the resin flow channel includes a liquid storage section that stores the membrane-forming resin solution to have an annular cross-sectional shape and a shaping section that shapes the membrane-forming resin solution in a cylindrical shape, and a porous element through which the membrane-forming resin solution passes from the side surface is disposed in the liquid storage section.
[2] The hollow fiber membrane-spinning nozzle according to [1], wherein the porous element is a porous member having a three-dimensional mesh structure.
[3] The hollow fiber membrane-spinning nozzle according to [1] or [2], wherein the porous element has a cylindrical shape.
[4] The hollow fiber membrane-spinning nozzle according to [3], wherein the cylindrical porous element is disposed to cause the membrane-forming resin solution to pass therethrough from the outer circumferential surface to the inner circumferential surface.
[5] The hollow fiber membrane-spinning nozzle according to any one of [1] to [4], wherein the porous element is made of a sintered compact of metal particulates.
[6] The hollow fiber membrane-spinning nozzle according to any one of [1] to [5], including two or more resin channels each having a liquid storage section that stores the membrane-forming resin solution to have an annular cross-sectional shape and a shaping section that shapes the membrane-forming resin solution in a cylindrical shape, and spinning a hollow fiber membrane having two or more porous membrane layers, wherein each of the two or more liquid storage sections is provided with the porous element.

A hollow fiber membrane-spinning nozzle according to another aspect of the present invention has the following configuration.
[7] A hollow fiber membrane-spinning nozzle that spins a hollow fiber membrane having a porous membrane layer, including: a resin flow channel through which a membrane-forming resin solution forming the porous membrane layer flows therein, wherein the resin flow channel includes a liquid storage section that stores the membrane-forming resin solution to have an annular cross-sectional shape and a shaping section that shapes the membrane-forming resin solution in a cylindrical shape, the liquid storage section is divided into liquid storage chambers of two or more stages, and two or more supply channels supplying the membrane-forming resin solution from the top liquid storage chamber to the lower liquid storage chamber are disposed along the outer wall of the liquid storage section.

A hollow fiber membrane-spinning nozzle according to still another aspect of the present invention has the following configuration.
[8] A hollow fiber membrane-spinning nozzle that spins a hollow fiber membrane having a porous membrane layer, including: a resin flow channel through which a membrane-forming resin solution forming the porous membrane layer flows therein, wherein the resin flow channel includes a liquid storage section that stores the membrane-forming resin solution to have an annular cross-sectional shape and a shaping section that shapes the membrane-forming resin solution in a cylindrical shape, and a filler layer filled with particles is disposed in the liquid storage section.

A hollow fiber membrane-spinning nozzle according to still another aspect of the present invention has the following configuration.
[9] A hollow fiber membrane-spinning nozzle that spins a hollow fiber membrane having a porous membrane layer, including: a resin flow channel through which a membrane-forming resin solution forming the porous membrane layer flows therein, wherein the resin flow channel includes a liquid storage section that stores the membrane-forming resin solution to have an annular cross-sectional shape and a shaping section that shapes the membrane-forming resin solution in a cylindrical shape, the liquid storage section is vertically divided into two or more stages, and the top-stage liquid storage section and the lower-stage liquid storage section communicate with a resin supply section.
[10] The hollow fiber membrane-spinning nozzle according to [9], wherein the liquid storage section is divided into three or more stages, and the resin supply section causing the n-th-stage (where n is a natural number) liquid storage section and the (n+1)-th-stage liquid storage section to communicate with each other and the resin supply section causing the (n+1)-th-stage liquid storage section and the (n+2)-th-stage liquid storage section to communicate with each other are arranged at positions shifted along the circumferential direction of the liquid storage section.
[11] The hollow fiber membrane-spinning nozzle according to [9] or [10], wherein the resin supply sections are arranged with a constant angle interval in the circumferential direction of the liquid storage section about the central axis of the shaping section sequentially from the top stage.

A hollow fiber membrane-spinning nozzle according to still another aspect of the present invention has the following configuration.
[12] A hollow fiber membrane-spinning nozzle including: a resin flow channel through which a membrane-forming resin solution forming the porous membrane layer flows therein, wherein the resin flow channel includes a liquid storage section that stores the membrane-forming resin solution to have an annular cross-sectional shape and a shaping section that shapes the membrane-forming resin solution in a cylindrical shape, and a meandering section causing the membrane-forming resin solution to vertically meander in a state where the membrane-forming resin solution is maintained in the annular cross-sectional shape is disposed between the liquid storage section and the shaping section.

A hollow fiber membrane-spinning nozzle according to still another aspect of the present invention has the following configuration.
[13] A hollow fiber membrane-spinning nozzle that spins a hollow fiber membrane having a porous membrane layer, including: a resin flow channel through which a membrane-forming resin solution forming the porous membrane layer flows therein, wherein the resin flow channel includes a liquid storage section that stores the membrane-forming resin solution to have an annular cross-sectional shape and a shaping section that shapes the membrane-forming resin solution in a cylindrical shape, and a weir regulating the flow of the membrane-forming resin solution in the liquid storage section so as to cause the flow of the membrane-forming resin solution in the liquid storage section to revolve is disposed to extend from one wall surface of the liquid storage section to the other wall surface.

That is, the present invention provides the following configurations.
(1) A hollow fiber membrane-spinning nozzle that spins a hollow fiber membrane having a porous membrane layer and a support, including the nozzle includes a resin flow channel through which a membrane-forming resin solution forming the porous membrane layer flows, wherein the resin flow channel includes a liquid storage section that stores the membrane-forming resin solution and a shaping section that shapes the membrane-forming resin solution in a cylindrical shape and satisfies at least one of conditions (a) to (c): (a) the resin flow channel is disposed to cause the membrane-forming resin solution to branch and merge; (b) the resin flow channel is disposed so as to delay the flow of the membrane-forming resin solution; and (c) the liquid storage section or the shaping section includes branching and merging means for the membrane-forming resin solution therein.
(2) The hollow fiber membrane-spinning nozzle according to (1), wherein the liquid storage section has an annular cross-sectional shape.
(3) The hollow fiber membrane-spinning nozzle according to (1) or (2), wherein the resin flow channel includes two or more merging portions in which the membrane-forming resin solution merges.
(4) The hollow fiber membrane-spinning nozzle according to any one of (1) to (3), wherein the liquid storage section or the shaping section includes the branching and merging means for the membrane-forming resin solution therein, and the branching and merging means is a porous element which is disposed in the liquid storage section and through which the membrane-forming resin solution passes.
(5) The hollow fiber membrane-spinning nozzle according to any one of (1) to (4), wherein the porous element is a porous member having a three-dimensional mesh structure.
(6) The hollow fiber membrane-spinning nozzle according to any one of (1) to (5), wherein the porous element has a cylindrical shape.
(7) The hollow fiber membrane-spinning nozzle according to (4), wherein the cylindrical porous element is disposed to cause the membrane-forming resin solution to pass from the outer circumferential surface to the inner circumferential surface.
(8) The hollow fiber membrane-spinning nozzle according to any one of (1) to (5), wherein the porous element has a disk-like shape.
(9) The hollow fiber membrane-spinning nozzle according to any one of (1) to (8), wherein the porous element is made of a sintered compact of metal.
(10) The hollow fiber membrane-spinning nozzle according to (9), wherein the porous element is made of a sintered compact of metal particulates or a sintered compact of metallic meshes.
(11) The hollow fiber membrane-spinning nozzle according to any one of (1) to (10), further including a circular support passage through which the support passes, wherein the diameter of the support passage is in a range of 95% to 200% of the outer diameter of the support.
(12) The hollow fiber membrane-spinning nozzle according to any one of (1) to (11), wherein the support is made of a twisted string or a braided string.
(13) The hollow fiber membrane-spinning nozzle according to any one of (1) to (12), wherein the hollow fiber membrane-spinning nozzle includes two or more resin flow channels having two or more liquid storage sections that store the membrane-forming resin solution and a shaping section that shapes the membrane-forming resin solution in a cylindrical shape, and the branching and merging means is the porous element disposed in each of the liquid storage sections.
(14) The hollow fiber membrane-spinning nozzle according to any one of (1) to (13), wherein the computed number of merging flows in an annular cross-sectional shape of the hollow fiber membrane is equal to or more than 50.
(15) The hollow fiber membrane-spinning nozzle according to any one of (1) to (14), further including an ejection hole through which the membrane-forming resin solution is ejected, wherein the pressure loss when the membrane-forming resin solution passes through the porous element is greater than the pressure loss until the membrane-forming resin solution reaches the porous element and the pressure loss until the membrane-forming resin solution reaches the ejection hole after passing through the porous element.
(16) The hollow fiber membrane-spinning nozzle according to any one of (1) to (3), wherein the resin flow channel is disposed to cause the membrane-forming resin solution to branch and merge, the resin flow channel includes a liquid storage section that is divided into liquid storage chambers of two or more stages, and two or more supply channels supplying the membrane-forming resin solution from the top-stage liquid storage chamber to the lower-stage liquid storage chamber are disposed along the outer wall of the liquid storage section.
(17) The hollow fiber membrane-spinning nozzle according to any one of (1) to (3), wherein the liquid storage section or the shaping section includes the branching and merging means for the membrane-forming resin solution therein, and the branching and merging means is a filler layer filled with particles and disposed in the liquid storage section.
(18) The hollow fiber membrane-spinning nozzle according to any one of (1) to (3), wherein the resin flow channel is disposed to cause the membrane-forming resin solution to branch and merge, the resin flow channel includes a liquid storage section that is vertically divided into two or more stages, and the top-stage liquid storage section and the lower-stage liquid storage section communicate with a resin supply section.
(19) The hollow fiber membrane-spinning nozzle according to (18), wherein the liquid storage section is divided into three or more stages, and the resin supply section causing the n-th-stage (where n is a natural number) liquid storage section and the (n+1)-th-stage liquid storage section to communicate with each other and the resin supply section causing the (n+1)-th-stage liquid storage section and the (n+2)-th-stage liquid storage section to communicate with each other are arranged at positions shifted along the circumferential direction of the liquid storage section.
(20) The hollow fiber membrane-spinning nozzle according to (18) or (19), wherein the resin supply sections are arranged with a constant angle interval in the circumferential direction of the liquid storage section about the central axis of the shaping section sequentially from the top stage.
(21) The hollow fiber membrane-spinning nozzle according to any one of (1) to (3), wherein the resin flow channel is provided with delay means for delaying the flow of the membrane-forming resin solution, and the delay means is a meandering section that causes the membrane-forming resin solution to vertically meander between the liquid storage section and the shaping section.
(22) The hollow fiber membrane-spinning nozzle according to any one of (1) to (3), wherein the resin flow channel is disposed to cause the membrane-forming resin solution to branch and merge, and the resin flow channel is a weir that extends from one wall surface of the liquid storage section to the other wall surface and that regulates the flow of the membrane-forming resin solution in the liquid storage section so as to cause the flow of the membrane-forming resin solution to revolve.
(23) A method of manufacturing a hollow fiber membrane having a hollow porous membrane layer and a support, including: spinning a hollow fiber membrane from a membrane-forming resin solution; coagulating the spun hollow fiber membrane using a coagulating liquid; removing a solvent from the coagulated hollow fiber membrane; decomposing an additive in the hollow fiber membrane from which the solvent has been removed and washing the hollow fiber membrane; drying the washed hollow fiber membrane; and winding the dried hollow fiber membrane, wherein the spinning of the hollow fiber membrane from the membrane-forming resin solution includes spinning the hollow fiber membrane from the membrane-forming resin solution using the hollow fiber membrane-spinning nozzle according to any one of (1) to (22).
(24) The method of manufacturing a hollow fiber membrane according to (23), wherein the outer diameter of the hollow fiber membrane spun in the spinning of the hollow fiber membrane is in a range of 0.5 mm to 5.0 mm, and a value d/dh obtained by dividing the outer diameter d of the hollow fiber membrane by the inner diameter dh thereof is in a range of 1.3 to 5.0.
(25) The method of manufacturing a hollow fiber membrane according to (23) or (24), wherein the computed number of merging flows in an annular cross-sectional shape of the hollow fiber membrane spun in the spinning of the hollow fiber membrane is equal to or more than 50.

### Advantageous Effects of Invention

By employing the hollow fiber membrane-spinning nozzle according to the present invention, it is possible to manufacture a hollow fiber membrane in which occurrence of cracking along the axial direction is suppressed even when the spinning speed is raised.

### Brief Description of Drawings

FIG. 1 is a plan view illustrating an example of a hollow fiber membrane-spinning nozzle according to a first aspect of the present invention.
FIG. 2 is a cross-sectional view of the hollow fiber membrane-spinning nozzle taken along line I-I' of FIG. 1.
FIG. 3 is a cross-sectional view of the hollow fiber membrane-spinning nozzle taken along line II-II' of FIG. 2.
FIG. 4 is a cross-sectional view illustrating another example of a hollow fiber membrane-spinning nozzle according to the first aspect of the present invention.
FIG. 5 is a cross-sectional view illustrating another example of a hollow fiber membrane-spinning nozzle according to the first aspect of the present invention.
FIG. 6 is a plan view illustrating an example of a hollow fiber membrane-spinning nozzle according to the background art.
FIG. 7 is a cross-sectional view of the hollow fiber membrane-spinning nozzle taken along line III-III' of FIG. 6.
FIG. 8 is a cross-sectional view of the hollow fiber membrane-spinning nozzle taken along line IV-IV' of FIG. 7.
FIG. 9 is a plan view illustrating an example of a hollow fiber membrane-spinning nozzle according to a second aspect of the present invention.
FIG. 10 is a cross-sectional view of the hollow fiber membrane-spinning nozzle taken along line I-I' of FIG. 9.
FIG. 11 is a plan view illustrating a second spinning nozzle of the hollow fiber membrane-spinning nozzle shown in FIG. 10.
FIG. 12 is a cross-sectional perspective view of the second spinning nozzle shown in FIG. 11.
FIG. 13 is a cross-sectional view of the hollow fiber membrane-spinning nozzle taken along line II-II' of FIG. 10.
FIG. 14 is a plan view illustrating another example of the second nozzle of the hollow fiber membrane-spinning nozzle according to the second aspect of the present invention.
FIG. 15 is a cross-sectional perspective view illustrating another example of the second nozzle of the hollow fiber membrane-spinning nozzle according to the second aspect of the present invention.
FIG. 16 is a plan view illustrating an example of a hollow fiber membrane-spinning nozzle according to a third aspect of the present invention.
FIG. 17 is a cross-sectional view of the hollow fiber membrane-spinning nozzle taken along line I-I' of FIG. 16.
FIG. 18 is a cross-sectional view of the hollow fiber membrane-spinning nozzle taken along line II-II' of FIG. 17.
FIG. 19 is a cross-sectional view illustrating another example of the hollow fiber membrane-spinning nozzle according to the third aspect of the present invention.
FIG. 20 is a cross-sectional view of the hollow fiber membrane-spinning nozzle taken along line III-III' of FIG. 19.
FIG. 21 is a plan view illustrating an example of a hollow fiber membrane-spinning nozzle according to a fourth aspect of the present invention.
FIG. 22 is a cross-sectional view of the hollow fiber membrane-spinning nozzle vertically taken along line I-I' of FIG. 21.
FIG. 23 is a cross-sectional view of a second nozzle portion of the hollow fiber membrane-spinning nozzle taken along the horizontal direction in FIG. 21.
FIG. 24 is a cross-sectional view of the hollow fiber membrane-spinning nozzle vertically taken along line II-II' of FIG. 21.
FIG. 25 is a cross-sectional view of a third nozzle portion of the hollow fiber membrane-spinning nozzle taken along the horizontal direction in FIG. 21.
FIG. 26 is a cross-sectional view of the hollow fiber membrane-spinning nozzle vertically taken along line III-III' of FIG. 21.
FIG. 27 is a cross-sectional view of a fourth nozzle portion of the hollow fiber membrane-spinning nozzle taken along the horizontal direction in FIG. 21.
FIG. 28 is a cross-sectional view of the hollow fiber membrane-spinning nozzle vertically taken along line IV-IV' of FIG. 21.
FIG. 29 is a cross-sectional view of a fifth nozzle portion of the hollow fiber membrane-spinning nozzle taken along the horizontal direction in FIG. 21.
FIG. 30 is a plan view illustrating an example of a hollow fiber membrane-spinning nozzle according to a fifth aspect of the present invention.
FIG. 31 is a cross-sectional view of the hollow fiber membrane-spinning nozzle taken along line I-I' of FIG. 30.
FIG. 32 is a cross-sectional view of the hollow fiber membrane-spinning nozzle taken along line II-II' of FIG. 31.
FIG. 33 is a cross-sectional view of the hollow fiber membrane-spinning nozzle taken along line III-III' of FIG. 31.
FIG. 34 is an enlarged cross-sectional view illustrating a part of a meandering section shown in FIG. 31.
FIG. 35 is a cross-sectional view illustrating another example of a hollow fiber membrane-spinning nozzle according to the fifth aspect of the present invention.
FIG. 36 is a plan view illustrating an example of a hollow fiber membrane-spinning nozzle according to a sixth aspect of the present invention.
FIG. 37 is a cross-sectional view of the hollow fiber membrane-spinning nozzle taken along line I-I' of FIG. 36.
FIG. 38 is a cross-sectional view of the hollow fiber membrane-spinning nozzle taken along line II-II' of FIG. 37.
FIG. 39 is a plan view illustrating a second spinning nozzle of the hollow fiber membrane-spinning nozzle shown in FIG. 36.
FIG. 40 is a plan view illustrating another example of a liquid storage section of the hollow fiber membrane-spinning nozzle according to the sixth aspect of the present invention.
FIG. 41 is a plan view illustrating another example of the hollow fiber membrane-spinning nozzle according to the sixth aspect of the present invention.
FIG. 42 is a partial cross-sectional view of the hollow fiber membrane-spinning nozzle taken along line III-III' of FIG. 41.
FIG. 43 is a cross-sectional view of the hollow fiber membrane-spinning nozzle taken along line IV-IV' of FIG. 42.
FIG. 44 is a plan view illustrating another example of the hollow fiber membrane-spinning nozzle according to the fifth aspect of the present invention.

### Description of Embodiments

A hollow fiber membrane-spinning nozzle according to the present invention is a spinning nozzle that spins a hollow fiber membrane having a porous membrane layer. The hollow fiber membrane-spinning nozzle according to the present invention may spin a hollow fiber membrane having a porous membrane layer on the outside of a hollow support or may spin a hollow fiber membrane having a hollow porous membrane layer without having the hollow support. The hollow fiber membrane-spinning nozzle may spin a hollow fiber membrane having a single porous membrane layer or may spin a hollow fiber membrane having multiple porous membrane layers.
The hollow fiber membrane-spinning nozzle may spin a hollow fiber membrane having a porous membrane layer formed of a single kind of membrane-forming resin solution or may spin a hollow fiber membrane having porous membrane layers formed of different kinds of membrane-forming resin solutions stacked thereon.
A method of manufacturing a hollow fiber membrane according to the present invention is a method of manufacturing a hollow fiber membrane having a hollow porous membrane layer, which includes spinning a hollow fiber membrane by the use of the hollow fiber membrane-spinning nozzle. The hollow fiber membrane manufactured using the spinning nozzle or the manufacturing method according to the present invention is hollow at the center thereof.

Examples of the hollow support include a hollow twisted string and a hollow braided string which are made of a variety of fibers. The hollow support may employ various materials independently or by combination thereof. Examples of the fiber used for the hollow twisted string or braided string include a synthetic fiber, a semi-synthetic fiber, a regenerated fiber, and a natural fiber. Any of a mono-filament, a multi-filament, and a spun yarn may be used as the shape of the fiber.

From the viewpoint of tensile strength, flexibility, chemical resistance and permeability barrier properties, a multi-filament braided string made of polyester can be preferably used as the support.
The outer diameter of the support is preferably in a range of 0.3 mm to 4.8 mm, more preferably in a range of 1.0 mm to 3.0 mm, and still more preferably in a range of 1.5 mm to 2.6 mm.

The support can be manufactured, for example, using a support manufacturing apparatus described in PCT International Publication No. WO 2009/142279 pamphlet. That is, the support manufacturing apparatus includes a bobbin, a circular knitting unit that circularly knits a yarn drawn out from the bobbin, a string supply unit that pulls a hollow knitted string knitted by the circular knitting unit with a constant tension, a heating dice that heats the hollow knitted string, a collecting unit that collects the heated hollow knitted string, and a winder that winds the hollow knitted string as a support on a bobbing.

A membrane-forming resin solution is used to form a porous membrane layer. The membrane-forming resin solution used in the present invention is a solution (membrane-forming source solution) in which a membrane-forming resin and an additive (poring agent) for controlling phase separation are dissolved in an organic solvent in which both are well soluble.
Normal resins used to form a porous membrane layer of a hollow fiber membrane can be used as the membrane-forming resin and examples thereof include a polysulfone resin, a polyether sulfone resin, a sulfonated polysulfone resin, a polyvinylidene fluoride resin, a polyacrylonitrile resin, a polyimide resin, a polyamideimide resin, or a polyesterimide resin. These can be appropriately selected and used if necessary and the polyvinylidene fluoride resin can be preferably used from the viewpoint of superior chemical resistance.
Examples of the additive (poring agent) include hydrophilic polymer resins such as monools represented by polyethylene glycol, diols, triols, or polyvinylpyrrolidone. These can be appropriately selected and used if necessary and polyvinylepyrrollidone can be preferably used from the viewpoint of a superior thickening effect.
The organic solvent is not particularly limited as long as it can dissolve both the membrane-forming resin and the additive (poring agent), and examples thereof include dimethyl sulfoxide, N-methyl-2-pyrrolidone, dimethyl acetamide, or dimethyl formamide.
Additives other than the poring agent, water, or the like as arbitrary components may be added to the membrane-forming source solution used herein without hindering the control of phase separation.

The spinning nozzle according to the present invention includes a resin flow channel through which a membrane-forming resin solution forming a porous membrane layer flows. The resin flow channel includes a liquid storage section that stores the membrane-forming resin solution and a shaping section that shapes the membrane-forming resin solution in a cylindrical shape. Here, the resin flow channel is disposed at least to cause the membrane-forming resin solution to branch and merge, the resin flow channel is provided with delay means for delaying the flow of the membrane-forming resin solution, or the liquid storage section or the shaping section includes the branching and merging means for the membrane-forming resin solution therein. The spinning nozzle according to the present invention has the above-mentioned configuration and thus has a function of uniformizing the membrane-forming resin solution in the spinning nozzle according to the present invention.

Since the resin flow channel of the spinning nozzle according to the present invention is disposed to cause the membrane-forming resin solution to branch and merge or the resin flow channel includes the branching and merging means, the membrane-forming resin solution flowing in the resin flow channel branches and the branched membrane-forming resin solutions merge. It is preferable that the resin flow channel include two or more merging portions in which the branched membrane-forming resin solutions merge. Since the resin flow channel includes two or more merging portions, the membrane-forming resin solution is made uniform in the spinning nozzle according to the present invention as a whole.
The branching and merging means may be a porous element which is disposed in the liquid storage section and through which the membrane-forming resin solution passes or may be a filler layer in which the liquid storage section is filled with particles.
The resin flow channel which is disposed to cause the membrane-forming resin solution to branch and merge may have the liquid storage section divided into liquid storage chambers of two or more stages and may include two or more supply channels supplying the membrane-forming resin solution from the top-stage liquid storage chamber to the lower-stage liquid storage chamber along the outer wall of the liquid storage section. The resin flow channel may have the liquid storage section vertically divided into two or more stages and the top liquid storage section and the lower liquid storage section may communicate with each other via a resin supply section. The resin flow channel may include a weir that is disposed to extend from one wall surface of the liquid storage section to the other wall surface and that regulates the flow of the membrane-forming resin solution in the liquid storage section to cause the flow of the membrane-forming resin solution to revolve.
Since the spinning nozzle according to the present invention has the above-mentioned configurations, the membrane-forming resin solution flowing in the resin flow channel branches and merges, the membrane-forming resin solution is made uniform in the spinning nozzle according to the present invention, and formation of a starting point of cracking along the axial direction in the porous membrane layer formed by the membrane-forming resin solution is suppressed.

The resin flow channel of the spinning nozzle according to the present invention may be provided with delay means for delaying the flow of the membrane-forming resin solution. The delay means may be a meandering section that causes the membrane-forming resin solution to vertically meander in a state where the membrane-forming resin solution is maintained in an annular cross-sectional shape between the liquid storage section and the shaping section.
Since the spinning nozzle according to the present invention has the above-mentioned configuration, the time in which the membrane-forming resin solution flowing in the resin flow channel stays in the nozzle is elongated, the membrane-forming resin solution is made uniform in the spinning nozzle according to the present invention, and the formation of a starting point of cracking along the axial direction in the porous membrane layer formed by the membrane-forming resin solution is suppressed.

Since the spinning nozzle according to the present invention has the above-mentioned configuration, it is thought that the membrane-forming resin solution is microscopically stirred as a whole and the entangled membrane-forming resins are disentangled. Accordingly, entanglement of the membrane-forming resins in the membrane-forming resin solution passing through the hollow fiber membrane-spinning nozzle according to the present invention is reduced as a whole as well as in the merging portion, and the membrane-forming resin solution is made uniform in the spinning nozzle according to the present invention as a result. In the hollow fiber membrane manufactured by the made uniform membrane-forming resin solution, it is thought that a stress-concentrated point is distributed at the time of occurrence of a load such as flat development and thus formation of a starting point of cracking along the axial direction is suppressed.

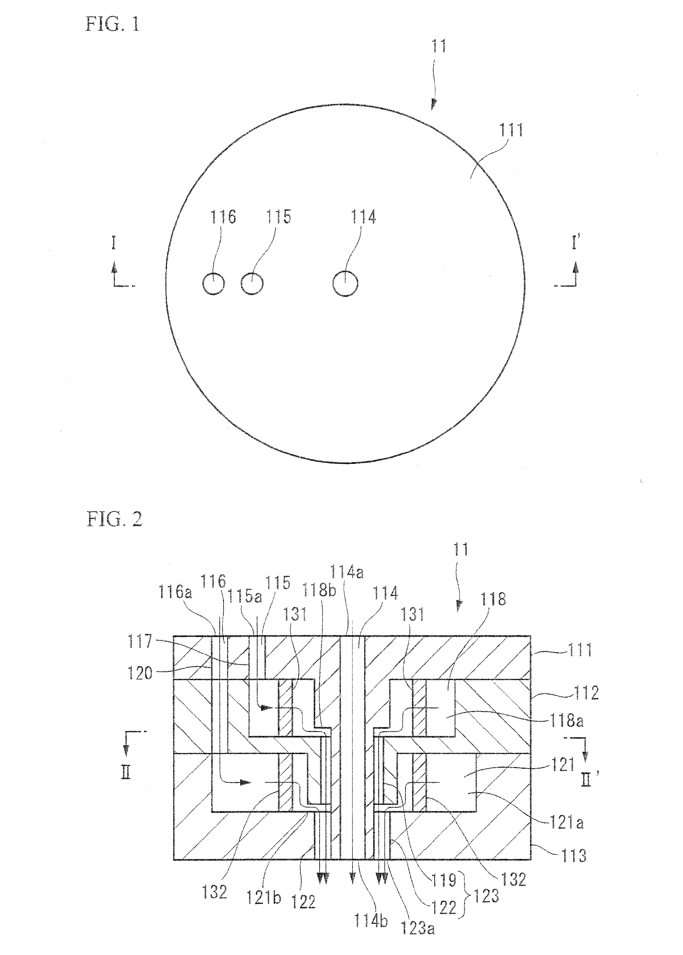

An example of a hollow fiber membrane-spinning nozzle according to a first aspect of the present invention will be described below in detail. FIGS. 1 to 3 are diagrams schematically illustrating a hollow fiber membrane-spinning nozzle 11 (hereinafter, referred to as "spinning nozzle 11") which is an example of the hollow fiber membrane-spinning nozzle according to the first aspect of the present invention. The spinning nozzle 11 is a spinning nozzle that manufactures a hollow fiber membrane having twelve porous membrane layers stacked on the outside of a hollow support. Hereinafter, the inner porous membrane layer of the hollow fiber membrane manufactured by the spinning nozzle 11 is referred to as a first porous membrane layer and the outer porous membrane layer is referred to as a second porous membrane layer.

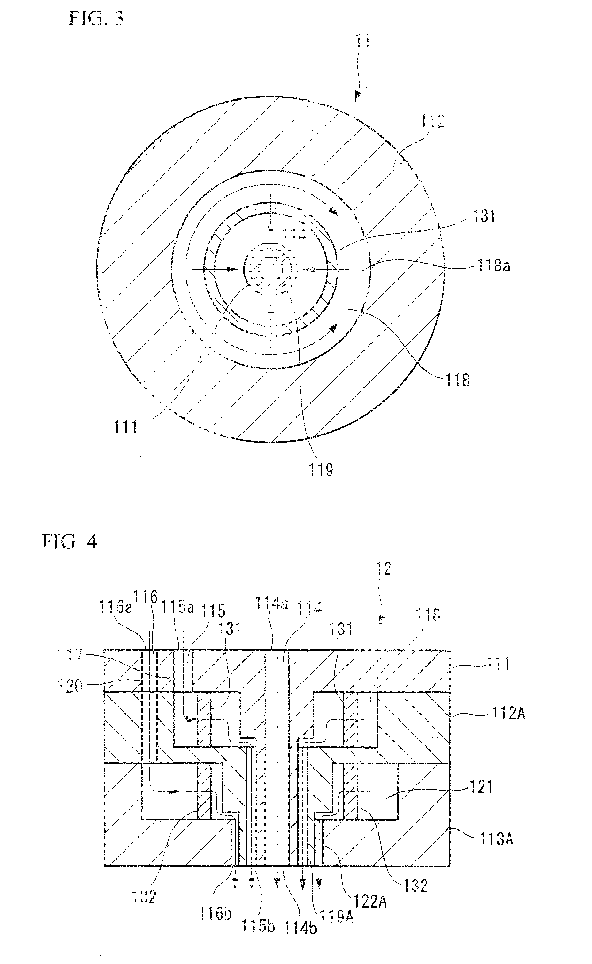

As shown in FIGS. 1 to 3, the spinning nozzle 11 according to this embodiment includes a first nozzle 111, a second nozzle 112, and a third nozzle 113.
As shown in FIG. 2, the spinning nozzle 11 includes a support passage 114 through which a hollow support passes, a resin flow channel 115 through which a first membrane-forming resin solution forming the first porous membrane layer flows, and a resin flow channel 116 through which a first membrane-forming resin solution forming the second porous membrane layer flows.
As shown in FIGS. 2 and 3, the resin flow channel 115 includes an introduction section 117 through which the first membrane-forming resin solution is introduced, a first liquid storage section 118 that stores the first membrane-forming resin solution in an annular cross-sectional shape, and a first shaping section 119 that shapes the first membrane-forming resin solution in a cylindrical shape, in the first nozzle 111 and the second nozzle 112. The resin flow channel 116 includes an introduction section 120 through which the second membrane-forming resin solution is introduced, a second liquid storage section 121 that stores the second membrane-forming resin solution in an annular cross-sectional shape, and a second shaping section 122 that shapes the second membrane-forming resin solution in a cylindrical shape. In this example, a combining section 123 is formed by the second shaping section 122 and the first shaping section 119. That is, in the second shaping section 122, the second membrane-forming resin solution is shaped in a cylindrical shape and the second membrane-forming resin solution is stacked on and combined with the first membrane-forming resin solution flowing through the first shaping section 119.
The support passage 114, the first liquid storage section 118, the first shaping section 119, the second liquid storage section 121, the second shaping section 122, and the combining section 123 match each other in the central axis.

The spinning nozzle 11 includes branching and merging means, that is, porous elements 131 and 132 through which the first membrane-forming resin solution and the second membrane-forming resin solution pass from the outer circumferential surface to the inner circumferential surface in the first liquid storage section 118 and the second liquid storage section 121, respectively.
The porous element 131 or 132 is the branching and merging means for causing the membrane-forming resin solution flowing through the resin flow channel to branch and merge, and the membrane-forming resin solution is made uniform in the spinning nozzle according to the present invention by passing through the porous element 131 or 132.
In the spinning nozzle 11, a hollow support is supplied from a support supply hole 114a and is emitted from a support emitting hole 114b, and the first membrane-forming resin solution and the second membrane-forming resin solution are supplied from resin supply holes 115a or 116a and are ejected to the circumference of the support from an ejection hole 123a in a cylindrical shape in a state where they are combined into two layers.

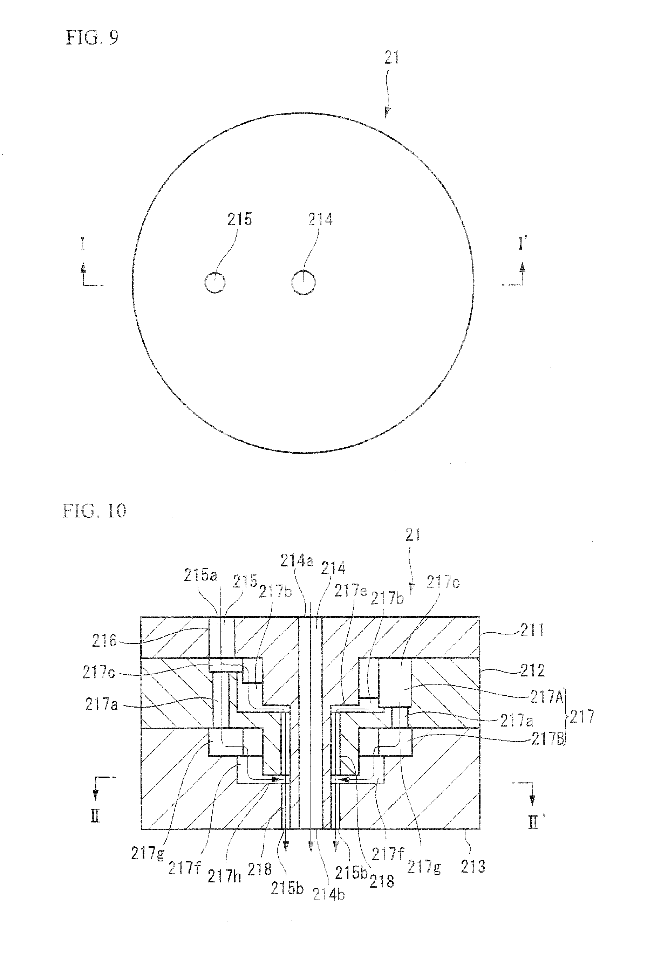

FIGS. 9 to 13 are diagrams schematically illustrating a hollow fiber membrane-spinning nozzle 21 (hereinafter, referred to as "spinning nozzle 21 ") which is an example of a hollow fiber membrane-spinning nozzle according to a second aspect of the present invention. The spinning nozzle 21 is a spinning nozzle for manufacturing a hollow fiber membrane in which a single porous membrane layer is stacked on the outside of a hollow support.

As shown in FIGS. 9 and 10, the spinning nozzle 21 according to this embodiment includes a first nozzle 211, a second nozzle 212, and a third nozzle 213.
As shown in FIG. 10, the spinning nozzle 21 includes a support passage 214 through which the hollow support passes and a resin flow channel 215 through which a membrane-forming resin solution forming a porous membrane layer flows. The resin flow channel 215 includes an introduction section 216 through which the membrane-forming resin solution is introduced, a liquid storage section 217 that stores the membrane-forming resin solution in an annular cross-sectional shape, and a shaping section 218 that shapes the membrane-forming resin solution in a cylindrical shape. The liquid storage section 217 is divided into two stages of a first liquid storage chamber 217A disposed in the second nozzle 212 and a second liquid storage section 217B disposed in the third nozzle 213. The support passage 214, the first liquid storage chamber 217A, the second liquid storage chamber 217B, and the shaping section 218 match each other in the central axis.

In the spinning nozzle 21, a hollow support is supplied from a support supply hole 214a and is emitted from a support emitting hole 214b, and the membrane-forming resin solution is supplied from a resin supply hole 215a and is ejected to the circumference of the support from an ejection hole 215b in a cylindrical shape.
That is, the resin flow channel 215 according to this embodiment includes the liquid storage section 217 or the shaping section 218 and is thus disposed so as to cause the membrane-forming resin solution to branch and merge. Therefore, the membrane-forming resin solution is made uniform in the spinning nozzle according to the present invention by passing through the resin flow channel 215.

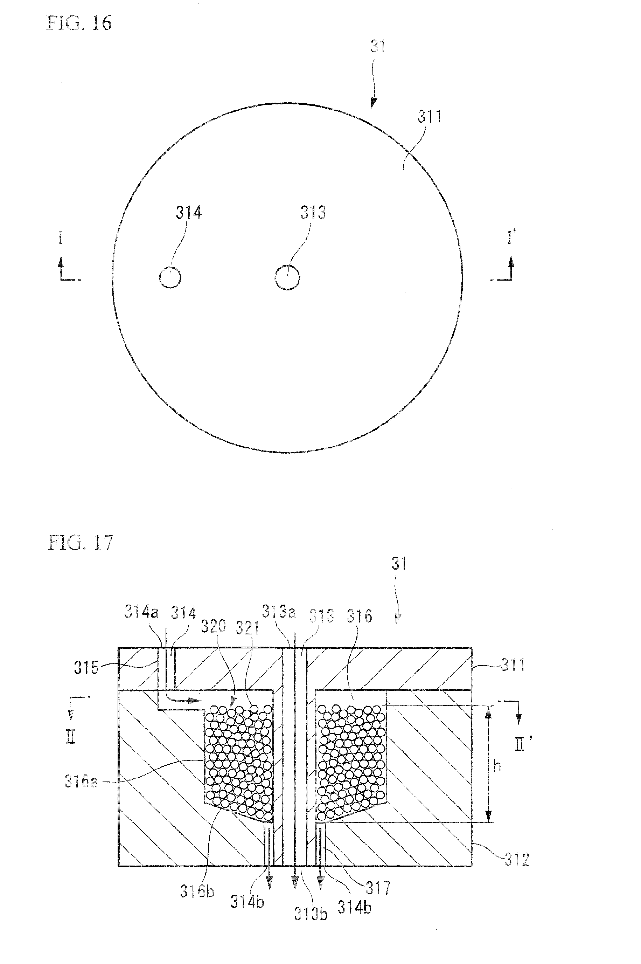

FIGS. 16 to 18 are diagrams schematically illustrating a hollow fiber membrane-spinning nozzle 31 (hereinafter, referred to as "spinning nozzle 31") which is an example of a hollow fiber membrane-spinning nozzle according to a third aspect of the present invention. The spinning nozzle 31 is a spinning nozzle for manufacturing a hollow fiber membrane in which a single porous membrane layer is stacked on the outside of a hollow support.

As shown in FIGS. 16 and 17, the spinning nozzle 31 according to this embodiment includes a first nozzle 311 and a second nozzle 312.
As shown in FIG. 17, the spinning nozzle 31 includes a support passage 313 through which the hollow support passes and a resin flow channel 314 through which a membrane-forming resin solution forming a porous membrane layer flows. The resin flow channel 314 includes an introduction section 315 through which the membrane-forming resin solution is introduced, a liquid storage section 316 that stores the membrane-forming resin solution in an annular cross-sectional shape, and a shaping section 317 that shapes the membrane-forming resin solution in a cylindrical shape. The liquid storage section 316 is provided with branching and merging means, that is, a filler layer 320 filled with particles 321. The support passage 313, the liquid storage section 316, and the shaping section 317 match each other in the central axis.

In the spinning nozzle 31, a hollow support is supplied from a support supply hole 313a and is emitted from a support emitting hole 313b, and the membrane-forming resin solution is supplied from a resin supply hole 314a and is ejected to the circumference of the support from an ejection hole 314b in a cylindrical shape.
The filler layer 320 is branching and merging means for causing the membrane-forming resin solution flowing through the resin flow channel to branch and merge, and the membrane-forming resin solution is made uniform in the spinning nozzle according to the present invention by passing through the filler layer 320.

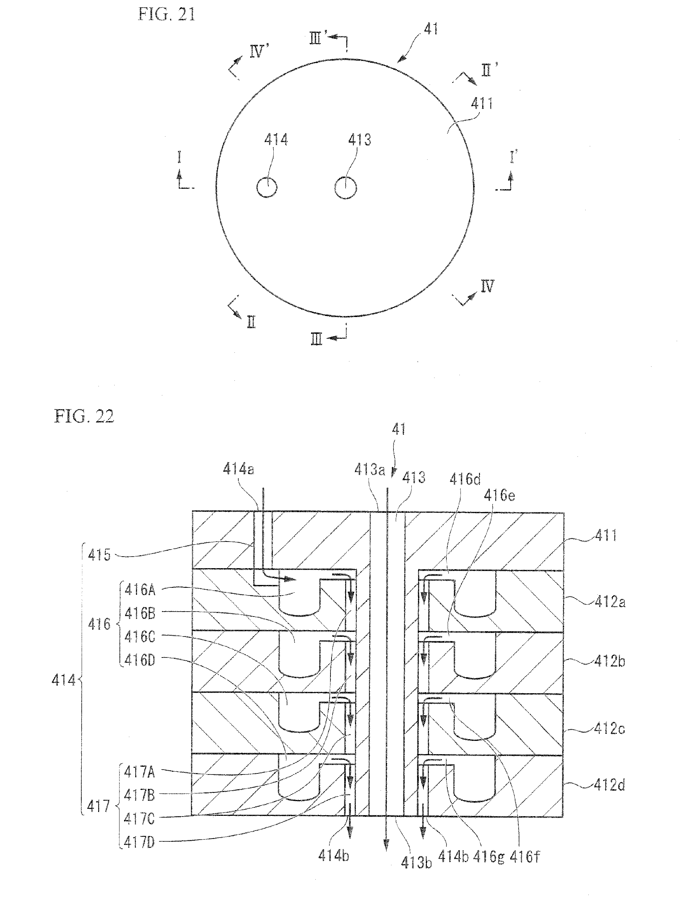

FIGS. 21 to 29 are diagrams schematically illustrating a hollow fiber membrane-spinning nozzle 41 (hereinafter, referred to as "spinning nozzle 41") which is an example of a hollow fiber membrane-spinning nozzle according to a fourth aspect of the present invention. The spinning nozzle 41 is a spinning nozzle for manufacturing a hollow fiber membrane in which a single porous membrane layer is stacked on the outside of a hollow support.

As shown in FIGS. 21 to 29, the spinning nozzle 41 according to this embodiment includes a first nozzle 411, a second nozzle 412a, a third nozzle 412b, a fourth nozzle 412c, and a fifth nozzle 412d which are vertically stacked. The spinning nozzle 41 includes a support passage 413 through which the hollow support passes and a resin flow channel 414 through which the membrane-forming resin solution forming the porous membrane layer flows.
The support passage 413 penetrates the central portion of the spinning nozzle 41.

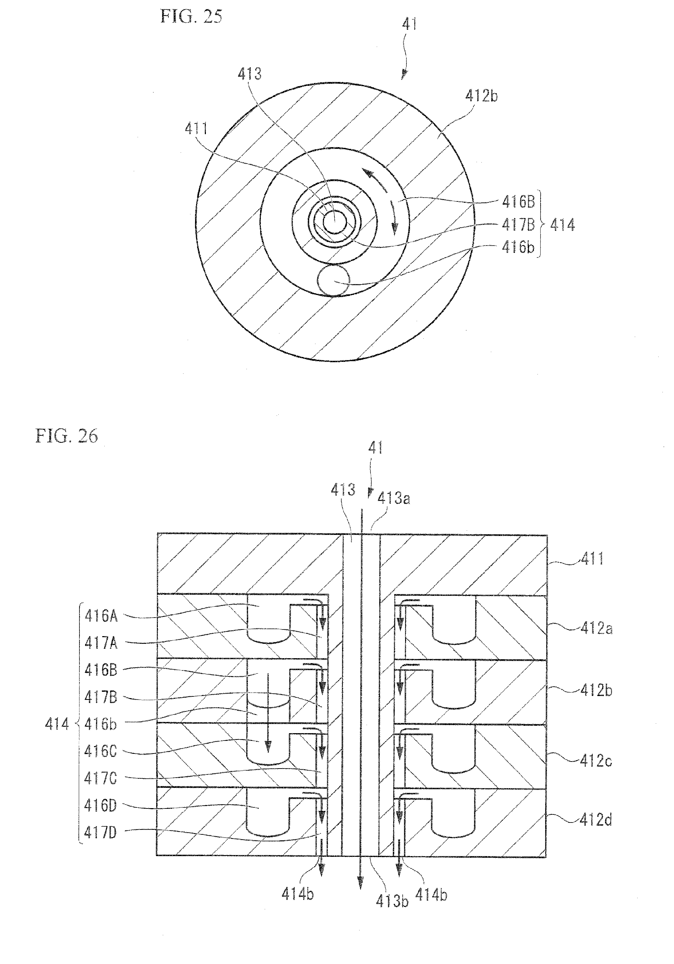

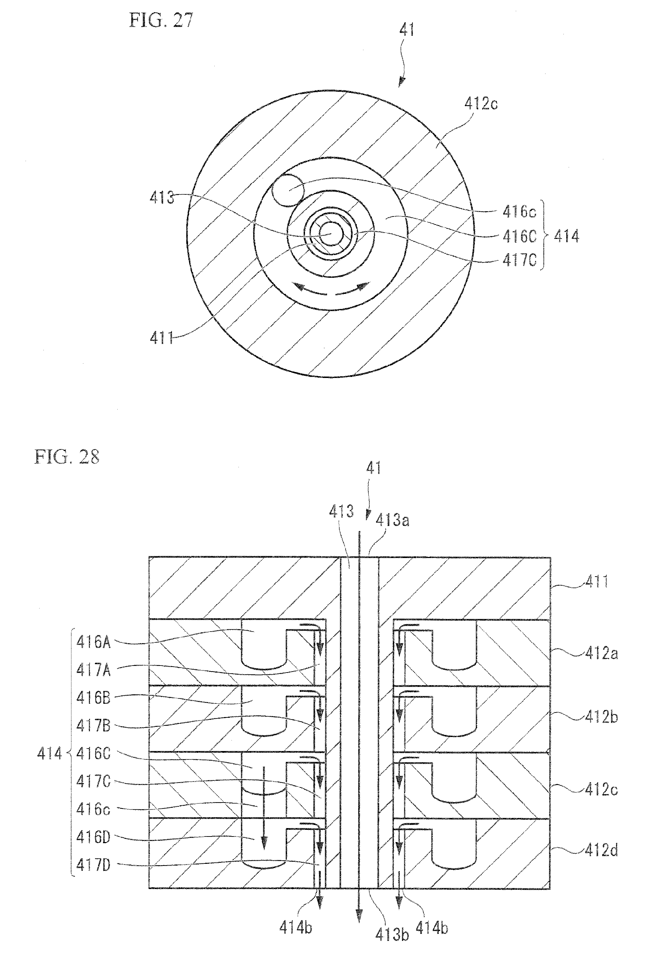

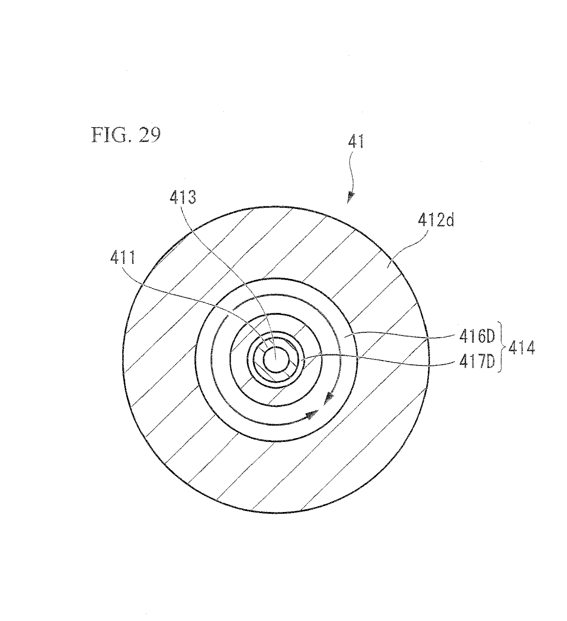

As shown in FIGS. 22 to 24, the resin flow channel 414 includes an introduction section 415 through which the membrane-forming resin solution is introduced, a first liquid storage section 416A that stores the membrane-forming resin solution in an annular shape, a first shaping section 417A that shapes the membrane-forming resin solution in a cylindrical shape, and a first resin supply section 416a, in the first nozzle 411 and the second nozzle 412a. As shown in FIGS. 25 and 26, the resin flow channel 414 further includes a second liquid storage section 416B that stores the membrane-forming resin solution in an annular shape, a second shaping section 417B that shapes the membrane-forming resin solution in a cylindrical shape, and a second resin supply section 416b, in the third nozzle 412b. As shown in FIGS. 27 and 28, the resin flow channel 414 further includes a third liquid storage section 416C that stores the membrane-forming resin solution in an annular shape, a third shaping section 417C that shapes the membrane-forming resin solution in a cylindrical shape, and a third resin supply section 416c, in the portion of the fourth nozzle 412c. As shown in FIGS. 22 and 29, the resin flow channel 414 further includes a fourth liquid storage section 416D that stores the membrane-forming resin solution in an annular shape and a fourth shaping section 417D that shapes the membrane-forming resin solution in a cylindrical shape, in the portion of the fifth nozzle 412d.
In this way, the liquid storage section 416 is vertically divided into four stages of the first liquid storage section 416A, the second liquid storage section 416B, the third liquid storage section 416C, and the fourth liquid storage section 416D. The first liquid storage section 416A communicates with the second liquid storage section 416B via the first resin supply section 416a, the second liquid storage section 416B communicates with the third liquid storage section 416C via the second resin supply section 416b, and the third liquid storage section 416C communicates with the fourth liquid storage section 416D via the third resin supply section 416c.

In this example, the first shaping section 417A to the fourth shaping section 417D constitute a combining section 417. That is, in the first shaping section 417A and the subsequent shaping sections, the shaping sections shape the membrane-forming resin solutions, respectively, in a cylindrical shape and sequentially stack the membrane-forming resin solutions flowing through the liquid storage sections on the outside of the membrane-forming resin solution flowing through the upper shaping sections, respectively.
The support passage 413, the first liquid storage section 416A, the second liquid storage section 416B, the third liquid storage section 416C, the fourth liquid storage section 416D, the first shaping section 417A, the second shaping section 417B, the third shaping section 417C, and the fourth shaping section 417D match each other in the central axis.

In the spinning nozzle 41, a hollow support is supplied from a support supply hole 413a and is emitted from a support emitting hole 413b, and the membrane-forming resin solution is supplied from a resin supply hole 414a and is ejected to the circumference of the support from an ejection hole 414b in a cylindrical shape.
That is, the resin flow channel 414 according to this embodiment includes the liquid storage sections 416A, 416B, 416C, or 416D, the resin supply sections 416a, 416b, or 416c, the shaping sections 417A, 417B, 417C, or 417D, or the combining section 417 and is thus disposed so as to cause the membrane-forming resin solution to branch and merge. Therefore, the membrane-forming resin solution is made uniform in the spinning nozzle according to the present invention by passing through the resin flow channel 414.

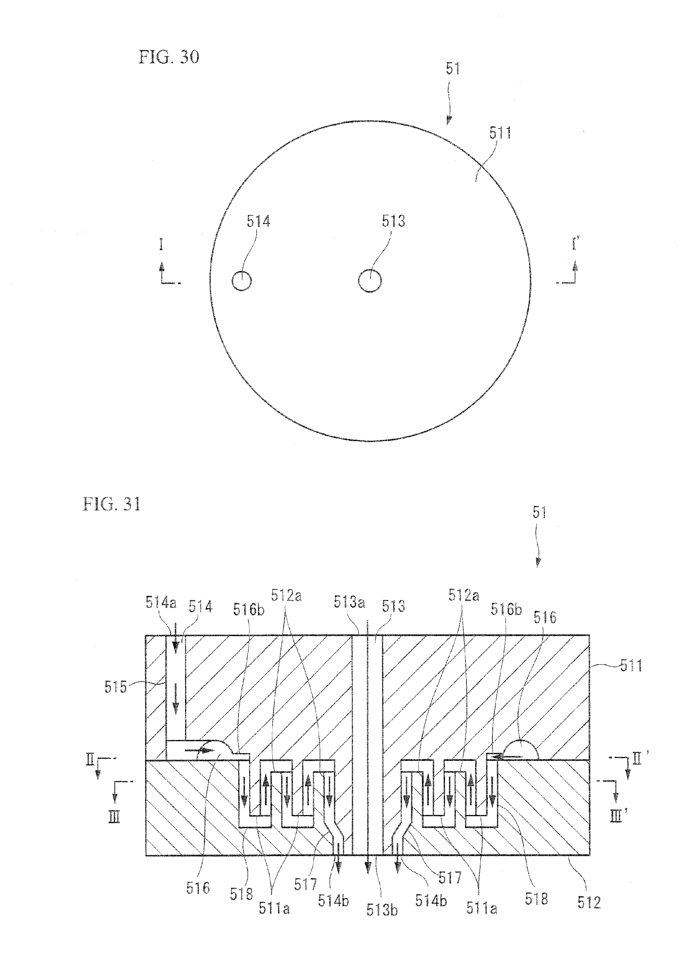

FIGS. 30 to 34 are diagrams schematically illustrating a hollow fiber membrane-spinning nozzle 51 (hereinafter, referred to as "spinning nozzle 51") which is an example of a hollow fiber membrane-spinning nozzle according to a fifth aspect of the present invention. The spinning nozzle 51 is a spinning nozzle for manufacturing a hollow fiber membrane in which a single porous membrane layer is stacked on the outside of a hollow support.

As shown in FIGS. 30 and 31, the spinning nozzle 51 according to this embodiment includes a first nozzle 511 and a second nozzle 512.
As shown in FIG. 31, the spinning nozzle 51 includes a support passage 513 through which the hollow support passes and a resin flow channel 514 through which a membrane-forming resin solution forming a porous membrane layer flows. The resin flow channel 514 includes an introduction section 515 through which the membrane-forming resin solution is introduced, a liquid storage section 516 that stores the membrane-forming resin solution in an annular cross-sectional shape, and a shaping section 517 that shapes the membrane-forming resin solution in a cylindrical shape. The spinning nozzle 51 includes a meandering section 518 that causes the membrane-forming resin solution to vertically meander in a state where the membrane-forming resin solution is maintained in an annular cross-sectional shape between the liquid storage section 516 and the shaping section 517. The support passage 513, the liquid storage section 516, the meandering section 518, and the shaping section 517 match each other in the central axis.
A kind of membrane-forming resin solution may be used alone or plural kinds of membrane-forming resin solution may be used to shape the hollow fiber membrane. For example, when two kinds of membrane-forming resin solutions are used, the membrane-forming resin solutions are combined and stacked to cover one membrane-forming resin solution, and cylindrical layers like annular rings formed of the membrane-forming resin solutions are formed in the cylindrical cross-section of the hollow fiber membrane. A cylindrical layer closest to the central axis in the cylindrical cross-section of the hollow fiber membrane is referred to as an inner layer and a layer closest to the outer surface is referred to as an outer layer.

In the spinning nozzle 51, a hollow support is supplied from a support supply hole 513a and is emitted from a support emitting hole 513b, and the membrane-forming resin solution is supplied from a resin supply hole 514a and is ejected to the circumference of the support from an ejection hole 514b in a cylindrical shape.
That is, the resin flow channel 514 according to this embodiment includes the meandering section 518 as the delay means and is thus disposed so as to delay the flow of the membrane-forming resin solution. Therefore, the membrane-forming resin solution is made uniform in the spinning nozzle according to the present invention by passing through the resin flow channel 514.
The greater the time (stay time) in which the membrane-forming resin solution stays in the meandering section, the better the effect is exhibited. Accordingly, the stay time is preferably in a range of 1 second to 5 minutes and more preferably in a range of 1 minute to 3 minutes.

An example of a hollow fiber membrane-spinning nozzle according to a sixth aspect of the present invention will be described below in detail.

### [First Embodiment]

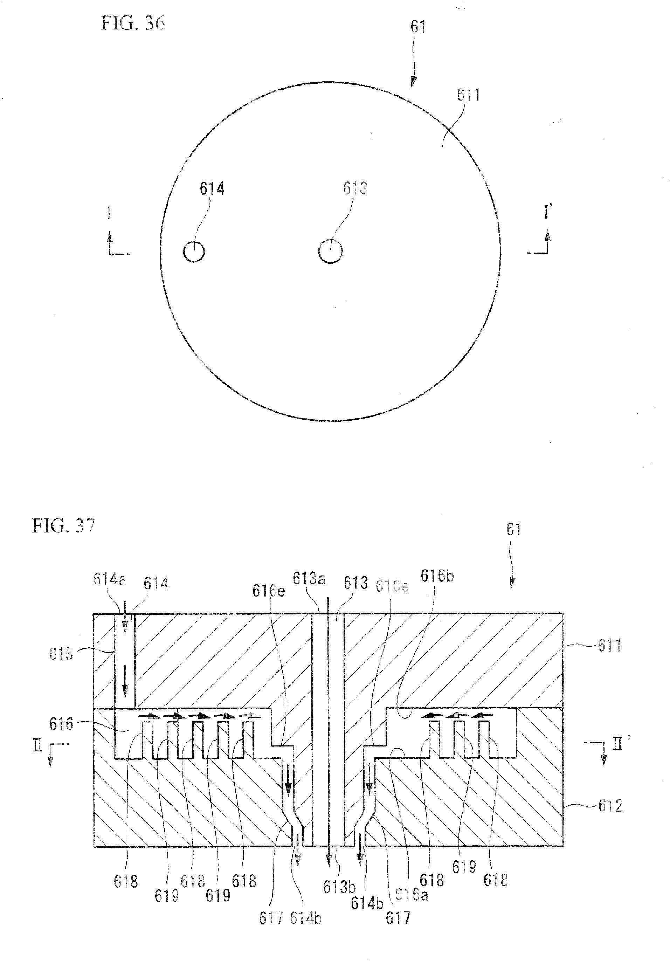

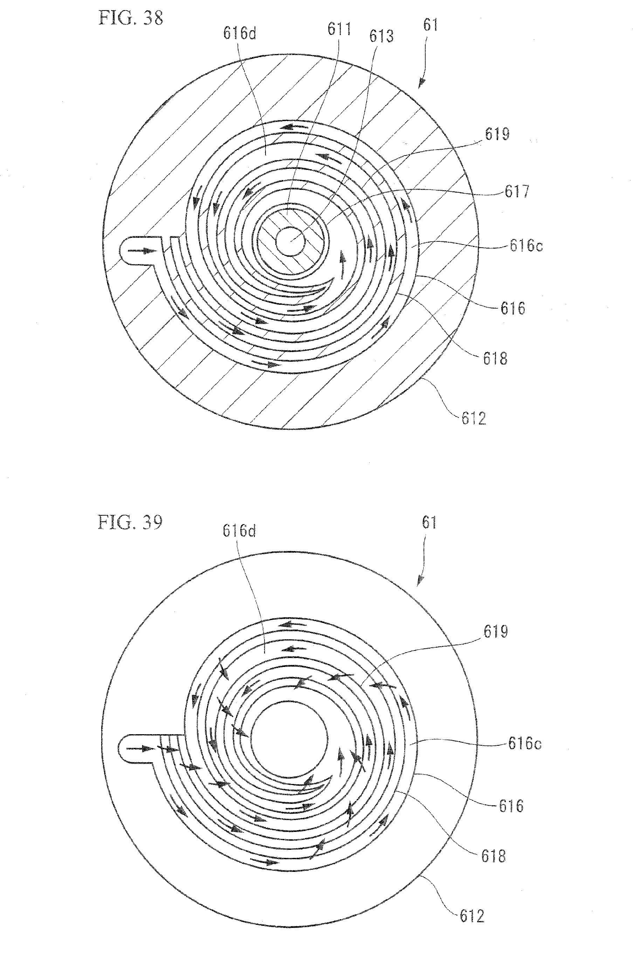

FIGS. 36 to 39 are diagrams schematically illustrating a hollow fiber membrane-spinning nozzle 61 (hereinafter, referred to as "spinning nozzle 61 ") which is an example of a hollow fiber membrane-spinning nozzle according to a sixth aspect of the present invention. The spinning nozzle 61 is a spinning nozzle for manufacturing a hollow fiber membrane in which a single porous membrane layer is formed on the outside of a hollow support.

As shown in FIGS. 36 to 39, the spinning nozzle 61 according to this embodiment includes a first nozzle 611 and a second nozzle 612.
As shown in FIG. 37, the spinning nozzle 61 includes a support passage 613 through which the hollow support passes and a resin flow channel 614 through which a membrane-forming resin solution forming a porous membrane layer flows. As shown in FIGS. 37 to 39, the resin flow channel 614 includes an introduction section 615 through which the membrane-forming resin solution is introduced, branching and merging means, that is, a liquid storage section 616 that stores the membrane-forming resin solution in an annular cross-sectional shape, and a shaping section 617 that shapes the membrane-forming resin solution, which is stored in an annular cross-sectional shape in the liquid storage section 616, in a cylindrical shape coaxial with the support passage 613.

In the spinning nozzle 61, the hollow support is supplied from a support supply hole 613a and is emitted from a support emitting hole 613b, and the membrane-forming resin solution is supplied from a resin supply hole 614a to the resin flow channel 614, is stored in the liquid storage section 616, is shaped by the shaping section 617, and is then ejected to the circumference of the support from an ejection hole 614b in a cylindrical shape.
That is, the resin flow channel 614 according to this embodiment includes the liquid storage section 616 or the shaping section 617 and is thus disposed so as to cause the membrane-forming resin solution to branch and merge. Therefore, the membrane-forming resin solution is made uniform in the spinning nozzle according to the present invention by passing through the resin flow channel 614.

The material of the first nozzles 111, 211, 311, 411, 511, and 611, the second nozzles 112, 212, 312, 412a, 512, and 612, the third nozzles 113, 213, and 412b, the fourth nozzle 412c, and the fifth nozzle 412d can employ a material normally used in a hollow fiber membrane-spinning nozzle and a stainless steel (SUS) material can be preferably used from the viewpoint of heat resistance, corrosion resistance, or strength.

The cross-sectional shape of the support passages 114, 214, 313,413, 513, and 613 is preferably circular. However, the cross-sectional shape of the support passages 114, 214, 313, 413, 513, and 613 is not limited to the circular shape.
The inner diameter (diameter) of the support passages 114, 214, 313, 413, 513, and 613 can be appropriately set depending on the diameter of the hollow support to be used. For example, when the outer diameter of the support is in a range of about 0.3 mm to 4.8 mm, the diameter of the support passage is preferably in a range of 95% to 200% of the outer diameter of the support, more preferably in a range of 100% to 150%, and still more preferably in a range of 105% to 120%.
When the diameter of the support passage is excessively smaller than the outer diameter of the support, resistance in traveling of the support increases, a traveling variation occurs, and the thickness of the membrane may be uneven or a defective portion may be easily formed. When the diameter of the support passage is excessively large, the traveling position of the support in the support passage is greatly eccentric, the contact position of the membrane-forming resin solution with the support in the circumferential direction thereof is shifted, and the unevenness in thickness or the eccentricity in thickness may occur.

The cross-sectional shapes of the introduction sections 17, 216, 315, 415, 515, and 615 of the resin flow channels 115, 215, 314, 414, 514, and 614 and the introduction section 120 of the resin flow channel 116 are preferably circular as in the examples. However, the cross-sectional shapes of the introduction sections 117, 216, 315, 415, 515, and 615 and the introduction section 120 are not limited to the circular shape.
The diameters of the introduction sections 117, 216, 315, 415, 515, and 615 and the introduction shape 120 are not particularly limited.

The first liquid storage section 118 according to the first aspect of the present invention is a section that stores the first membrane-forming resin solution flowing through the introduction section 117 in an annular cross-sectional shape. The first liquid storage section 118 preferably has an annular cross-sectional shape as in the example. However, the cross-sectional shape of the first liquid storage section 118 is not limited to the annular cross-sectional shape.
The cross-sectional shape of the first liquid storage section 118 is annular as shown in FIG. 3, and the center of the first liquid storage section 118 matches with the center of the support passage 114. In the first liquid storage section 118, the first membrane-forming resin solution branches to both sides from the introduction section 117, flows in an arc-like shape, and merges in the merging portion 118a on the opposite side of the introduction section 117.
As shown in FIG. 2, a slit section 118b may be disposed in the vicinity of the first shaping section 119 in the first liquid storage section 118. Particularly, when the ejection uniformity in the circumferential direction does not reach a desired level by only causing the membrane-forming resin solution to pass through the porous element 131 to be described later from the outer circumferential surface to the inner circumferential surface thereof, it is preferable that flow resistance be provided by the use of the slit section 118b, from the viewpoint of improvement in ejection uniformity in the circumferential direction.

In this example, the porous element 131 through which the membrane-forming resin solution passes from a side surface is disposed in the first liquid storage section 118. The porous element 131 in this example has a cylindrical shape, and the first membrane-forming resin solution supplied to the first liquid storage section 118 passes through the porous element 131 from the outer circumferential surface to the inner circumferential surface thereof.
An element having micro pores through which the membrane-forming resin solution passes from the outer circumferential surface to the inner circumferential surface thereof can be used as the porous element 131 and, for example, a filter filtering the membrane-forming resin solution can be used. From the viewpoint of strength, heat conductivity, chemical resistance, and structure uniformity, it is preferable that the porous element 131 be a sintered compact of metal particulates. Here, the porous element 131 is not limited to the sintered compact of metal particulates, and a sintered compact of metal fibers, a stacked body or a sintered compact of metallic meshes (a sintered compact of metallic meshes), a ceramic porous member, a stacked body or sintered compact of porous plates, or a filler of metal particulates may be used.

By providing the spinning nozzle 11 with the porous element 131, it is possible to suppress formation of a starting point of cracking along the axial direction in the first porous membrane layer formed of the first membrane-forming resin solution. The reason for the above-mentioned effect based on the porous element 131 is not clear but is thought as follows.
In the spinning nozzle 1101 according to the background art shown in FIGS. 6 to 8, when the spinning speed is raised, the starting point of cracking along the axial direction formed in the porous membrane layer is formed at a position corresponding to the merging portion 1116a in which the membrane-forming resin solution divided into two parts in the liquid storage section 1116 merges. The merging portion 1116a has a tendency to reduce entanglement of the membrane-forming resins in comparison with portions other than the merging portions 1116a, and it is thought that the merging portion serves as a stress-concentrated point at the time of occurrence of a load such as flat development and thus serves as a reason for formation of a starting point of cracking along the axial direction in the hollow fiber membrane. On the contrary, in the spinning nozzle 11, the first membrane-forming resin solution supplied to the first liquid storage section 118 passes through the porous element 131 from the outer circumferential surface to the inner circumferential surface. At this time, it is thought that the first membrane-forming resin solution is microscopically stirred as a whole and the entanglement of the membrane-forming resins is reduced. Accordingly, it is thought that the entanglement of the membrane-forming resins in the first membrane-forming resin solution passing through the porous element 131 to the inside is reduced as a whole as well as in the merging portion 118a, and thus the membrane-forming resin solution is made uniform in the spinning nozzle according to the present invention to distribute the stress at the time of occurrence of a load such as flat development and thus formation of a starting point of cracking along the axial direction in the hollow fiber membrane is suppressed.

The porous element 131 is preferably a porous member having a three-dimensional mesh structure, in that it is easy to obtain a hollow fiber membrane in which occurrence of cracking is suppressed. The porous member having a three-dimensional mesh structure is a porous member having a structure in which a three-dimensional flow channel is formed in which the membrane-forming resin solution does not flow linearly at the time of passing through the inside of the porous element from the outer circumferential surface to the inner circumferential surface but passes while also moving in the vertical direction or the circumferential direction. By using the porous member having a three-dimensional mesh structure as the porous element 131, it is thought that the first membrane-forming resin solution repeats micro branching and merging as a whole, is likely to be made uniform in the spinning nozzle according to the present invention, and it is difficult to form the starting point of cracking along the axial direction in the porous membrane layer even when the spinning speed is raised. This configuration is advantageous in that the pressure loss in the porous elements with the same pore diameter and the same thickness is reduced. This configuration is desirable from the viewpoint of removal of foreign substances or fine segmentation in the first membrane-forming resin solution.
Examples of the porous element having a three-dimensional mesh structure include a porous element having a fiber-winding structure or a porous element having a structure obtained by sintering and unifying a stacked body of resins, metal particulates, or metallic meshes.

The porous element 131 may have a disk-like shape or a cylindrical shape, but is not limited to these shapes. It is preferable that the first membrane-forming resin solution supplied to the first liquid storage section 118 flow from the top surface of the porous element to the bottom surface or flow from the outer circumferential surface of the porous element to the inner circumferential surface, and it is more preferable that the first membrane-forming resin solution supplied to the first liquid storage section 118 flow from the outer circumferential surface of the porous element to the inner circumferential surface. It is still more preferable that the first membrane-forming resin solution flow in an annular shape from the outer circumferential surface of the porous element to the inner circumferential surface.
Among these, the porous element 131 preferably has a cylindrical shape as in this example, in that the area through which the first membrane-forming resin solution passes can be easily increased without changing the size in the diameter direction of the hollow fiber membrane-spinning nozzle and the spinning speed can be easily raised in comparison with the porous element having a disk-like shape.
Since the cylindrical shape has superior pressure resistance to that of the disk-like shape, the porous element 131 preferably has a cylindrical shape as in this example, from the viewpoint of pressure resistance.

It is preferable that the porous element 131 do not have, for example, a joint of a general candle filter formed by winding a flat element in a cylindrical shape and welding the joining portions. The porous element is not limited to the structure not having a joint.
By using a porous element not having a joint, the passing characteristics of the first membrane-forming resin solution is likely to be made uniform. Examples of the structure of the porous element not having a joint include a cylindrical fiber-winding structure, a structure of etching a metal pipe, a structure for forming a hole in a metal pipe with a laser, a stereoscopic honeycomb structure, a structure obtained by stacking and unifying two or more doughnut-like disks having two or more fine holes allowing the outer circumference and the inner circumference to communicate with each other in a concentric shape, or a structure obtained by sintering and unifying resin or metal particulates in a cylindrical shape.

In the spinning nozzle 11, the pressure loss when the supplied first membrane-forming resin solution passes through the porous element 131 is preferably larger than the pressure loss until the first membrane-forming resin solution reaches the porous element 131 and the pressure loss until the first membrane-forming resin solution reaches the ejection hole 123a after passing through the porous element 131. When the pressure loss when the first membrane-forming resin solution passes through the porous element 131 is set in this way, the flow of the first membrane-forming resin solution in the first liquid storage section 118 moves along the circumferential direction and fills the outside of the porous element 131 and then the flow passing through the porous element 131 to the inner circumferential surface is a flow having the smallest energy loss as a whole. Accordingly, the flow of the first membrane-forming resin solution when passing through the porous element 131 is likely to be made uniform in the circumferential direction in the spinning nozzle according to the present invention as a result and the thickness of the first porous membrane layer to be formed is easily made uniform.
Specifically, it is preferable that the pressure loss not be caused (the gap be enlarged) as much as possible in the slit section 118b, the first shaping section 119, and the second shaping section 122, large passing resistance be provided to the portion of the porous element 131, and the made uniform state of the first membrane-forming resin solution passing through the porous element 131 be easily maintained up to the ejection hole 123a.
The pressure loss when the first membrane-forming resin solution passes through the porous element 131 can be adjusted by adjusting the structure or the pore diameter of the porous element 131.

The pore diameter of the porous element is preferably in a range of 1 µm to 200 µm, more preferably in a range of 50 µm to 150 µm, and still more preferably in a range of 70 µm to 120 µm. The filtration accuracy is considered as the pore diameter herein.

The first shaping section 119 is a section that shapes the first membrane-forming resin solution in the first liquid storage section 118 in a cylindrical shape coaxial with the support passing through the support passage 114.
The width (the distance between the inner wall and the outer wall) of the first shaping section 119 can be appropriately set depending on the thickness of the first porous membrane layer to be formed.

The second liquid storage section 121 is a section that stores the second membrane-forming resin solution flowing in the introduction section 120 in an annular cross-sectional shape. It is preferable that the second liquid storage section 121 has an annular cross-sectional shape as in this example. However, the cross-sectional shape of the second liquid storage section 121 is not limited to the annular cross-sectional shape.
The cross-section of the second liquid storage section 121 has an annular shape similarly to the first liquid storage section 118, and the center of the second liquid storage section 121 and the center of the support passage 114 match each other. In the second liquid storage section 121, the second membrane-forming resin solution branches into two parts from the introduction section 120, flows in an arc-like shape, and merges in the merging portion 121a on the opposite side of the introduction section 120.
As shown in FIG. 2, a slit section 121b may be disposed in the vicinity of the second shaping section 122 in the second liquid storage section 121. Particularly, when the ejection uniformity in the circumferential direction does not reach a desired level by only causing the membrane-forming resin solution to pass through the porous element 132 from the outer circumferential surface to the inner circumferential surface thereof, it is preferable that flow resistance be provided by the use of the slit section 121b, from the viewpoint of improvement in ejection uniformity in the circumferential direction.

In this example, the porous element 132 through which the membrane-forming resin solution passes from a side surface thereof is disposed in the second liquid storage section 121. The porous element 132 in this example has a cylindrical shape, and the second membrane-forming resin solution supplied to the second liquid storage section 121 passes through the porous element from the outer circumferential surface to the inner circumferential surface thereof. Examples of the porous element 132 are the same as the porous element 131 and the preferable structure thereof is also the same. By providing the porous element 132, it is possible to suppress formation of a starting point of cracking along the axial direction in the second porous membrane layer formed of the second membrane-forming resin solution.

The pressure loss when the supplied second membrane-forming resin solution passes through the porous element 132 is preferably larger than the pressure loss until the second membrane-forming resin solution reaches the porous element 132 and the pressure loss until the second membrane-forming resin solution reaches the ejection hole 123a after passing through the porous element 132. Accordingly, the flow of the second membrane-forming resin solution when passing through the porous element 132 is likely to be made uniform in the circumferential direction in the spinning nozzle according to the present invention as a result and it is possible to easily make uniform the thickness of the second porous membrane layer to be formed.

In the hollow fiber membrane-spinning nozzle according to the present invention, in case of a spinning nozzle for manufacturing a hollow fiber membrane having two or more porous membrane layers like the spinning nozzle 11, the branching and merging means, that is, the porous element, is preferably disposed in two or more liquid storage sections storing the membrane-forming resin solution forming the porous membrane layers. When a starting point of cracking along the axial direction is formed in the inner porous membrane layer, the same portion of the outer porous membrane layer is likely to crack due to the influence of the starting point of cracking. By providing the porous element to each liquid storage section like the spinning nozzle 11, it is possible to easily manufacture a hollow fiber membrane in which formation of a starting point of cracking is suppressed.

The second shaping section 122 is a section that shapes the second membrane-forming resin solution in the second liquid storage section 121 in a cylindrical shape coaxial with the support passing through the support passage 114. In this example, the combining section 123 is formed by the first shaping section 119 and the second shaping section 122. That is, the second membrane-forming resin solution shaped in a cylindrical shape by the second shaping section 122 is stacked and combined in a concentric shape outside the second membrane-forming resin solution flowing through the first shaping section 119. In the combining section 123, by stacking and combining the membrane-forming resin solutions inside the nozzle, adhesion strength between the porous membrane layers to be formed is improved, compared with a case where the membrane-forming resin solutions are stacked and combined outside the nozzle. This configuration is advantageous from the viewpoint of simplification of the nozzle structure and simplification of processes. Even when the membrane-forming resin solutions are stacked and combined in the combining section 123, there is little adverse influence on the structure of the porous membrane layers due to the mutual diffusion of the solvents in the solutions.
The width (the distance between the inner wall and the outer wall) of the combining section 123 can be appropriately set depending on the thickness of the second porous membrane layer to be formed.

The hollow fiber membrane-spinning nozzle according to the present invention preferably has a combining section that combines and stacks the membrane-forming resin solutions forming the porous membrane layers in a concentric shape downstream from the porous element in the nozzle as in this example, in case of the nozzle spinning a hollow fiber membrane having two or more porous membrane layers.

In spinning a hollow fiber membrane using the spinning nozzle 11, the hollow support is supplied from the support supply hole 114a to the support passage 114, and the first membrane-forming resin solution and the second membrane-forming resin solution are supplied from the resin supply holes 115a and 116a to the resin flow channels 115 and 116 by a device quantitatively supplying a membrane-forming resin solution. The first membrane-forming resin solution flows into the first liquid storage section 118 from the introduction section 117, branches into two parts outside the porous element 131 in the first liquid storage section 118, flows in an arc-like shape, merges on the opposite side, passes through the porous element 131 from the outer circumferential surface to the inner circumferential surface, and flows into the first shaping section 119. In the first shaping section 119, the first membrane-forming resin solution is shaped in a cylindrical shape. The second membrane-forming resin solution flows into the second liquid storage section 121 from the introduction section 120, branches into two parts outside the porous element 132 in the second liquid storage section 121, flows in an arc-like shape, merges on the opposite side, passes through the porous element 132 from the outer circumferential surface to the inner circumferential surface, and flows into the second shaping section 122. In the second shaping section 122, the second membrane-forming resin solution is shaped in a cylindrical shape. In this example, since the combining section 123 is formed by the first shaping section 119 and the second shaping section 122, the second membrane-forming resin solution is shaped in a cylindrical shape and is stacked and combined on the outside of the first membrane-forming resin solution flowing through the first shaping section 119 in a concentric shape. The first membrane-forming resin solution and the second membrane-forming resin solution are ejected from the ejection hole 123a in a state where they are stacked and combined in a concentric shape, and are applied to the outside of the support simultaneously emitted from the support emitting hole 114b.
Thereafter, for example, in a vessel in which the membrane-forming resin solution is brought into contact with gas including moisture, the membrane-forming resin solution passes through a coagulating bath in which the membrane-forming resin solution is brought into contact with a coagulating liquid to coagulate the membrane-forming resin solution, and the coagulated membrane-forming resin solution is subjected to washing, drying, and the like, whereby a hollow fiber membrane is obtained.

The spinning nozzle according to this aspect can spin a hollow fiber membrane in which the computed number of merging flows in an annular cross-section is equal to or more than 50.
The membrane-forming resin solution flowing in the nozzle branches and merges by passing through the porous element disposed in the liquid storage section, is shaped in a cylindrical shape, and is ejected from the ejection hole. Thereafter, the ejected membrane-forming resin solution is coagulated and is subjected to washing or drying, whereby a hollow fiber membrane is obtained. The computed number of merging flows means the number of membrane-forming resin solution flows in which the membrane-forming resin solution is made to branch and flow through the branched flow channels and is made to merge at the exit of the branched flow channels while causing the membrane-forming resin solution to pass through the flow channel in the nozzle and means the number of pores at the flow exit of the porous element. For example, when 100 pores are present on the side of a cylindrical porous member from which the membrane-forming resin solution exits and the resin solution is ejected from an ejection hole of one nozzle, the computed number of merging flows is 100.
In the nozzle which is a three-dimensional structure, complex flow channels are formed in the flowing direction and more branching and merging are repeated. It is thought that number of merging flows is actually more than the number of pores of the flow exit, but the number of pores at the exit of plural flow channels is considered to be the computed number of merging flows as the minimum value.
When the computed number of merging flows is small, cracking along the axial direction easily occurs with a physical load applied to the hollow fiber membrane, and the more the computed number of merging flows, the less the cracking occurs. The computed number of merging flows is preferably in a range of 50 to 3000, more preferably in a range of 200 to 2500, and still more preferably in a range of 500 to 2000.

When the number of pores of the porous element is not clear, for example, the total area of the pores is calculated from the product of the porosity of the porous element and the filtration area and a value obtained by dividing the resultant value by the area of one pore with the filtration accuracy as the pilot diameter can be set to the number of pores. The porosity is a percentage of the ratio of aperture portions through which the membrane-forming resin solution can flow to the surface on the secondary side as the exit of the membrane-forming resin solution in the porous element. The filtration area means the area of the entire surface including apertures and non-apertures on the secondary side serving as the exit of the membrane-forming resin solution in the porous element. The filtration accuracy means the size of removable objects in a porous filter.
When layers are not mixed at the time of combining and stacking plural membrane-forming resin solutions, it is necessary to check the computed number of merging flows in each layer. For example, in a two-layered structure of an inner layer and an outer layer, it is necessary to set the computed numbers of merging flows in the inner layer and the outer layer to 50 or more. When the computed number of merging flows of any one is reduced, cracking is likely to occur.
When the computed number of merging flows becomes smaller, cracking along the axial direction is more likely to occur with a physical load applied to the hollow fiber membrane. When the computed number of merging flows becomes larger, the cracking is less likely to occur. The computed number of merging flows is preferably in a range of 50 to 3000, more preferably in a range of 200 to 2500, and still more preferably in a range of 500 to 2000. When the computed number of merging flows is in the above-mentioned range, the cracking along the axial direction is less likely to occur with a physical load applied to the hollow fiber membrane.

The spinning nozzle 21 according to the second aspect of the present invention includes the liquid storage section 217 that stores the membrane-forming resin solution in an annular cross-sectional shape. The liquid storage section 217 is divided into a first liquid storage chamber 217A of the top stage and a second liquid storage chamber 217B of the bottom stage. As shown in FIGS. 10 to 12, the first liquid storage chamber 217A communicates with the introduction section 216 in the upper part of one outer wall and communicates with the second liquid storage chamber 217B via eight supply channels 217a disposed along the outer wall of the liquid storage section 217. That is, the membrane-forming resin solution flowing in the vicinity of the outer wall out of the membrane-forming resin solution supplied to the first liquid storage chamber 217A is supplied to the vicinity of the outer wall of the second liquid storage chamber 217B via the supply channels 217a.

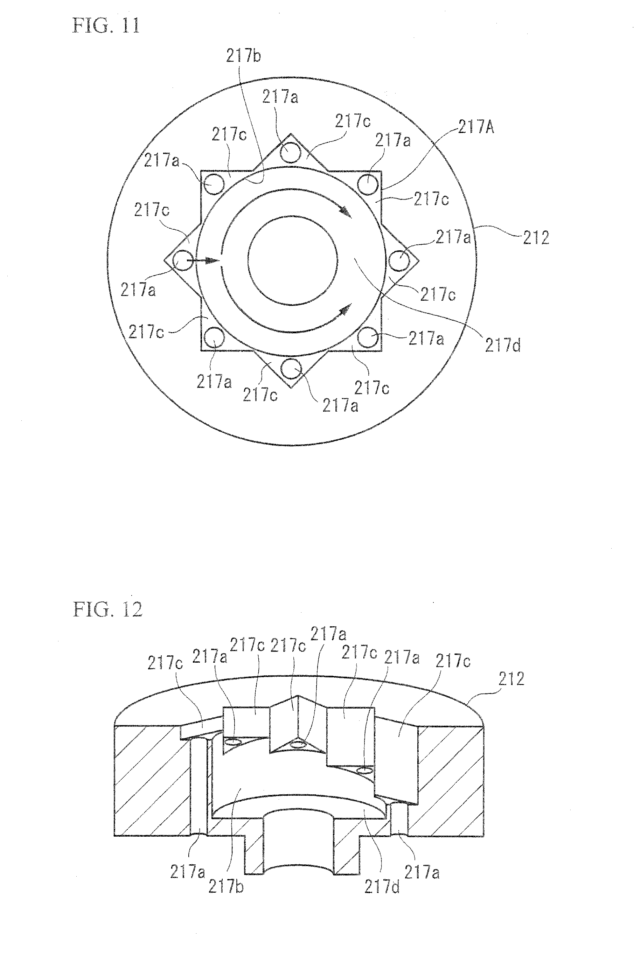

As shown in FIG. 11, the first liquid storage chamber 217A includes an annular portion 217b having an annular cross-sectional shape and eight outer circumferential portions 217c formed to be concave to the outside from the annular portion 217b. The first liquid storage section 217A communicates with the introduction section 216 in the upper part of the outer wall in one outer circumferential portion 217c. The center of the annular portion 217b of the first liquid storage chamber 217A and the center of the support passage 214 match each other.
Eight supply channels 217a are disposed to allow the outer circumferential portions 217c in the first liquid storage chamber 217A and the second liquid storage chamber 217B to communicate with each other. That is, two or more supply channels 217a are disposed along the outer wall of the liquid storage section 217. The spinning nozzle 21 is characterized in that two or more supply channels 217a supplying the membrane-forming resin solution from the first liquid storage chamber 217A of the top stage to the second liquid storage chamber 217B of the lower stage are disposed along the outer wall of the liquid storage section 217. In the present invention, disposing along the outer wall of the liquid storage section means disposing along the outermost wall when the liquid storage chamber has the outer circumferential portions 217c formed outside the annular portion 217b as in this example. That is, in this example, the supply channels 217a are disposed along the outer walls of the outer circumferential portions 217c which are the outermost wall of the first liquid storage chamber 217A in the liquid storage section 217.

As shown in FIG. 11, in the first liquid storage chamber 217A, the membrane-forming resin solution supplied from the introduction section 216 branches and flows in an arc-like shape into two parts from the introduction section 216 and merges in the merging portion 217d opposite to the introduction section 216. The membrane-forming resin solution flowing in the vicinity of the outer wall of the first liquid storage chamber 217A is supplied to the second liquid storage chamber 217B to be described later via the supply channels 217a from the outer circumferential portions 217c, merges in the second liquid storage chamber 217B, and is stored in an annular cross-sectional shape.

In the spinning nozzle 21, since the liquid storage section 217 is divided into the first liquid storage chamber 217A and the second liquid storage chamber 217B, and the supply channels 217a allowing the first liquid storage chamber 217A and the second liquid storage chamber 217B to communicate with each other are disposed along the outer wall of the liquid storage section 217, formation of a starting point of cracking along the axial direction in the porous membrane layer formed of the membrane-forming resin solution is suppressed. The reason for the above-mentioned effect in the spinning nozzle 21 is not clear but is thought as follows.
The inventors of the present invention studied the problem of a starting point of cracking along the axial direction being formed in the porous membrane layer when the spinning speed is raised in spinning using the known spinning nozzle such as the spinning nozzle 1101 shown in FIGS. 6 to 8 in detail. It was proved that a starting point of cracking along the axial direction in the porous membrane layer is formed in a portion of the liquid storage section 1116 opposite to the introduction section 1115, that is, in a portion corresponding to the merging portion 1116a (FIG. 8) in which the membrane-forming resin solution branching into two parts merges. The merging portion 1116a has a tendency to reduce entanglement of the membrane-forming resins in comparison with portions other than the merging portions 1116a or a possibility that the membrane-forming resin solution of which the nature and state can be easily changed will be concentrated by flowing in the vicinity of the outer wall of the liquid storage section 1116, and it is thought that the merging portion serves as the reason for formation of a starting point of cracking along the axial direction in the porous membrane layer.
On the contrary, in the spinning nozzle 21, the membrane-forming resin solution flowing in the vicinity of the outer wall in the first liquid storage chamber 217A of the liquid storage section 217 is supplied from the two or more supply channels 217a to the second liquid storage chamber 217B and is stored in both the first liquid storage chamber 217A and the second liquid storage chamber 217B. In this way, since the membrane-forming resin solution repeatedly branch and merge in the liquid storage section 217, the entanglement of the membrane-forming resins in the membrane-forming resin solution is reduced as a whole and thus the membrane-forming resin solution is made uniform in the spinning nozzle according to the present invention. Since the outer circumferential portions 217c and the supply channels 217a are disposed, the membrane-forming resin solution flowing in the vicinity of the outer wall of the first liquid storage chamber 217A is distributed in the circumferential direction and concentration of the membrane-forming resin solution on the merging portion 217d is avoided. Accordingly, it is thought that the formation of a starting point of cracking along the axial direction in the porous membrane layer is suppressed.

As in this example, in the first liquid storage section 217A, it is preferable that the outer circumferential portions 217c be disposed outside the annular portion 217b and the supply channels 217a be disposed to allow the outer circumferential portions 217c to communicate with the second liquid storage chamber 217B. In this way, by providing the outer circumferential portions 217c having a shape concave to the outside from the annular portion 217b, since the membrane-forming resin solution flowing in the vicinity of the outer wall flows in the outer circumferential portions 217c, the membrane-forming resin solution flowing in the vicinity of the outer wall can be collected to the outer circumferential portions 217c and can be easily supplied to the second liquid storage chamber 217B via the supply channels 217a.

It is preferable that the cross-sectional shape of the outer circumferential portions 217c have a convex shape in which the outer wall is bent to form one angle concave from the annular portion 217b to the outside as in this example. In this example, the entire shape when eight outer circumferential portions 217c are seen from the top side is a star-like polygon formed by rotating and matching two squares by 45 degrees.
Here, the cross-sectional shape of the outer circumferential portions 217c is not limited to the convex shape, but may be a semicircular shape.
In the outer circumferential portions 217c, it is preferable that the same shapes when seen from the top side be uniformly arranged outside the annular portion 217b as in this example.

As shown in FIG. 12, it is preferable that the outer circumferential portions 217c be formed so that the bottom surfaces thereof are step-like lowered from the side communicating with the introduction section 216 to the opposite side. That is, it is preferable that the bottom surfaces thereof be step-like arranged so that the bottom surface of the outer circumferential portion 217c on the side communicating with the introduction section 216 is the highest and the bottom surface of the outer circumferential portion 217c on the opposite side of the side communicating with the introduction section 216 is the lowest. In this way, by providing step differences in the height direction of the outer circumferential portions 217c, the membrane-forming resin solution flowing in the vicinity of the outer wall surfaces depending on the heights thereof enters the outer circumferential portions 217c and is distributed to flow in the supply channels 217a disposed in the outer circumferential portions 217c, and the membrane-forming resin solution flowing in the vicinity of the outer wall is not collected in the merging portion 217d.
FIG. 12 is a perspective cross-sectional view illustrating only one side of the second nozzle 212, and the outer circumferential portions 217c are similarly formed on the other side of the second nozzle 212 so that the bottom surfaces are step-like lowered from the side communicating with the introduction section 216.

As shown in FIG. 10, a slit section 217e is preferably disposed in the vicinity of the shaping section 218 in the first liquid storage chamber 217A. Particularly, when the ejection uniformity in the circumferential direction does not reach a desired level by only causing the membrane-forming resin solution to pass through the shaping section 218, it is preferable that flow resistance be provided by the use of the slit section 217e, from the viewpoint of improvement in ejection uniformity in the circumferential direction.

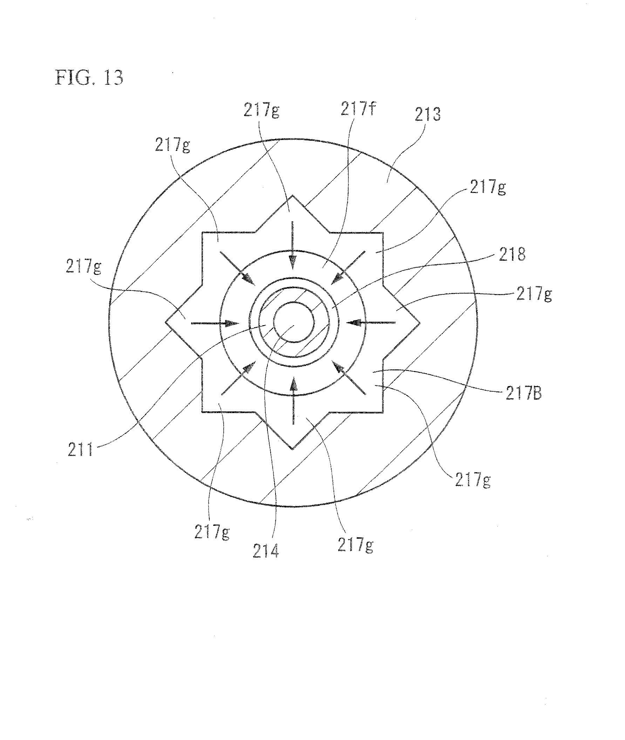

The second liquid storage chamber 217B is a section that stores the membrane-forming resin solution flowing through the supply channels 217a from the first liquid storage chamber 217A in an annular cross-sectional shape.
As shown in FIGS. 10 and 13, similarly to the first liquid storage chamber 217A, the second liquid storage chamber 217B includes an annular portion 217f having an annular cross-sectional shape and eight outer circumferential portions 217g formed to be concave to the outside from the annular portion 217f. The outer circumferential portions 217g of the second liquid storage chamber 217B are formed above the annular portion 217f so that the bottom surfaces have the same height. In the second liquid storage chamber 217B, the membrane-forming resin solution is supplied to the outer circumferential portions 217g from the outer circumferential portions 217c of the first liquid storage chamber 217A via the supply channels 217a.
The center of the annular portion 217f of the second liquid storage chamber 217B and the center of the support passage 214 match each other.

In the second liquid storage chamber 217B, as shown in FIG. 13, the membrane-forming resin solution supplied to the outer circumferential portions 217g from the supply channels 217a merges and flows in the annular portion 217f from the outer wall to the center.

It is preferable that the cross-sectional shape of each outer circumferential portion 217g of the second liquid storage chamber 217B be the same as each outer circumferential portion 217c of the first liquid storage chamber 217A. In this example, when eight outer circumferential portions 217g are seen from the top side as a whole, the entire shape is a star-like polygon formed by relatively rotating and matching two squares by 45 degrees.
As in this example, it is preferable that the outer circumferential portions 217g be uniformly arranged outside the annular portion 217f in the same shape when seen from the top side.

As shown in FIG. 10, it is preferable that a slit section 217h be disposed in the vicinity of the shaping section 218 in the second liquid storage chamber 217B. Particularly, when the ejection uniformity in the circumferential direction does not reach a desired level by only causing the membrane-forming resin solution to pass through the shaping section 218, it is preferable that flow resistance be provided by the use of the slit section 217h, from the viewpoint of improvement in ejection uniformity in the circumferential direction.
The membrane-forming resin solution stored in the second liquid storage chamber 217B passes through the slit section 217h and then merges with the membrane-forming resin solution from the first liquid storage chamber 217A in the shaping section 218.

The supply channels 217a are portions supplying the membrane-forming resin solution flowing in the vicinity of the outer wall of the first liquid storage chamber 217A to the second liquid storage chamber 217B.
As in this example, it is preferable that the cross-sectional shape of each supply channel 217a be circular. However, the cross-sectional shape of each supply channel 217a is not limited to the circular shape.
The diameter of the supply channel 217a is not particularly limited.

The number of supply channels 217a in this example is eight, but may be seven or less or nine or more. The number of supply channels 217a can be appropriately set in consideration of the diameter and the length of the supply channels 217a to be formed, the area of the bottom surface on which the supply channels 217a can be formed in the first liquid storage chamber 217A, and the like.
It is preferable that two or more supply channels 217a be uniformly arranged along the outer wall of the liquid storage section 217, in that the membrane-forming resin solution can be easily uniformly supplied to the second liquid storage chamber 217B of the lower stage.

The shaping section 218 is a section that shapes the membrane-forming resin solution flowing from the first liquid storage chamber 217A and the second liquid storage chamber 217B of the liquid storage section 217 to flow in a cylindrical shape coaxial with the support passing through the supply passage 214.
The width (the distance between the inner wall and the outer wall) of the shaping section 218 can be appropriately set depending on the thickness of the porous membrane layer to be formed.

In spinning a porous hollow fiber membrane using the spinning nozzle 21, the hollow support is supplied from the support supply hole 214a to the support passage 214, and the membrane-forming resin solution is supplied from the resin supply hole 215a to the resin flow channel 215 by a device quantitatively supplying a membrane-forming resin solution.
In the resin flow channel 215, the membrane-forming resin solution flowing through the introduction section 216 flows in the first liquid storage chamber 217A of the liquid storage section 217, branches into two parts and flows in an arc-like shape in the first liquid storage chamber 217A, merges in the merging portion 217d, passes through the slit section 217e, and flows in the shaping section 218. At this time, the membrane-forming resin solution flowing in the vicinity of the outer wall of the first liquid storage chamber 217A flows in the outer circumferential portions 217c and is supplied to the second liquid storage chamber 217B via the supply channels 217a. The membrane-forming resin solution supplied to the outer circumferential portions 217g of the second liquid storage chamber 217B via the supply channels 217a merges from the outer wall to the center, flows through the annular portion 217f, passes through the slit section 217h, and flows in the shaping section 218. Then, the membrane-forming resin solution shaped in a cylindrical shape by the shaping section 218 is ejected from the ejection hole 215b and is applied to the outside of the support simultaneously emitted from the support emitting hole 214b.
Thereafter, for example, in a vessel in which the membrane-forming resin solution is brought into contact with gas including moisture, the membrane-forming resin solution passes through a coagulating bath in which the membrane-forming resin solution is brought into contact with a coagulating liquid to coagulate the membrane-forming resin solution, and the coagulated membrane-forming resin solution is subjected to washing, drying, and the like, whereby a hollow fiber membrane is obtained.

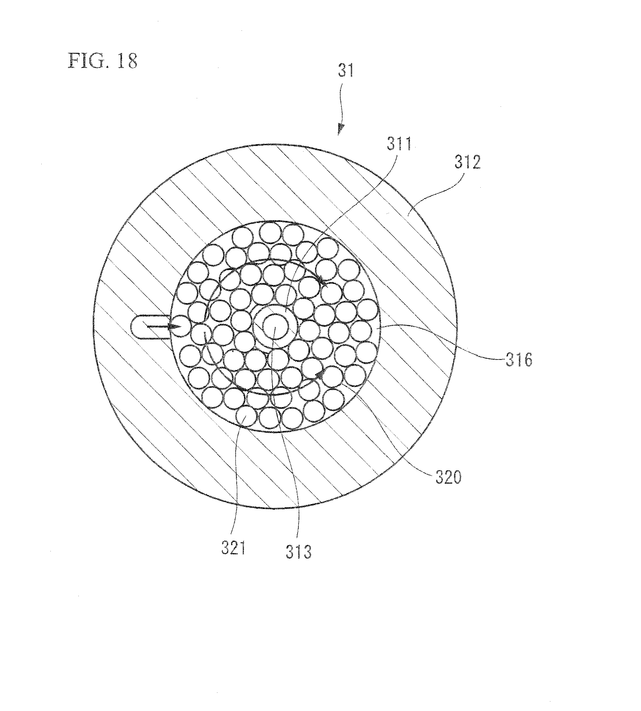

The liquid storage section 316 according to the third aspect of the present invention is a section that stores the membrane-forming resin solution flowing through the introduction section 315 in an annular cross-sectional shape. The introduction section 315 communicates with the liquid storage section 316 on the side of one outer wall.
The cross-sectional shape of the liquid storage section 316 is annular, as shown in FIG. 18. The liquid storage section 316 in this example includes a torso portion 316a with a constant diameter and an inclined portion 316b in which the bottom of the torso portion 316a is narrowed with a decreasing diameter. The liquid storage section 316 is not limited to the shape having the torso portion 316a and the inclined portion 316b, as long as it can store the membrane-forming resin solution flowing through the introduction section 315, and a shaping section used in a known hollow fiber membrane-spinning nozzle can be employed. The liquid storage section 316 preferably has an annular cross-sectional shape as in this example. However, the cross-sectional shape of the liquid storage section 118 is not limited to the annular cross-sectional shape.
The center of the liquid storage section 316 and the center of the support passage 313 match each other.

As shown in FIGS. 17 and 18, in the spinning nozzle 31, the liquid storage section 316 is provided with the branching and merging means, that is, the filler layer 320 filled with particles 321. Since the filler layer 320 is provided, formation of a starting point of cracking along the axial direction in the porous membrane layer formed of the membrane-forming resin solution is suppressed. The reason for the above-mentioned effect in the spinning nozzle 31 based on the filler layer 320 is not clear but is thought as follows.
The inventors of the present invention studied the problem of a starting point of cracking along the axial direction being formed in the porous membrane layer when the spinning speed is raised in spinning using the known spinning nozzle such as the spinning nozzle 1101 shown in FIGS. 6 to 8 in detail. It was proved that a starting point of cracking along the axial direction in the porous membrane layer is formed in a portion of the liquid storage section 1116 opposite to the introduction section 1115, that is, in a portion corresponding to the merging portion 1116a (FIG. 8) in which the membrane-forming resin solution branching into two parts merges. The merging portion 1116a has a tendency to reduce entanglement of the membrane-forming resins in comparison with portions other than the merging portions 1116a or serves as a stress-concentrated point with a load such as flat development, and it is thought that the merging portion serves as the reason for formation of a starting point of cracking along the axial direction in the porous membrane layer.
On the contrary, in the spinning nozzle 31, since the membrane-forming resin solution passing through the gaps between the particles 321 in the filler layer 320 repeats three-dimensional fine branching and merging in the liquid storage section 316, the entanglement of the membrane-forming resins in the membrane-forming resin solution is reduced as a whole, thus the membrane-forming resin solution is made uniform in the spinning nozzle according to the present invention, and the stress with an applied load such as flat development is distributed. Accordingly, it is thought that the formation of a starting point of cracking along the axial direction is suppressed.

The particles 321 have a spherical shape in this example. The shape of the particles 321 is not limited to the spherical shape, but may be a rectangular shape, a pillar shape, or a non-uniform three-dimensional structure.
The material of the particles 321 is not particularly limited, and examples thereof include metals such as stainless steel and alloy, inorganic materials such as glass and ceramic, Teflon (registered trademark), resins such as polyethylene not permeating the membrane-forming resin solution.
A specific example of the particles 321 is a steel ball.

The size of the particles 321 is not particularly limited, as long as the particles can be filled in the liquid storage section 316, do not flow in the shaping section 317, and can maintain the shape of the filler layer 320. Within the range in which the filler layer 320 in the liquid storage section 316 can be maintained, as the size of the particles 321 becomes smaller, the flow channels which is formed by the gaps between the particles 321 in the filler layer 320 and through which the membrane-forming resin solution flows more finely branch and merge three-dimensionally and there is a tendency to easily make uniform the membrane-forming resin solution in the spinning nozzle according to the present invention.

The number of particles 321 is not particularly limited as long as the liquid storage section 316 can be filled with the particles 321 to form the filler layer 320, and can be appropriately set depending on the size of the particles 321, the size of the liquid storage section 316, and the height of the filler layer 320 to be formed.
The liquid storage section 316 may be filled with the particles 321 having the same shape, material, and size, or may be filled with mixtures of the particles 321 which are different in one or more of the shape, the material, and the size. Filler layers which are different in the direction in which the membrane-forming resin solution flows may be stacked to provide a gradient in gap.

As shown in FIG. 17, the distance between the lower end of the particles 321 located at the lowermost position in the filler layer 320 and the upper end of the particles 321 located at the uppermost position in the filler layer 320 is defined as the height h of the filler layer 320. The upper limit of the height h of the filler layer 320 is equal to or less than the height of the liquid storage section 316, that is, the height of the particles 321 filled in the entire liquid storage section 316. When the height h of the filler layer 320 is set to be large, the flow channels through which the membrane-forming resin solution flows more finely branch and merge three-dimensionally and there is a tendency to easily make uniform the membrane-forming resin solution in the spinning nozzle according to the present invention. On the other hand, when the height h of the filler layer 320 is excessively large, the apparatus may be excessively enlarged or an increasing speed of the differential pressure may rise due to an increase in initial pressure when the membrane-forming resin solution flows through the filler layer 320, thereby shortening the lifetime of the apparatus. Accordingly, it may be difficult to stably spin a hollow fiber membrane for a long time.
In order to suppress formation of a starting point of cracking along the axial direction in the porous membrane layer to be formed in consideration of the above-mentioned problems, the height h of the filler layer 320 can be appropriately selected depending on desired conditions such as the viscosity or characteristics of the membrane-forming resin solution and size of the filled particles.

By providing a spatial section above the filler layer 320 of the liquid storage section 316 prior to the supply to the filler layer 320, it is preferable that the membrane-forming resin solution supplied to the liquid storage section 316 be supplied to the filler layer 320 after passing through the spatial section. Accordingly, the passing state of the membrane-forming resin solution through the filler layer 320 in the circumferential direction in the spinning nozzle according to the present invention is made uniform.

The shaping section 317 is a section that causes the membrane-forming resin solution stored in an annular cross-sectional shape in the liquid storage section 316 to flow in a cylindrical shape coaxial with the support passing through the supply passage 313. As in this example, it is preferable that the liquid storage section 317 have an annular cross-sectional shape. However, the cross-sectional shape of the liquid storage section 317 is not limited to the annular cross-sectional shape.
The width (the distance between the inner wall and the outer wall) of the shaping section 317 can be appropriately set depending on the thickness of the porous membrane layer to be formed.

In spinning a porous hollow fiber membrane using the spinning nozzle 31, the hollow support is supplied from the support supply hole 313a to the support passage 313, and the membrane-forming resin solution is supplied from the resin supply hole 314a to the resin flow channel 314 by a device quantitatively supplying a membrane-forming resin solution.
In the resin flow channel 314, the membrane-forming resin solution flowing through the introduction section 315 flows in the liquid storage chamber 316, branches into two parts and flows in an are-like shape, merges on the opposite side of the introduction section 315, passes through the filler layer 320 while repeating fine branching and merging in the gaps of the particles 321, and flows in the shaping section 317.
The membrane-forming resin solution shaped in a cylindrical shape by the shaping section 317 is ejected from the ejection hole 314b and is applied to the outside of the support simultaneously emitted from the support emitting hole 313b.
Thereafter, for example, in a vessel in which the membrane-forming resin solution is brought into contact with gas including moisture, the membrane-forming resin solution passes through a coagulating bath in which the membrane-forming resin solution is brought into contact with a coagulating liquid to coagulate the membrane-forming resin solution, and the coagulated membrane-forming resin solution is subjected to washing, drying, and the like, whereby a hollow fiber membrane is obtained.

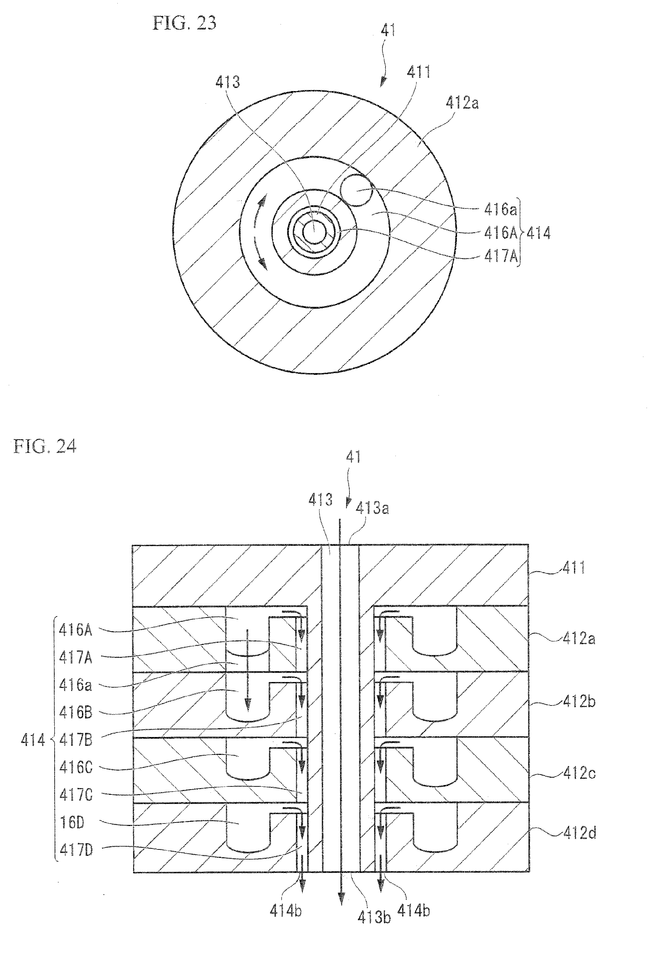

The liquid storage section 416 according to the fourth aspect of the present invention is vertically divided into four stages of the first liquid storage section 416A, the second liquid storage section 416B, the third liquid storage section 416C, and the fourth liquid storage section 416D. The first liquid storage section 416A is a section that stores the membrane-forming resin solution flowing through the introduction section 415 in an annular shape, the second liquid storage section 416B is a section that stores the membrane-forming resin solution flowing through a first resin supply section 416a in an annular shape, the third liquid storage section 416C is a section that stores the membrane-forming resin solution flowing through a second resin supply section 416b in an annular shape, and the fourth liquid storage section 416D is a section that stores the membrane-forming resin solution flowing through a third resin supply section 416c in an annular shape. As shown in FIGS. 23 and 24, the first liquid storage section 416A and the second liquid storage section 416B communicate with each other via the first resin supply section 416a. As shown in FIGS. 25 and 26, the second liquid storage section 416B and the third liquid storage section 416C communicate with each other via the second resin supply section 416b. As shown in FIGS. 27 and 28, the third liquid storage section 416C and the fourth liquid storage section 416D communicate with each other via the third resin supply section 416c.
As shown in FIGS. 23, 25, 27, and 29, it is preferable that the cross-sections of the first liquid storage section 416A, the second liquid storage section 416B, the third liquid storage section 416C, and the fourth liquid storage section 416D have an annular shape. The central axes of the first liquid storage section 416A to the fourth liquid storage section 416D and the central axis of the support passage 413 match each other. However, the cross-sectional shape of the first liquid storage section 416A, the second liquid storage section 416B, the third liquid storage section 416C, and the fourth liquid storage section 416D is not limited to the annular cross-sectional shape.

In this liquid storage section 416, the membrane-forming resin solution branches into two parts and flows in an arc-like shape in each of the first liquid storage section 416A, the second liquid storage section 416B, the third liquid storage section 416C, and the fourth liquid storage section 416D. Specifically, in the first liquid storage section 416A, the membrane-forming resin solution flowing through the introduction section 415 branches into two parts, flows in an arc-like shape, and merges, as shown in FIGS. 22 and 23. In the second liquid storage section 416B, the membrane-forming resin solution flowing through the first resin supply section 416a from the first liquid storage section 416A branches into two parts, flows in an arc-like shape, and merges, as shown in FIGS. 24 and 25. In the third liquid storage section 416C, similarly, the membrane-forming resin solution flowing through the second resin supply section 416b from the second liquid storage section 416B branches into two parts, flows in an arc-like shape, and merges, as shown in FIGS. 26 and 27. In the fourth liquid storage section 416D, similarly, the membrane-forming resin solution flowing through the third resin supply section 416c from the third liquid storage section 416C branches into two parts, flows in an are-like shape, and merges on the opposite side of the third resin supply section 416c, as shown in FIGS. 28 and 29.

As shown in FIG. 22, the upper parts of the first liquid storage section 416A, the second liquid storage section 416B, the third liquid storage section 416C, and the fourth liquid storage section 416D communicate with the first shaping section 417A, the second shaping section 417B, the third shaping section 417C, and the fourth shaping section 417D that shape the membrane-forming resin solution in a cylindrical shape, respectively, on the center sides thereof. That is, the membrane-forming resin solution shaped in an annular shape flows in the first shaping section 417A, the second shaping section 417B, the third shaping section 417C, and the fourth shaping section 417D from the first liquid storage section 416A, the second liquid storage section 416B, the third liquid storage section 416C, and the fourth liquid storage section 416D, respectively.

As described above, in the spinning nozzle 41, since the liquid storage section is divided into two or more stages so as to cause the membrane-forming resin solution to flow in an arc-like shape, formation of a starting point of cracking along the axial direction in the porous membrane layer formed of the membrane-forming resin solution is suppressed. The reason for the above-mentioned effect in the spinning nozzle 41 is not clear but is thought as follows.
The inventors of the present invention studied the problem of a starting point of cracking along the axial direction being formed in the porous membrane layer when the spinning speed is raised in spinning using the known spinning nozzle such as the spinning nozzle 1101 shown in FIGS. 6 to 8 in detail. It was proved that a starting point of cracking along the axial direction in the porous membrane layer is formed in a portion of the liquid storage section 1116 opposite to the introduction section 1115, that is, in a portion corresponding to the merging portion 1116a (fig 8) in which the membrane-forming resin solution branching into two parts merges. The merging portion 1116a has a tendency to reduce entanglement of the membrane-forming resins in comparison with portions other than the merging portions 1116a or serves as a stress-concentrated point with a load such as flat development, and it is thought that the merging portion serves as the reason for formation of a starting point of cracking along the axial direction in the porous membrane layer.
On the contrary, in the liquid storage section 416 of the spinning nozzle 41, the branching and merging of the membrane-forming resin solution is performed two or more times in the first liquid storage section 416A, the second liquid storage section 416B, the third liquid storage section 416C, and the fourth liquid storage section 416D. Accordingly, the entanglement of the membrane-forming resins in the membrane-forming resin solution is reduced as a whole and thus the membrane-forming resin solution is made uniform in the spinning nozzle according to the present invention. Since the merging portion of the membrane-forming resin solution in each liquid storage section is different in position, continuous formation of the merging portions in the thickness direction of the hollow fiber membrane is avoided. As a result, it is thought that the formation of a starting point of cracking along the axial direction is suppressed.

In the hollow fiber membrane-spinning nozzle according to the fourth aspect of the present invention, similarly to the spinning nozzle 41 in the above-mentioned example, it is preferable that the liquid storage section is divided into three or more stages, the resin supply section allowing the n-th-stage (where n is a natural number) liquid storage section and the (n+1)-th-stage liquid storage section to communicate with each other and the resin supply section allowing the (n+1)-th-stage liquid storage section and the (n+2)-th-stage liquid storage section to communicate with each other be located at positions different in the circumferential direction of the liquid storage section. This will be specifically described below with the spinning nozzle 41 as an example. As shown in FIGS. 23 and 25, the first resin supply section 416a allowing the first-stage liquid storage section 416A and the second-stage liquid storage section 416B to communicate with each other and the second resin supply section 416b allowing the second-stage liquid storage section 416B and the third-stage liquid storage section 416C to communicate with each other are located at positions different in the circumferential direction of the liquid storage section 416. Similarly, as shown in FIGS. 25 and 27, the second resin supply section 416b allowing the second-stage liquid storage section 416B and the third-stage liquid storage section 416C to communicate with each other and the third resin supply section 416c allowing the third-stage liquid storage section 416C and the fourth-stage liquid storage section 416D to communicate with each other are located at positions different in the circumferential direction of the liquid storage section 416. Accordingly, since gathering of the merging portions of the membrane-forming resin solution in the liquid storage sections at the same position in the circumferential direction of the liquid storage section can be avoided, it is possible to more easily obtain a hollow fiber membrane in which cracking along the axial direction is suppressed.

In the hollow fiber membrane-spinning nozzle according to the fourth aspect of the present invention, similarly to the spinning nozzle 41, it is preferable that the resin supply sections be arranged at a constant angle interval in the circumferential direction of the liquid storage section about the central axis of the shaping section sequentially from the top stage. In the spinning nozzle 41, the first resin supply section 416a, the second resin supply section 416b, and the third resin supply section 416c are arranged at an angle interval of 225° in the counterclockwise direction along the circumferential direction of the liquid storage section 416. Accordingly, it is possible to more easily obtain a hollow fiber membrane in which cracking along the axial direction is suppressed.

In the first liquid storage section 416A, a slit section 416d may be disposed in the vicinity of the first shaping section 417A, as shown in FIG. 22. By disposing the slit section 416d and applying flow resistance, it is possible to improve ejection uniformity of the membrane-forming resin solution in the circumferential direction.
In the second liquid storage section 416B, the third liquid storage section 416C, and the fourth liquid storage section 416D, similarly, slit sections 416e, 416f, and 416g may be disposed in the vicinity of the second shaping section 417B, the third shaping section 417C, and the fourth shaping section 417D, respectively.

The first resin supply section 416a is a section that supplies the membrane-forming resin solution flowing in the first liquid storage section 416A to the second liquid storage section 416B. The second resin supply section 416b is a section that supplies the membrane-forming resin solution flowing in the second liquid storage section 416B to the third liquid storage section 416C and the third resin supply section 416c is a section that supplies the membrane-forming resin solution flowing in the third liquid storage section 416C to the fourth liquid storage section 416D.
It is preferable that the cross-section of the first resin supply section 416a have a circular shape as in this example. However, the cross-sectional shape of the first resin supply section 416a is not limited to the circular shape. The diameter of the first resin supply section 416a is not particularly limited.
The cross-sectional shapes and diameters of the second resin supply section 416b and the third resin supply section 416c are the same as the first resin supply section 416a and preferable requirements thereof are the same.

The first shaping section 417A is a section that shapes the membrane-forming resin solution flowing from the first liquid storage section 416A in a cylindrical shape coaxial with the support passing through the support passage 413.
The second shaping section 417B is a section that stacks the membrane-forming resin solution flowing from the second liquid storage section 416B on the outside of the membrane-forming resin solution flowing through the first shaping section 417A and shapes the membrane-forming resin solution in a cylindrical shape coaxial with the support passing through the support passage 413.
The third shaping section 417C is a section that stacks the membrane-forming resin solution flowing from the third liquid storage section 416C on the outside of the membrane-forming resin solution flowing through the second shaping section 417B and shapes the membrane-forming resin solution in a cylindrical shape coaxial with the support passing through the support passage 413.
The fourth shaping section 417D is a section that stacks the membrane-forming resin solution flowing from the fourth liquid storage section 416D on the outside of the membrane-forming resin solution flowing through the third shaping section 417C and shapes the membrane-forming resin solution in a cylindrical shape coaxial with the support passing through the support passage 413.

The width (the distance between the inner wall and the outer wall) of the first shaping section 417A, the second shaping section 417B, the third shaping section 417C, and the fourth shaping section 417D can be appropriately set depending on the thickness of the porous membrane layer to be formed.
The length of the first shaping section 417A, the second shaping section 417B, the third shaping section 417C, and the fourth shaping section 417D is not particularly limited.

In spinning a porous hollow fiber membrane using the spinning nozzle 41, the hollow support is supplied from the support supply hole 413a to the support passage 413, and the membrane-forming resin solution is supplied from the resin supply hole 414a to the resin flow channel 414 by a device (for example, a positive-displacement pump such as a gear pump) quantitatively supplying a membrane-forming resin solution.
In the resin flow channel 414, as shown in FIGS. 22 and 23, the membrane-forming resin solution flowing through the introduction section 415 flows in the first liquid storage section 416A, branches into two parts, flows in an arc-like shape, merges in the first liquid storage section 416A, passes through the slit section 416d, and flows in the first shaping section 417A.
As show in FIGS. 23 and 24, the membrane-forming resin solution merging in the first liquid storage section 416A flows in the second liquid storage section 416B via the first resin supply section 416a.
In the second liquid storage section 416B, as shown in FIGS. 22 and 25, the membrane-forming resin solution branches into two parts, flows in an arc-like shape, merges, flows in the second shaping section 417B through the slit section 416e, and is stacked to cover the outer circumference of the membrane-forming resin solution flowing through the first shaping section 417A. As shown in FIGS. 25 and 26, the membrane-forming resin solution merging in the second liquid storage section 416B flows in the third liquid storage section 416C via the second resin supply section 416b.
In the third liquid storage section 416C, as shown in FIGS. 22 and 27, the membrane-forming resin solution branches into two parts, flows in an arc-like shape, merges, flows in the third shaping section 417C through the slit section 416f, and is stacked to cover the outer circumference of the membrane-forming resin solution stacked by and flowing through the second shaping section 417B. As shown in FIGS. 27 and 28, the membrane-forming resin solution merging in the third liquid storage section 416C flows in the fourth liquid storage section 416D via the third resin supply section 416c.
In the fourth liquid storage section 416D, as shown in FIGS. 22 and 29, the membrane-forming resin solution branches into two parts, flows in an arc-like shape, merges, flows in the fourth shaping section 417D through the slit section 416g, and is stacked to cover the outer circumference of the membrane-forming resin solution stacked by and flowing through the third shaping section 417C.

In this way, in the second shaping section 417B, the membrane-forming resin solutions flowing from the first shaping section 417A and the second liquid storage section 416B merge and are stacked. In the third shaping section 417C, the membrane-forming resin solutions flowing from the second shaping section 417B and the third liquid storage section 416C merge and are stacked. In the fourth shaping section 417D, the membrane-forming resin solutions flowing from the third shaping section 417C and the fourth liquid storage section 416D merge and are stacked. In this way, the membrane-forming resin solution stacked and shaped in a cylindrical shape by the fourth shaping section 417D is ejected from the ejection hole 414b and is applied to the outside of the support simultaneously emitted from the support emitting hole 413b.
Thereafter, for example, in a vessel in which the membrane-forming resin solution is brought into contact with gas including moisture, the membrane-forming resin solution passes through a coagulating bath in which the membrane-forming resin solution is brought into contact with a coagulating liquid to coagulate the membrane-forming resin solution, and the coagulated membrane-forming resin solution is subjected to washing, drying, and the like, whereby a hollow fiber membrane is obtained.

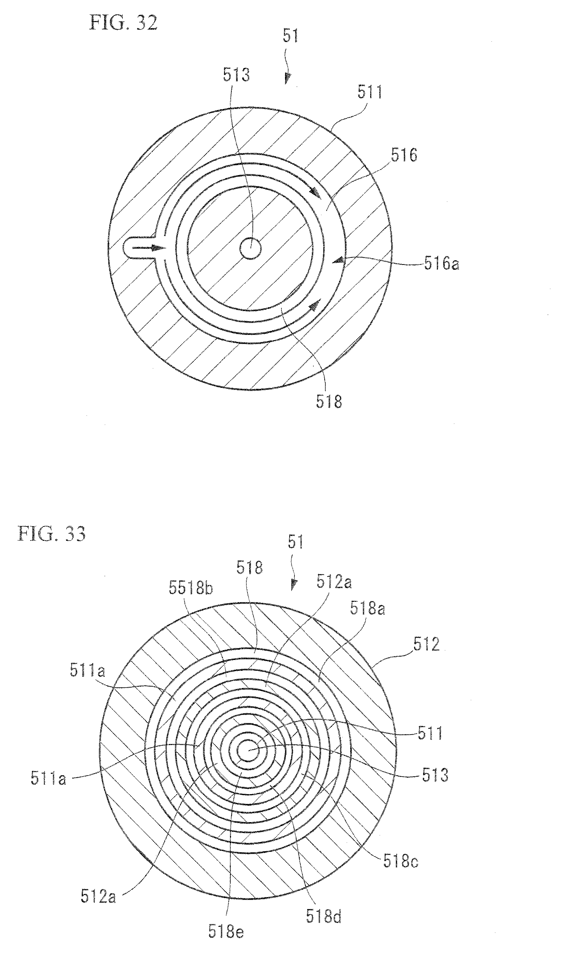

The liquid storage section 516 is a section that shapes the membrane-forming resin solution flowing through the introduction section 515 in an annular cross-sectional shape. The introduction section 515 communicates with the liquid storage section 516 on the side of one outer wall.
The cross-section of the liquid storage section 516 has an annular shape as shown in FIG. 32. The center of the liquid storage section 516 matches with the center of the support passage 513. In the liquid storage section 516, the membrane-forming resin solution branches into two parts from the side of the introduction section 515, flows in an are-like shape, and merges in the merging portion 516a on the opposite side of the introduction section 515. It is preferable that the liquid storage section 516 have an annular cross-sectional shape as in this example. However, the cross-sectional shape of the liquid storage section 516 is not limited to the annular cross-sectional shape.
As shown in FIG. 31, it is preferable that a slit section 516b be formed in the vicinity of the meandering section 518 in the liquid storage section 516. By disposing the slit section 516b and applying flow resistance, it is possible to improve ejection uniformity of the membrane-forming resin solution in the circumferential direction.

As shown in FIGS. 31, 33, and 34, the spinning nozzle 51 includes the meandering section 518 between the liquid storage section 516 and the shaping section 517. The meandering section 518 is formed by two first weirs 511a extending from the first nozzle 511 to the second nozzle 512 and having an annular cross-sectional shape and two second weirs 512a extending from the second nozzle 512 to the first nozzle 511 and having an annular cross-sectional shape. The first weirs 511a and the second weirs 512a are alternately arranged.
In the meandering section 518, five annular flow channel portions 518a to 518e having an annular cross-sectional shape and having different diameters are formed in concentric shapes by the first weirs 511a and the second weirs 512a, the annular flow channel portion 518a and the annular flow channel portion 518b from the outer wall side communicates with each other on the bottom side, the annular flow channel portion 518b and the annular flow channel portion 518c communicate with each other on the upper side, the annular flow channel portion 518c and the annular flow channel portion 518d communicate with each other on the lower side, and the annular flow channel portion 518d and the annular flow channel portion 518e communicate with each other on the upper side. The inner wall side of the liquid storage section 516 and the annular flow channel portion 518a of the meandering section 518 communicate with each other, and the annular flow channel portion 518e of the meandering section 518 and the shaping section 517 communicate with each other.
In this way, in the meandering section 518, the membrane-forming resin solution flowing from the liquid storage section 516 flows to the center while vertically meandering in a state where the cross-sectional shape thereof is maintained in an annular shape.

In the spinning nozzle 51, since the meandering section 518 is formed, formation of a starting point of cracking along the axial direction in the porous membrane layer formed of the membrane-forming resin solution is suppressed. The reason for the above-mentioned effect in the spinning nozzle 51 based on the meandering section 518 is not clear but is thought as follows.

The inventors of the present invention studied the problem of a starting point of cracking along the axial direction being formed in the porous membrane layer when the spinning speed is raised in spinning using the known spinning nozzle such as the spinning nozzle 1101 shown in FIGS. 6 to 8 in detail. It was proved that a starting point of cracking along the axial direction in the porous membrane layer is formed in a portion of the liquid storage section 1116 opposite to the introduction section 1115, that is, in a portion corresponding to the merging portion 1116a (FIG. 8) in which the membrane-forming resin solution branching into two parts merges. The merging portion 1116a has a tendency to reduce entanglement of the membrane-forming resins in comparison with portions other than the merging portions 11116a or serves as a stress-concentrated point with a load such as flat development, and it is thought that the merging portion serves as the reason for formation of a starting point of cracking along the axial direction in the porous membrane layer.

On the contrary, in the spinning nozzle 51, since the meandering section 518 is disposed, the path from the liquid storage section 516 to the ejection hole 514b is longer than the path from the shaping section 1116 to the ejection hole 1114b in the known spinning nozzle 1101 1 and the time in which the membrane-forming resin solution stays in the nozzle is elongated. Accordingly, even when the entanglement of the membrane-forming resins in the membrane-forming resin solution in the merging portion 516a (FIG. 32) of the liquid storage section 516 is reduced in comparison with the entanglement in portions other than the merging portion 516a, the entanglement is returned to the state before branching while the membrane-forming resin solution flows in the meandering section 518. As a result, it is thought that the formation of a starting point of cracking along the axial direction in the porous membrane layer formed of the membrane-forming resin solution made uniform as a whole in the spinning nozzle according to the present invention is suppressed.

It is preferable that the width (the length in the transverse direction) of the flow channel from the annular flow channel portion 518a to the annular flow channel portion 518e in the meandering section 518 or the height of the weirs 511a and the weirs 512a be set so that average flow rate of the membrane-forming resin solution flowing through the flow channel portions is constant.

The shaping section 517 is a section that shapes the membrane-forming resin solution flowing through the meandering section 518 in a cylindrical shape coaxial with the support passing through the support passage 513.
The width (the distance between the inner wall and the outer wall) of the shaping section 517 can be appropriately set depending on the thickness of the porous membrane layer to be formed or desired shaping conditions.

In spinning a porous hollow fiber membrane using the spinning nozzle 51, the hollow support is supplied from the support supply hole 513a to the support passage 513, and the membrane-forming resin solution is supplied from the resin supply hole 514a to the resin flow channel 514 by a device (for example, a positive-displacement pump such as a gear pump) quantitatively supplying a membrane-forming resin solution.
In the resin flow channel 514, the membrane-forming resin solution flowing through the introduction section 515 flows in the liquid storage section 516, branches into two parts and flows in an are-like shape, merges on the opposite side of the introduction section 515, and flows in the meandering section 518. In the meandering section 518, the membrane-forming resin solution flows to the center while vertically meandering in a state where the cross-sectional shape thereof is maintained in the annular shape, and flows in the shaping section 517. The membrane-forming resin solution shaped in a cylindrical shape by the shaping section 517 is ejected from the ejection hole 514b and is applied to the outside of the support simultaneously emitted from the support emitting hole 513b.
Thereafter, for example, in a vessel in which the membrane-forming resin solution is brought into contact with gas including moisture, the membrane-forming resin solution passes through a coagulating bath in which the membrane-forming resin solution is brought into contact with a coagulating liquid to coagulate the membrane-forming resin solution, and the coagulated membrane-forming resin solution is subjected to washing, drying, and the like, whereby a hollow fiber membrane is obtained.

The liquid storage section 616 is a section that stores the membrane-forming resin solution flowing through the introduction section 615 in an annular cross-sectional shape. It is preferable that the liquid storage section 616 have an annular cross-sectional shape as in this example. However, the cross-sectional shape of the liquid storage section 616 is not limited to the annular cross-sectional shape.
As shown in FIGS. 37 to 39, weirs 618 and 619 extending from the bottom wall surface 616a of the liquid storage section 616 to the top wall surface 616b are disposed in the liquid storage section 616 in the spinning nozzle 61. The weirs 618 and the weirs 619 are continuously formed in a spiral shape from the outer wall to the inner wall of the liquid storage section 616, and are connected to each other in the vicinity of the inner wall of the liquid storage section 616. Accordingly, in the liquid storage section 616, spiral flow channels 616c and 616d are formed in which the membrane-forming resin solution flows while revolving in a spiral shape. The spiral flow channel 616c communicates with the introduction section 615 and is closed in the vicinity of the inner wall of the liquid storage section 616. The spiral flow channel 616d is closed on the outer wall side of the liquid storage section 616 and communicates with the shaping section 617 on the inner wall side. The flow of the membrane-forming resin solution in the liquid storage section 616 is regulated by the weirs 618 and 619 so that the membrane-forming resin solution revolves in the spiral shape.
As shown in FIG. 37, gaps are present between the tops of the weirs 618 and the weirs 619 and the upper wall surface 616b of the liquid storage section 616. Accordingly, the membrane-forming resin solution supplied to the liquid storage section 616 can flow over the weirs 618 and the weirs 619 while revolving in the spiral shape toward the center.
The number of revolutions of the weirs in the spiral shape is preferably equal to or more than two times and equal to or less than ten times, more preferably equal to or more than three times and equal to or less than seven times, and still more preferably equal to or more than four times and equal to or less than five times. When the number of revolutions is equal to or more than two times, the membrane-forming resin solution is made uniform in the spinning nozzle according to the present invention, which is desirable.

As described above, in the spinning nozzle 61, since the weirs 618 and 619 regulating the flow of the membrane-forming resin solution in the liquid storage section 616 so as to revolve in a spiral shape are disposed in the liquid storage section 616, formation of a starting point of cracking along the axial direction in the porous membrane layer formed of the membrane-forming resin solution can be suppressed. The reason for the above-mentioned effect in the liquid storage section 616 of the spinning nozzle 61 is not clear but is thought as follows.
The inventors of the present invention studied the problem of a starting point of cracking along the axial direction being formed in the porous membrane layer when the spinning speed is raised in spinning using the known spinning nozzle such as the spinning nozzle 1101 shown in FIGS. 6 to 8 in detail. It was proved that a starting point of cracking along the axial direction in the porous membrane layer is formed in a portion of the liquid storage section 1116 opposite to the introduction section 1115, that is, in a portion corresponding to the merging portion 1116a (FIG. 8) in which the membrane-forming resin solution branching into two parts merges. The merging portion 1116a has a tendency to reduce entanglement of the membrane-forming resins in comparison with portions other than the merging portions 1116a or serves as a stress-concentrated point with a load such as flat development, and it is thought that the merging portion serves as the reason for formation of a starting point of cracking along the axial direction in the porous membrane layer.
On the contrary, in the spinning nozzle 61, since the membrane-forming resin solution in the liquid storage section 616 flows over the weirs 618 and 619 while revolving in a spiral shape and the fine branching and merging is repeated, it is thought that formation of a merging boundary of the membrane-forming resin solution between the inner wall surface and the outer wall surface of the liquid storage section 616 along a straight line in the horizontal direction passing through the central axis of the liquid storage section 616 is suppressed. Accordingly, the entanglement and the merging boundary of the membrane-forming resins in the membrane-forming resin solution stored in the liquid storage section 616 are reduced as a whole, thus the membrane-forming resin solution is made uniform in the spinning nozzle according to the present invention, and the stress with an applied load such as flat development is distributed. As a result, it is thought that the formation of a starting point of cracking along the axial direction in the formed porous membrane layer is suppressed.

The widths of the spiral flow channels 616c and 616d and the length of the gap between the weirs 618 and 619 and the top wall surface 616b of the liquid storage section 616 are not particularly limited, as long as the above-mentioned flow can be achieved.

As shown in FIG. 37, a slit section 616e may be disposed in the vicinity of the shaping section 617 in the liquid storage section 616. By disposing the slit section 616e and applying flow resistance, it is possible to improve ejection uniformity of the membrane-forming resin solution in the circumferential direction.

The shaping section 617 is a section that shapes the membrane-forming resin solution stored in an annular cross-sectional shape in the liquid storage section 616 in a cylindrical shape coaxial with the support.
The width (the distance between the inner wall and the outer wall) of the shaping section 617 can be appropriately set depending on the thickness of the porous membrane layer to be formed.

In spinning a hollow fiber membrane using the spinning nozzle 61, the hollow support is supplied from the support supply hole 613a to the support passage 613, and the membrane-forming resin solution is supplied from the resin supply hole 614a to the resin flow channel 614 by a device (for example, a positive-displacement pump such as a gear pump) quantitatively supplying a membrane-forming resin solution.
In the resin flow channel 614, the membrane-forming resin solution flowing through the introduction section 615 is supplied to the liquid storage section 616, flows to go over the weirs 618 and 619 while revolving in a spiral shape in the liquid storage section 616, is stored in an annular cross-sectional shape while repeating the branching and merging, and flows in the shaping section 617. The membrane-forming resin solution shaped in a cylindrical shape by the shaping section 617 is ejected from the ejection hole 614b and is applied to the outside of the support simultaneously emitted from the support emitting hole 613b.
Thereafter, for example, in a vessel in which the membrane-forming resin solution is brought into contact with gas including moisture, the membrane-forming resin solution passes through a coagulating bath in which the membrane-forming resin solution is brought into contact with a coagulating liquid to coagulate the membrane-forming resin solution, and the coagulated membrane-forming resin solution is subjected to washing, drying, and the like, whereby a hollow fiber membrane is obtained.

### [Second Embodiment]

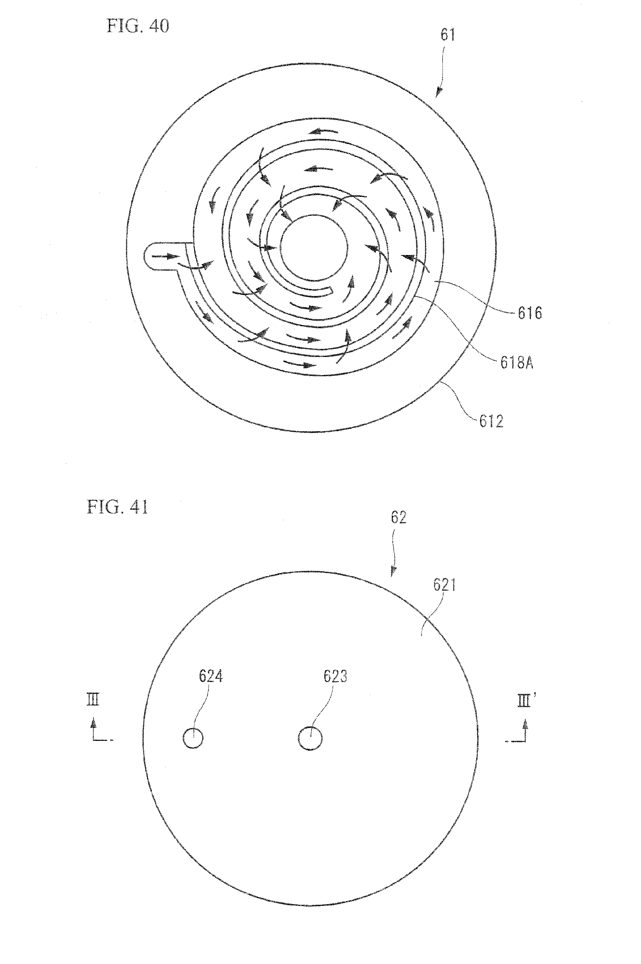

A hollow fiber membrane-spinning nozzle according to another embodiment of the sixth aspect of the present invention will be described below. FIGS. 41 to 43 are diagrams schematically illustrating a hollow fiber membrane-spinning nozzle 62 (hereinafter, referred to as "spinning nozzle 62") which is another example of the hollow fiber membrane-spinning nozzle according to the sixth aspect of the present invention.
The spinning nozzle 62 is a spinning nozzle for manufacturing a hollow fiber membrane in which a single porous membrane layer is stacked on a hollow support.

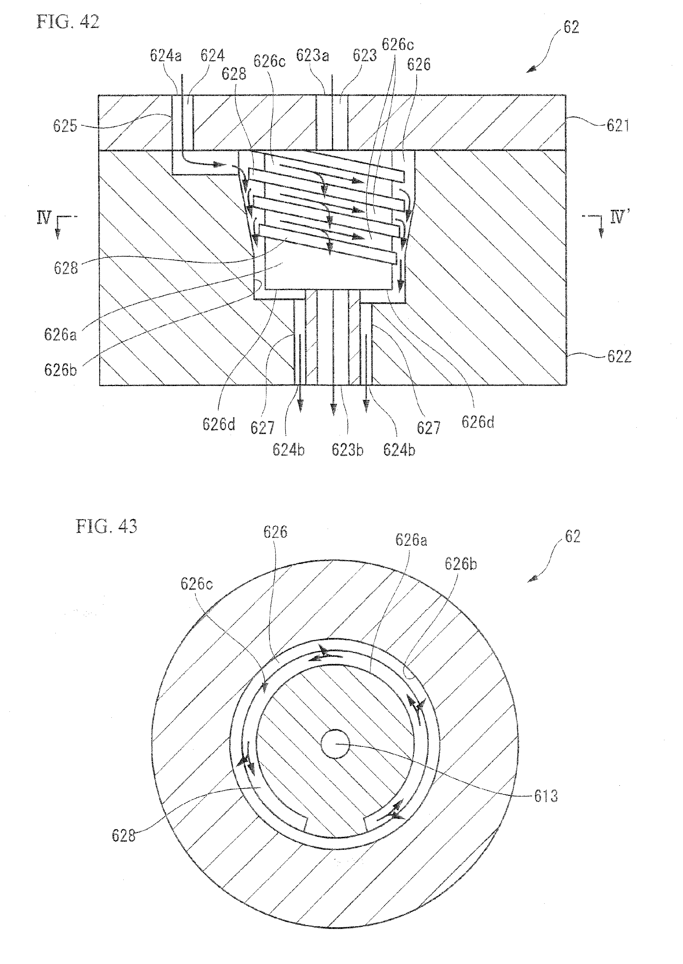

As shown in FIGS. 41 to 43, the spinning nozzle 62 according to this embodiment includes a first nozzle 621 and a second nozzle 622.
As shown in FIG. 42, the spinning nozzle 62 includes a support passage 623 through which the hollow support passes and a resin flow channel 624 through which a membrane-forming resin solution forming a porous membrane layer flows. As shown in FIGS. 41 to 43, the resin flow channel 624 includes an introduction section 625 through which the membrane-forming resin solution is introduced, a liquid storage section 626 that stores the membrane-forming resin solution in an annular cross-sectional shape, and a shaping section 627 that shapes the membrane-forming resin solution, which is stored in an annular cross-sectional shape in the liquid storage section 626, in a cylindrical shape coaxial with the support passage 623.

In the spinning nozzle 62, the hollow support is supplied from a support supply hole 623a and is emitted from a support emitting hole 623b, and the membrane-forming resin solution is supplied from a resin supply hole 624a to the resin flow channel 624, is stored in the liquid storage section 626, is shaped in a coaxial cylindrical shape by the shaping section 627, and is then ejected to the circumference of the support from an ejection hole 624b in a cylindrical shape.

The material of the first nozzle 621 and the second nozzle 622 can employ a material normally used in a hollow fiber membrane-spinning nozzle and a stainless steel (SUS) material can be preferably used from the viewpoint of heat resistance, corrosion resistance, or strength.

The cross-section of the support passage 623 has a circular shape.
The diameter of the support passage 623 can be appropriately set depending on the diameter of the hollow support to be used.
It is preferable that the cross-section of the introduction section 625 of the resin flow channel 624 have a circular shape as in this example. However, the cross-sectional shape of the introduction section 625 is not limited to the circular shape.
The diameter of the introduction section 625 is not particularly limited.

The liquid storage section 626 is a section that stores the membrane-forming resin solution flowing through the introduction section 625 in an annular cross-sectional shape.
In the liquid storage section 626 of the spinning nozzle 62, as shown in FIGS. 41 to 43, weirs 628 extending from the inner wall surface 626a of the liquid storage section 626 to the outer wall surface 626b are continuously disposed in a spiral shape. Accordingly, a spiral flow channel 626c in which the membrane-forming resin solution flows while revolving in a spiral shape is formed in the liquid storage section 626. The introduction section 625 communicates with the liquid storage section 626 on the side of the outer wall surface 626b, and the flow of the membrane-forming resin solution in the liquid storage section 626 is regulated by the weirs 628 so as to revolve in the spiral shape.
As shown in FIG. 43, a gap is present between the tip of the weir 628 on the side of the outer wall surface 626b and the outer wall surface 626b. Accordingly, the membrane-forming resin solution supplied to the liquid storage section 626 falls down from the side of the outer wall surface 626b of the weir 628 while revolving in the spiral shape along the spiral flow channel 626c.

As described above, in the spinning nozzle 62, since the weir 628 regulating the flow of the membrane-forming resin solution in the liquid storage section 626 so as to revolve in a spiral shape is disposed in the liquid storage section 626, formation of a starting point of cracking along the axial direction in the porous membrane layer formed of the membrane-forming resin solution can be suppressed. The reason for the above-mentioned effect in the liquid storage section 626 of the spinning nozzle 62 is not clear but is thought to be the same as in the spinning nozzle 61.
That is, in the spinning nozzle 62, since the membrane-forming resin solution in the liquid storage section 626 flows to fall down from the side of the outer wall surface 626b of the weir 628 while revolving in a spiral shape and the fine branching and merging is repeated, it is thought that formation of a merging boundary of the membrane-forming resin solution between the inner wall surface 626a and the outer wall surface 626b of the liquid storage section 626 along a straight line in the horizontal direction passing through the central axis of the liquid storage section 626 is suppressed. Accordingly, the entanglement and the merging boundary of the membrane-forming resins in the membrane-forming resin solution stored in the liquid storage section 626 are reduced as a whole, thus the membrane-forming resin solution is made uniform in the spinning nozzle according to the present invention, and the stress with an applied load such as flat development is distributed. As a result, it is thought that the formation of a starting point of cracking along the axial direction in the formed porous membrane layer is suppressed.

The height (the distance between the portions located at the top and bottom ends in the weir 628 of a spiral shape) of the spiral flow channel 626c is not particularly limited.
The length (the distance from the inner wall surface 626a to the tip on the side of the outer wall surface 626b) of the weir 628 is not particularly limited, as long as the membrane-forming resin solution can be made to revolve in a spiral shape in the liquid storage section 626.
The length of the gap between the tip of the weir 628 and the outer wall surface 626b of the liquid storage section 626 is not particularly limited, as long as the membrane-forming resin solution flowing in the spiral flow channel 626c falls down form the side of the outer wall surface 626b.

As shown in FIG. 42, a slit section 626d may be disposed in the vicinity of the shaping section 627 in the liquid storage section 626. By disposing the slit section 626d and applying flow resistance, it is possible to improve ejection uniformity of the membrane-forming resin solution in the circumferential direction.

The shaping section 627 is a section that shapes the membrane-forming resin solution stored in an annular cross-sectional shape in the liquid storage section 626 in a cylindrical shape coaxial with the support.
The width (the distance between the inner wall and the outer wall) of the shaping section 627 can be appropriately set depending on the thickness of the porous membrane layer to be formed or desired shaping conditions.

In spinning a hollow fiber membrane using the spinning nozzle 62, the hollow support is supplied from the support supply hole 623a to the support passage 623, and the membrane-forming resin solution is supplied from the resin supply hole 624a to the resin flow channel 624 by a device (for example, a positive-displacement pump such as a gear pump) quantitatively supplying a membrane-forming resin solution.
In the resin flow channel 624, the membrane-forming resin solution flowing through the introduction section 625 is supplied to the liquid storage section 626, flows to fall down from the side of the outer wall surface 626b of the weir 628 while revolving in a spiral shape in the liquid storage section 626 by the use of the branching and merging means, is stored in an annular cross-sectional shape while repeating the branching and merging without forming the merging boundary of the membrane-forming resin solution along the straight line in the horizontal direction passing through the central axis of the liquid storage section 626 between the inner wall surface 626a and the outer wall surface 626b of the liquid storage section 626, and flows in the shaping section 627. The membrane-forming resin solution stored in the liquid storage section 626 is shaped in a cylindrical shape coaxial with the support through the use of the shaping section 627, is ejected from the ejection hole 624b, and is applied to the outside of the support simultaneously emitted from the support emitting hole 623b.
Thereafter, for example, in a vessel in which the membrane-forming resin solution is brought into contact with gas including moisture, the membrane-forming resin solution passes through a coagulating bath in which the membrane-forming resin solution is brought into contact with a coagulating liquid to coagulate the membrane-forming resin solution, and the coagulated membrane-forming resin solution is subjected to washing, drying, and the like, whereby a hollow fiber membrane is obtained.

By employing the above-mentioned spinning nozzle 11, 21, 31, 41, 51, 61, or 62, the membrane-forming resin solution can be uniformly shaped in the circumferential direction even when the spinning speed is raised, and formation of a starting point of cracking along the axis direction in the porous membrane layer can be suppressed. Accordingly, it is possible to suppress occurrence of cracking in the resultant hollow fiber membrane.

The hollow fiber membrane-spinning nozzle according to the first aspect of the present invention is not limited to the spinning nozzle 11.
For example, the spinning nozzle 11 has the configuration in which the cylindrical porous elements 131 and 132 are disposed in the first liquid storage section 118 or the second liquid storage section 121, but the shape of the porous elements is not limited to the cylindrical shape. For example, a disk-like porous element may be disposed in the slit section 118b of the first liquid storage section 118 and the slit section 121b of the second liquid storage section 121 and the membrane-forming resin solution may be made to pass through the disk-like porous element form the outer circumferential surface to the inner circumferential surface.

The spinning nozzle 11 has the combining section 120 formed by the first shaping section 119 and the second shaping section 123, but the hollow fiber membrane-spinning nozzle according to the present invention may have a configuration in which the membrane-forming resin solutions forming two or more porous membrane layers are separately ejected in a cylindrical shape, are combined and stored outside the nozzle, and are applied to the outside of the support, without having the combining section in the nozzle. Specifically, the hollow fiber membrane-spinning nozzle 12 (hereinafter, referred to as "spinning nozzle 12") shown in FIG. 4 may be employed. The same elements of the spinning nozzle 12 as the spinning nozzle 11 will be referenced by the same reference numerals and description thereof will not be repeated.
The spinning nozzle 12 includes a first nozzle 111, a second nozzle 112A, and a third nozzle 113A and includes a first shaping section 119A that shapes the first membrane-forming resin solution flowing from the first liquid storage section 118 in a cylindrical shape coaxial with the support passage 114 and a second shaping section 122A that shapes the second membrane-forming resin solution flowing from the second liquid storage section 121 in a cylindrical shape coaxial with the support passage 114. The first membrane-forming resin solution is supplied to the resin flow channel 115 from the resin supply hole 115a, is shaped by the first shaping section 119A, and is then ejected from the ejection hole 115b. The second membrane-forming resin solution is supplied to the resin flow channel 116 from the resin supply hole 116a, is shaped by the second shaping section 122A, and is then ejected from the ejection hole 116b. The first membrane-forming resin solution and the second membrane-forming resin solution ejected from the ejection holes 115b and 116b are stacked and combined outside the nozzle and are applied to the outside of the support emitted from the support emitting hole 114b.

The spinning nozzle 11 includes the porous elements 131 and 132 through which the membrane-forming resin solution passes from the outer circumferential surface to the inner circumferential surface thereof, but the porous element in the hollow fiber membrane-spinning nozzle according to the present invention is not particularly limited as long as the membrane-forming resin solution passes through the porous element from a side surface. For example, a hollow fiber membrane-spinning nozzle 13 (hereinafter, referred to as "spinning nozzle 13") shown in FIG. 5 may be employed. The spinning nozzle 13 is a nozzle spinning a hollow fiber membrane having a single porous membrane layer.
The spinning nozzle 13 includes a first nozzle 141 abnd a second nozzle 142, and includes a support passage 143 through which a hollow support passes and a resin flow channel 144 through which the membrane-forming resin solution forming the porous membrane layer passes. The resin flow channel 144 includes an introduction section 145 through which the membrane-forming resin solution is introduced, a liquid storage section 146 that stores the membrane-forming resin solution in an annular cross-sectional shape, and a shaping section 147 that shapes the membrane-forming resin solution flowing from the liquid storage section 146 in a cylindrical shape coaxial with the support passage 143. A porous element 151 through which the membrane-forming resin solution passes from the inner circumferential surface to the outer circumferential surface is disposed in the liquid storage section 146. The same examples as the porous element 131 can be used as the porous element 151.
The membrane-forming resin solution used in spinning using the spinning nozzle 13 is supplied to the resin flow channel 144 from the resin supply hole 144a, is supplied to the inside of the porous element 151 in the liquid storage section 146, branches into two parts, flows in an arc-like shape, and merges on the opposite side. The membrane-forming resin solution passes through the porous element 151 from the inner circumferential surface to the outer circumferential surface thereof, is shaped in a cylindrical shape by the shaping section 147, is ejected from the ejection hole 144b, and is applied to the outside of the support simultaneously emitted from the support emitting hole 143a. In this way, even when the porous element 151 through which the membrane-forming resin solution passes from the inner circumferential surface to the outer circumferential surface is disposed, it is possible to suppress occurrence of cracking in the obtained hollow fiber membrane.

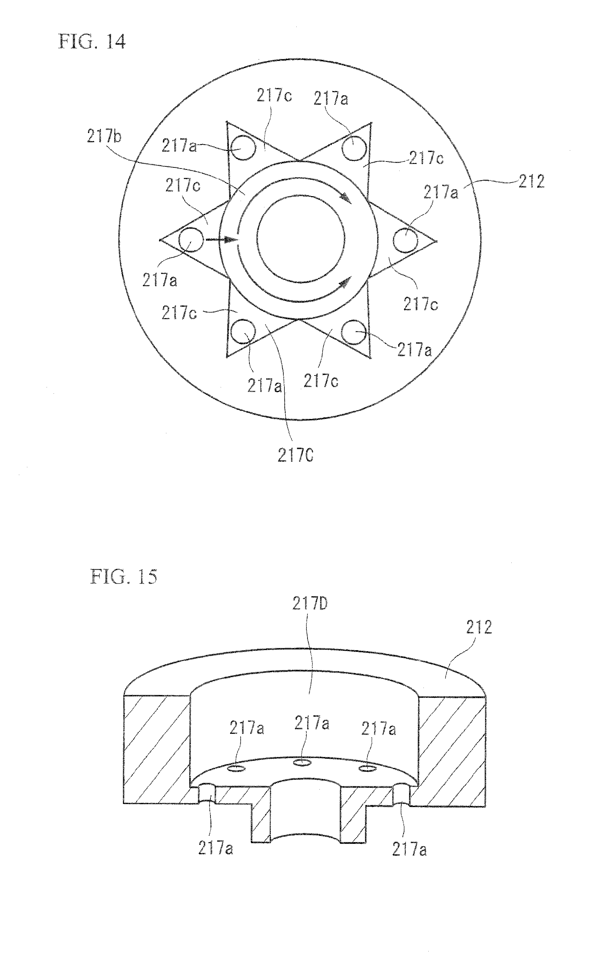

The hollow fiber membrane-spinning nozzle according to the second aspect of the present invention is not limited to the spinning nozzle 21. For example, as shown in FIG. 14, a hollow fiber membrane-spinning nozzle including a liquid storage section which is divided into a first shaping chamber 217C having an annular portion 217b having an annular cross-sectional shape and six outer circumferential potions 217c formed to be concave to the outside from the annular portion 217b and a second liquid storage chamber having an annular portion and six outer circumferential portions and in which six supply channels 217a are disposed in the outer circumferential portions 217c, respectively, instead of the liquid storage section 217 of the spinning nozzle 21 may be employed.
As shown in FIG. 15, a hollow fiber membrane-spinning nozzle including a shaping section which includes a first liquid storage chamber 217D having an annular cross-sectional shape and a second liquid storage chamber having the same shape without having the outer circumferential portions and in which two or more supply channels 217a are disposed along the outer wall thereof instead of the liquid storage section 217 of the spinning nozzle 21 may be employed.

The outer circumferential portions 217c of the first liquid storage chamber 217A are not arranged in a step shape but the bottom surfaces thereof may have a constant height as in the second liquid storage section 217B.
The liquid storage section 217 of the spinning nozzle 21 is divided into two-stage liquid storage chambers, but the liquid storage section of the hollow fiber membrane-spinning nozzle according to the present invention may be divided into shaping chambers of three or more stages. In this case, the liquid storage chambers vertically adjacent to each other in the liquid storage section communicate with each other via two or more supply channels disposed along the outer wall.

The hollow fiber membrane-spinning nozzle according to the present invention may be a nozzle spinning a porous hollow fiber membrane having multiple porous membrane layers. For example, a hollow fiber membrane-spinning nozzle may be employed which includes two resin flow channels having the same liquid storage section and the same shaping section as in the spinning nozzle 21 and in which the membrane-forming resin solutions shaped in a cylindrical shape in the resin flow channels are stacked and combined and are applied to the outside of the hollow support.
In this case, a combining section stacking and combining the membrane-forming resin solutions may be disposed in the spinning nozzle, or the membrane-forming resin solutions may be stacked and combined outside the nozzle and may be applied to the outside of the support.

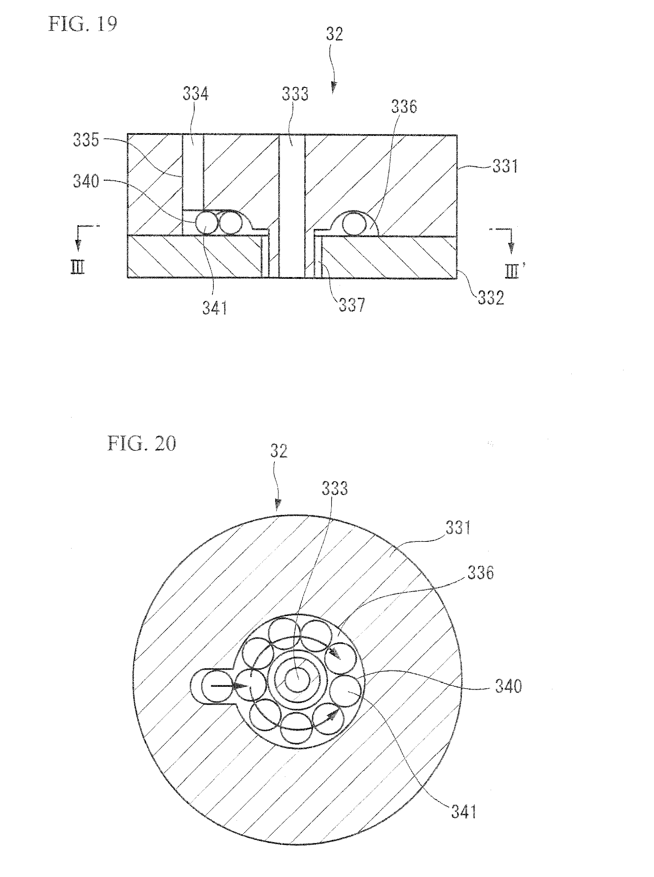

The hollow fiber membrane-spinning nozzle according to the third aspect of the present invention is not limited to the spinning nozzle 31, as long as a filler layer filled with particles is formed in the liquid storage section. For example, a hollow fiber membrane-spinning nozzle 32 (hereinafter, referred to as "spinning nozzle 32") shown in FIGS. 19 and 20 may be employed.
The spinning nozzle 32 includes a first nozzle 331 and a second nozzle 332, and includes a support passage 333 through which a hollow support passes and a resin flow channel 334 through which the membrane-forming resin solution forming a porous membrane layer flows. The resin flow channel 334 includes an introduction section 335 through which the membrane-forming resin solution is introduced, a liquid storage section 336 that stores the membrane-forming resin solution in an annular cross-sectional shape, and a shaping section 337 that shapes the membrane-forming resin solution in a cylindrical shape. The liquid storage section 336 has an annular cross-sectional shape in the horizontal direction and has a semi-circular cross-sectional shape in the vertical direction. A filler layer 340 filled with spherical particles 341 and having a diameter almost equal to the height of the liquid storage section 336 is formed in the liquid storage section 336.
The shaping section 337 shapes the membrane-forming resin solution flowing from the liquid storage section 336 in a cylindrical shape coaxial with the support passing through the support passage 333.

In the hollow fiber membrane-spinning nozzle according to the third aspect of the present invention, the filler layer may not be formed from the bottom of the shaping section. For example, a disk-like support such as a disk-like metal mesh or a filter through which the membrane-forming resin solution passes may be disposed at a predetermined height in the shaping section and the filler layer filled with the particles may be formed on the disk-like support in the shaping section.

The hollow fiber membrane-spinning nozzle according to the present invention may be a nozzle spinning a porous hollow fiber membrane having multiple porous membrane layers. For example, a hollow fiber membrane-spinning nozzle may be employed which includes two resin flow channels having the same liquid storage section and the same shaping section as in the spinning nozzle 31, in which filler layer filled with particles is formed in each liquid storage section, and in which the membrane-forming resin solutions shaped in a cylindrical shape in the shaping sections are stacked and combined in a concentric shape and are applied to the outside of the hollow support. In this case, a combining section stacking and combining the membrane-forming resin solutions shaped in the shaping sections may be disposed in the spinning nozzle, or the membrane-forming resin solutions may be stacked and combined outside the nozzle and may be applied to the outside of the support.

The hollow fiber membrane-spinning nozzle according to the fourth aspect of the present invention is not limited to the spinning nozzle 41. For example, the liquid storage section of the spinning nozzle 41 is divided into four stages, but the liquid storage section may be divided into two or three stages or five or more stages.
The resin supply sections are arranged at equal intervals in the circumferential direction of the liquid storage section 416 so as to be different by 225° in the counterclockwise direction, but the positions of the resin supply sections are not particularly limited. For example, the first resin supply section 416a, the second resin supply section 416b, and the third resin supply section 416c of the spinning nozzle 41 may be formed in the circumferential direction of the liquid storage section 416 so as to be different by 135° in the counterclockwise direction.

The hollow fiber membrane-spinning nozzle according to the present invention may be a nozzle spinning a porous hollow fiber membrane having porous membrane layers formed of different membrane-forming resin solutions stacked thereon. For example, a hollow fiber membrane-spinning nozzle may be employed which includes two resin flow channels having the above-mentioned liquid storage section and shaping section and in which different types of membrane-forming resin solutions shaped in a cylindrical shape in the resin flow channels are stacked and combined in a concentric shape and is applied to the outside of the hollow support. In this case, a combining section stacking and combining the membrane-forming resin solutions flowing through the resin flow channels may be disposed downstream from the lowermost-stage shaping section in the two resin flow channels, or the membrane-forming resin solutions may be stacked and combined outside the nozzle and may be applied to the outside of the support.

The hollow fiber membrane-spinning nozzle according to the fifth aspect of the present invention is not limited to the spinning nozzle 51. For example, the meandering section 518 of the spinning nozzle 51 includes five annular flow channel portions, but is not limited to five annular flow channel portions.
The number of annular flow channel portions of the meandering section 518 has only to be equal to or more than two.

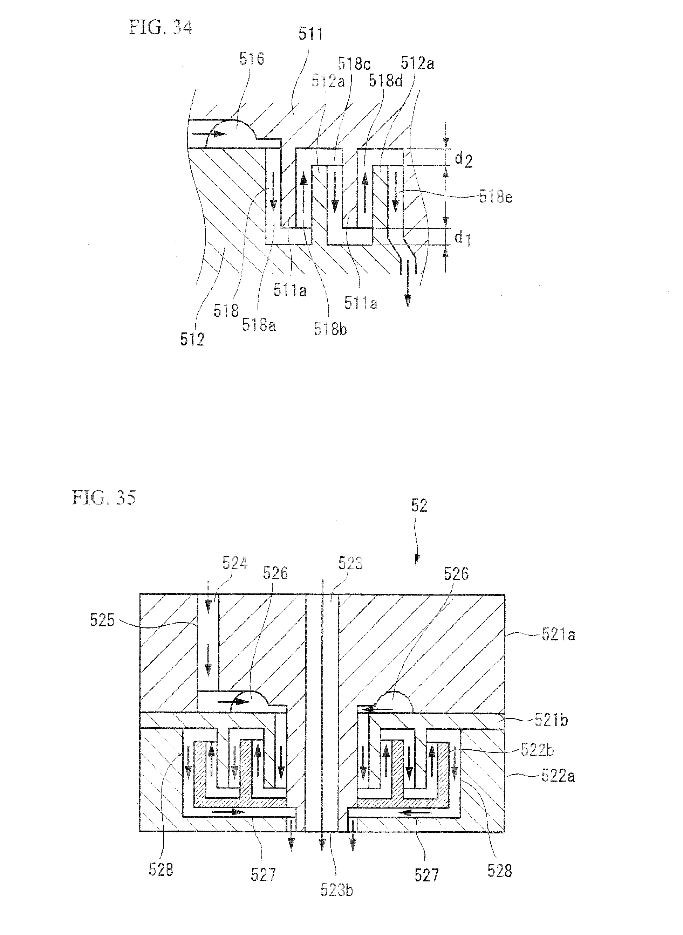

The meandering section 518 of the spinning nozzle 51 is a section that causes the membrane-forming resin solution flowing from the liquid storage section 516 to vertically meander toward the center, but the hollow fiber membrane-spinning nozzle according to the fifth aspect of the present invention is not limited to this configuration, as long as it includes a meandering section.
For example, a hollow fiber membrane-spinning nozzle 52 (hereinafter, referred to as "spinning nozzle 52") shown in FIG. 35 may be employed. The spinning nozzle 52 includes a first nozzle 521a, a second nozzle 521b, a third nozzle 522a, and a fourth nozzle 522b, and includes a support passage 523 through which a hollow support passes and a resin flow channel 524 through which the membrane-forming resin solution forming a porous membrane layer flows. The resin flow channel 524 includes an introduction section 525 through which the membrane-forming resin solution is introduced, a liquid storage section 526 that stores the membrane-forming resin solution in an annular cross-sectional shape, and a shaping section 527 that shapes the membrane-forming resin solution in a cylindrical shape. In the spinning nozzle 52, a meandering section 528 that causes the membrane-forming resin solution to vertically meander in a state where the membrane-forming resin solution is maintained in an annular cross-sectional shape is disposed between the liquid storage section 526 and the shaping section 527.
As shown in FIG. 35, the meandering section 528 of the spinning nozzle 52 is configured to cause the membrane-forming resin solution flowing from the liquid storage section 526 to vertically meander and flow from the center to the outside.

The hollow fiber membrane-spinning nozzle according to the present invention may be a nozzle spinning a porous fiber membrane having multiple porous membrane layers. For example, a hollow fiber membrane-spinning nozzle may be employed which includes two resin flow channels 715 and 722 having liquid storage sections 717 and 724, shaping sections 728 and 718, and meandering sections 719 and 726 as in the spinning nozzle 71 and in which membrane-forming resin solutions shaped by the resin flow channels 715 and 722 and the shaping sections 728 and 718 are stacked and combined in a concentric shape and are applied to the outside of a hollow support. In this case, a combining section 730 stacking and combining the membrane-forming resin solutions may be disposed in the spinning nozzle, or the membrane-forming resin solutions may be stacked and combined outside the nozzle and may be applied to the outside of the support.

The spinning nozzle 61 has the configuration in which two weirs 618 and 619 are arranged in a spiral shape in the liquid storage section 616, but only one weir may be arranged in a spiral shape. For example, as shown in FIG. 40, a configuration may be employed in which a weir 618A extending from the bottom wall surface to the top wall surface is disposed in a spiral shape in the liquid storage section 616. By employing this configuration, since the membrane-forming resin solution flows to go over the weir 618A while revolving in a spiral shape and the fine branching and merging is repeated, it is thought that formation of the merging boundary of the membrane-forming resin solution along a straight line in the horizontal direction passing through the central axis of the liquid storage section 616 between the inner wall surface and the outer wall surface of the liquid storage section 616 is suppressed in the liquid storage section 616. Accordingly, it is possible to suppress formation of a starting point of cracking along the axial direction in the porous membrane layer and to suppress occurrence of cracking in the obtained hollow fiber membrane.

The hollow fiber membrane-spinning nozzle according to the sixth aspect of the present invention is not limited to the spinning nozzle 61 or 62. For example, the hollow fiber membrane-spinning nozzle according to the present invention may be a nozzle spinning a porous hollow fiber membrane having multiple porous membrane layers. Specifically, a hollow fiber membrane-spinning nozzle may be employed which includes two resin flow channels having the same liquid storage section and the same shaping section as in the spinning nozzle 61 or 62 and in which a weir regulating the flow of the membrane-forming resin solution so as to revolve is disposed in each liquid storage section and the membrane-forming resin solutions stored in the liquid storage sections are stacked and combined in coaxial cylindrical shapes and are applied to the outside of the hollow support. In this case, a combining section stacking and combining the membrane-forming resin solutions stored in the liquid storage sections may be disposed in the spinning nozzle, or the membrane-forming resin solutions may be stacked and combined outside the nozzle and may be applied to the outside of the support.

The spinning nozzle according to the present invention may be a spinning nozzle having a support passage through which a support passes at the center thereof or may be a spinning nozzle that spins a porous hollow fiber membrane not having a hollow support.
By causing a support or a core liquid to pass through the support passage, a hollow fiber membrane is obtained. It is preferable that a support pass through the support passage.
When the spinning nozzle according to the present invention is the a spinning nozzle that spins a porous hollow fiber membrane not having a hollow support, it is possible to manufacture a porous hollow fiber membrane having a hollow porous membrane by causing a core liquid to pass through the support passage and coagulating and washing the resultant. A solution having a desired coagulating property can be appropriately selected as the core liquid. Examples of the core liquid include non-solvents such as water, glycerin, and ethylene glycol or mixtures, mixed solution with a solvent or combinations thereof, and soluble polymers such as polyvinyl pyrrolidone.
It is preferable that the spinning nozzle according to the present invention have only one support passage.

### <Method of Manufacturing Hollow Fiber Membrane>

A method of manufacturing a hollow fiber membrane having a hollow porous membrane layer according to the present invention includes a spinning step of spinning a hollow fiber membrane from a membrane-forming resin solution, a coagulating step of coagulating the spun hollow fiber membrane using a coagulating liquid, a solvent-removing step of removing a solvent from the coagulated hollow fiber membrane, a decomposing and washing step of decomposing an additive included in the hollow fiber membrane from which the solvent has been removed and removing the additive by washing, a drying step of drying the washed hollow fiber membrane, and a winding step of winding the dried hollow fiber membrane, and the spinning step of spinning the hollow fiber membrane from the membrane-forming resin solution includes spinning the hollow fiber membrane from the membrane-forming resin solution by the use of the hollow fiber membrane-spinning nozzle according to the present invention.

### «Spinning Step»

In the method of manufacturing a hollow fiber membrane according to the present invention, first, the membrane-forming resin solution is prepared. The spinning nozzle used in the method of manufacturing a hollow fiber membrane according to the present invention includes a support passage through which a hollow support passes and a resin flow channel through which the membrane-forming resin solution forming a porous membrane layer flows therein. In the spinning nozzle, the hollow support is supplied from the support supply hole and is emitted from the support emitting hole, and the membrane-forming resin solution is supplied from the resin supply hole and is ejected in a cylindrical shape to the circumference of the support from the ejection hole. In spinning a hollow fiber membrane using the spinning nozzle according to the present invention, the membrane-forming resin solution ejected from the ejection hole of the spinning nozzle is applied to the outside of the hollow support simultaneously emitted from the supply emitting hole.

### «Coagulating Step»

The membrane-forming resin solution ejected from the spinning nozzle is brought into contact with a coagulating liquid in a coagulating bath to coagulate the membrane-forming resin solution, and the solvent of the membrane-forming resin solution is substituted with a non-solvent to form a porous membrane layer, whereby a hollow fiber membrane precursor having a hollow porous membrane layer is obtained.
Until the hollow fiber membrane precursor is ejected from the spinning nozzle and then reaches the coagulating bath containing the coagulating liquid, an idle flowing section (air gap) may be provided (dry spinning) or the idle flowing section may not be provided (wet spinning).

The membrane-forming resin solution used in the present invention is a solution (membrane-forming source solution) in which a membrane-forming resin and an additive (poring agent) for controlling phase separation are dissolved in an organic solvent in which both are well soluble. Examples of the coagulating liquid include water, ethanol, methanol, and mixtures thereof. Particularly, a mixed liquid of a solvent used in the membrane-forming source solution and water can be preferably used from the viewpoint of stability or operation management.

### <<Solvent-Removing Step>>

Since a large amount of materials such as a solvent remains in the hollow fiber membrane precursor coagulated through the coagulating step, a step (solvent-removing step) of removing the materials such as the solvent remaining in the hollow fiber membrane precursor is performed.
In the solvent-removing step, the hollow fiber membrane precursor having the hollow porous membrane layer is brought into contact with hot water in a solvent removing bath to remove the solvent. The temperature of the hot water is effectively set to be as high as possible without fusing the hollow fiber membrane precursors. Accordingly, the temperature of the hot water is preferably in a range of 20°C to 100°C and more preferably in a range of 50°C to 100°C.

### «Decomposing and Washing Step»

The decomposing and washing step is a step of decomposing an additive (poring agent) in the hollow fiber membrane precursor using a hypochlorous acid or the like and removing the decomposed additive through washing.
In the decomposing and washing step, the hollow fiber membrane precursor subjected to the solvent-removing step is immersed in an aqueous solution of sodium hypochlorite as an oxidizing agent and then the additive (poring agent) is converted into tow-weight molecules through oxidative decomposition. Thereafter, the additive (poring agent) is washed with hot water in a high-speed washing bath. The decomposing and washing step is performed once or two or more times so that the additive (poring agent) in the hollow fiber membrane precursor reaches a desired level.

### «Drying Step and Winding Step»

In the drying step, the hollow fiber membrane subjected to the decomposing and washing step is dried.
A method using in the drying step is not particularly limited, and a method of introducing the hollow fiber membrane into a dryer 77 such as a hot air dryer.
For example, the hollow fiber membrane subjected to the decomposing and washing step is dried at a temperature of 60°C or higher for the total time of 1 minute or more and less than 24 hours, and is wound on a winder such as a bobbing or a reel.

By employing the hollow fiber membrane-spinning nozzle according to the present invention and the method of manufacturing a hollow fiber membrane using the spinning nozzle, it is possible to manufacture a hollow fiber membrane in which occurrence of cracking along the axial direction is suppressed even when the spinning speed is raised. Occurrence of membrane cracking can be checked through the use of membrane cracking test to be described later.
The hollow fiber membrane manufactured using the spinning nozzle according to the present invention or the manufacturing method according to the present invention is a hollow fiber membrane having a hollow porous membrane layer and has a hollow portion at the center thereof. It is preferable that the hollow fiber membrane have only one hollow portion.

The outer diameter d of the hollow fiber membrane means the diameter of the outermost circumference of the membrane in an annular cross-section of the hollow fiber membrane. The inner diameter dh of the hollow fiber membrane means the diameter of the inner surface of the support in an annular cross-section of the hollow fiber membrane.

### (Outer Diameter d of Hollow Fiber Membrane)

The outer diameter d of the hollow fiber membrane is measured as follows.
Samples to be measured are cut out by about 10 cm, and several samples are bundled and covered with a polyurethane resin as a whole. The polyurethane resin permeates the hollow portion in the support.
After curing the polyurethane resin, a thin piece with a thickness (in the length direction of the membrane) of about 0.5 mm is sampled using a razor blade.
The annular cross-section of the sampled hollow fiber membrane is observed at 100x magnification of an objective lens using a projector (PROFILE PROJECTOR V-12, made by NIKON CORPORATION).
A mark (line) is aligned with the positions of the outer surface in the X direction and the Y direction of the cross-section of the hollow porous membrane under observation, the coordinates are read, and the outer diameter d is calculated. The outer diameter is measured three times and the average value of the outer diameters d is calculated.
The inner diameter dh of the hollow fiber membrane is measured as follows.
Samples to be measured are sampled in the same way as the samples of which the outer diameter d is measured.
The annular cross-section of the sampled hollow fiber membrane is observed at 100x magnification of an objective lens using a projector (PROFILE PROJECTOR V-12, made by NIKON CORPORATION).
A mark (line) is aligned with the positions of the inner surface of the support in the X direction and the Y direction of the cross-section of the hollow fiber membrane under observation, the coordinates are read, and the inner diameter dh is calculated. The inner diameter is measured three times and the average value of the inner diameters dh is calculated.
In general, the function of a hollow fiber membrane is exhibited by causing a filtration target to pass from the outer surface to the inner surface of the membrane. However, when the value of d/dh increases, the inner diameter dh serving as a parameter used to calculate flow resistance of a fluid in the hollow portion after passing through the surface of the hollow fiber membrane is smaller than the outer diameter d as a parameter used to calculate a filtration area of a hollow fiber membrane or the outer diameter d is larger than the inner diameter dh. Accordingly, there are possibilities that the flow resistance when a filtered fluid flows through the hollow portion increases and effective use of the hollow fiber membrane is difficult, or that a coagulation delay of the membrane-forming resin solution occurs and a desired membrane structure is not obtained, or that the membrane-forming resin solution excessively flows into the support to close the hollow portion.
When the value of d/dh decreases, the difference between the outer diameter d and the inner diameter dh of the hollow fiber membrane decreases and the thickness of the hollow fiber membrane decreases. Accordingly, there are possibilities that the pressure resistance is lowered or the hollow fiber membrane is likely to be broken.
The value of d/dh is preferably in a range of 1.3 to 5.0, more preferably in a range of 1.4 to 3.5, and still more preferably in a range of 1.5 to 2.0.
The outer diameter d of the hollow fiber membrane is preferably in a range of 0.5 mm to 5.0 mm. When the outer diameter d of the hollow fiber membrane is smaller than 0.5 mm, it is difficult to manufacture a hollow reinforcing support. When the outer diameter d of the hollow fiber membrane is larger than 5 mm, there are possibilities that the integration efficiency of membrane elements is lowered and a desired throughput is not achieved or that step passage failure such as turn due to a guide in the process of manufacturing a hollow fiber membrane occur.

### [Examples]

Hereinafter, the present invention will be specifically described below with reference to examples, but the present invention is not limited to these examples.

### (Membrane Cracking Test)

A hollow fiber membrane is disposed between heads of a digital micrometer (MDC-25 MJ, made by Mitutoyo Corporation) so that the measurement direction of the micrometer is parallel to the diameter direction of the membrane, the outer diameter value of the hollow fiber membrane measured by a projector is set as a zero point, a spindle is turned so that an indicated value of the micrometer is added from that position, the membrane is compressed and deformed until the absolute value of the indicated value of the micrometer reaches the diameter value of the hollow portion of the hollow fiber membrane measured by the projector, occurrence of cracking is checked by eye, and the indicated value of the micrometer is recorded.
When membrane cracking is not observed, the micrometer is temporarily opened, the membrane is rotated by 45° and compressed and deformed again, and occurrence of cracking is checked. This measurement is performed four times with a rotation of 45°. Three samples with a length of about 1 cm are measured.
Regarding indicators of a cracking property, a sample from which cracking is observed before the absolute value of the indicated value of the micrometer reaches the diameter of the hollow portion of the membrane is evaluated as cracked, and a sample from which cracking is not observed when reaching the diameter of the hollow portion is evaluated as non-cracked.

### [Example 1]

### (Manufacturing of Support)

A hollow knitted-string support was manufactured in the same way as in Example 4 of PCT International Publication No. WO 2009/142279 pamphlet.

### (Manufacturing of Hollow Fiber Membrane)

Polyvinylidene fluoride A (product name: KYNAR 301F, made by Arkema Co., Ltd.), polyvinylidene fluoride C (product name: KYNAR 9000HD, made by Arkema Co., Ltd.), polyvinyl pyrrolidone (product name: K-79, made by Nippon Shokubai Co., Ltd.), and N,N-dimethylacetamide (DMAc) (made by SAMSUNG FINE CHEMICALS CO., LTD.) were mixed at the mass ratio shown in Table 1, whereby Membrane-forming Resin Solutions (3) and (4) were prepared.
A hollow fiber membrane-spinning nozzle 11 in which a porous element (sintered metal element ESP-20-40-2-70 with a length of 13 mm, made by SMC Co., Ltd.) was disposed in each liquid storage section was used, the hollow knitted-string support was supplied from the support supply hole 114a in a state where the spinning nozzle was kept at 32°C and was made to travel at a traveling speed of 10 m/min. Membrane-forming Resin Solution (4) was supplied form the resin supply hole 115a as the first membrane-forming resin solution and Membrane-forming Resin Solution (3) was supplied from the resin supply hole 116a as the second membrane-forming resin solution. These two types of membrane-forming resin solutions were stacked and combined in the spinning nozzle, were ejected from the nozzle, and were applied and stacked onto the hollow knitted-string support, and the resultant was made to pass through an air gap of 62 mm. A hollow fiber membrane was manufactured in the same way as in Example 4 of PCT International Publication No. WO 2009/142279 pamphlet, except for the above-mentioned details.
A porous element with a pore diameter 70 µm was disposed in each liquid storage section of the hollow fiber membrane-spinning nozzle. The computed number of merging flows after passing through the porous element disposed in each liquid storage section was 2872.
The outer diameter d of the obtained hollow fiber membrane was 2.75 mm, the inner diameter dh was 1.5 mm, and the value of d/dh was 1.83.
In the membrane cracking test on the obtained hollow fiber membrane, membrane cracking was not observed.

### [Example 2]

### (Manufacturing of Support)

A hollow knitted-string support was manufactured in the same way as in Example 4 of PCT International Publication No. WO 2009/142279 pamphlet.

### (Manufacturing of Hollow Fiber Membrane)

A hollow fiber membrane was manufactured in the same way as in Example 1, except that a porous element (sintered metal element ESP-20-40-2-120 with a length of 13 mm, made by SMC Co., Ltd.) with a pore diameter of 120 µm was disposed in each liquid storage section.
The computed number of merging flows of the porous element disposed in each liquid storage section of the hollow fiber membrane-spinning nozzle was 1676.
The outer diameter d of the obtained hollow fiber membrane was 2.75 mm, the inner diameter dh was 1.5 mm, and the value of d/dh was 1.83.
In the membrane cracking test on the obtained hollow fiber membrane, membrane cracking was not observed.

### [Example 3]

### (Manufacturing of Support)

A hollow knitted-string support was manufactured in the same way as in Example 4 of PCT International Publication No. WO 2009/142279 pamphlet.

### (Manufacturing of Hollow Fiber Membrane)

A hollow fiber membrane was manufactured in the same way as in Example 1, except that the nominal filtration accuracy of the porous element of each liquid storage section was set to 150 µm (sintered metal mesh FUJILLOY (registered trademark) with an outer diameter of 14 mm, an inner diameter of 11 mm, and a length of 13 mm, made by FUJI FILTER MFG. CO., LTD.).
The computed number of merging flows after passing through the porous element disposed in each liquid storage section of the hollow fiber membrane-spinning nozzle was 922.
The outer diameter d of the obtained hollow fiber membrane was 2.75 mm, the inner diameter dh was 1.5 mm, and the value of d/dh was 1.83.
In the membrane cracking test on the obtained hollow fiber membrane, membrane cracking was not observed.

### [Example 4]

### (Manufacturing of Support)

A hollow knitted-string support was manufactured in the same way as in Example 4 of PCT International Publication No. WO 2009/142279 pamphlet, except that the temperature of the heating dice was set to 190°C and the outer diameter of the support was set to 2.55 mm.

### (Manufacturing of Hollow Fiber Membrane)

Polyvinylidene fluoride A (product name: KYNAR 301F, made by Arkema Co., Ltd.), polyvinyl pyrrolidone (product name: K-79, made by Nippon Shokubai Co., Ltd.), and N,N-dimethylacetamide (DMAc) (made by SAMSUNG FINE CHEMICALS CO., LTD.) were mixed at the mass ratio shown in Table 1, whereby Membrane-forming Resin Solution (5) was prepared.
A hollow fiber membrane was manufactured in the same way as in Example 1, except that a porous element (sintered metal element ESP-14-40-2-70 with a length of 13 mm, made by SMC Co., Ltd.) with a pore diameter of 70 µm was disposed in the liquid storage section 121, the first membrane-forming resin solution was not supplied, the resin supply hole 115a was closed, and Membrane-forming Resin Solution (5) was supplied from the resin supply hole 116a as the second membrane-forming resin solution.
The computed number of merging flows after passing through the porous element disposed in the liquid storage section of the hollow fiber membrane-spinning nozzle was 1795.
The outer diameter d of the obtained hollow fiber membrane was 2.75 mm, the inner diameter dh was 1.5 mm, and the value of d/dh was 1.83.
In the membrane cracking test on the obtained hollow fiber membrane, membrane cracking was not observed.

### [Example 5]

### (Manufacturing of Support)

A hollow knitted-string support was manufactured in the same way as in Example 1.

### (Manufacturing of Hollow Fiber Membrane)

A hollow fiber membrane was manufactured in the same way as in Example 4, except that a porous element (sintered metal element ESP-14-40-2-120 with a length of 13 mm, made by SMC Co., Ltd.) with a pore diameter of 120 µm was disposed in the liquid storage section 121.
The computed number of merging flows after passing through the porous element disposed in each liquid storage section of the hollow fiber membrane-spinning nozzle was 1047.
The outer diameter d of the obtained hollow fiber membrane was 2.75 mm, the inner diameter dh was 1.5 mm, and the value of d/dh was 1.83.
In the membrane cracking test on the obtained hollow fiber membrane, membrane cracking was not observed.

### [Example 6]

### (Manufacturing of Support)

A hollow knitted-string support was manufactured in the same way as in Example 1.

### (Manufacturing of Hollow Fiber Membrane)

A hollow fiber membrane was manufactured in the same way as in Example 4, except that a porous element (sintered metal mesh FUJILLOY (registered trademark) with an outer diameter of 14 mm, an inner diameter of 11 mm, and a length of 13 mm, made by FUJI FILTER MFG. CO., LTD.) with a pore diameter of 150 µm was disposed in the liquid storage section 121.
In the membrane cracking test on the obtained hollow fiber membrane, membrane cracking was not observed.

### [Example 7]

### (Manufacturing of Support)

A hollow knitted-string support was manufactured in the same way as in Example 4.

### (Manufacturing of Hollow Fiber Membrane)

Polyvinylidene fluoride A (product name: KYNAR 301 F, made by Arkema Co., Ltd.), polyvinylidene fluoride B (product name: KYNAR 9000LD, made by Arkema Co., Ltd.), polyvinyl pyrrolidone (product name: K-79, made by Nippon Shokubai Co., Ltd.), and N,N-dimethylacetamide (DMAc) (made by SAMSUNG FINE CHEMICALS CO., LTD.) were mixed at the mass ratio shown in Table 1, whereby Membrane-forming Resin Solutions (5) and (6) were prepared.
A hollow fiber membrane was manufactured in the same way as in Example 4, except that a porous element (sintered metal element ESP-20-40-2-70 with a length of 13 mm, made by SMC Co., Ltd.) with a pore diameter of 70 µm was disposed in each liquid storage section.
In the membrane cracking test on the obtained hollow fiber membrane, membrane cracking was not observed.

### [Example 8]

### (Manufacturing of Support)

A hollow knitted-string support was manufactured in the same way as in Example 4.

### (Manufacturing of Hollow Fiber Membrane)

A hollow fiber membrane was manufactured in the same way as in Example 7, except that a porous element (sintered metal element ESP-20-40-2-120 with a length of 13 mm, made by SMC Co., Ltd.) with a pore diameter of 120 µm was disposed in each liquid storage section.
In the membrane cracking test on the obtained hollow fiber membrane, membrane cracking was not observed.

### [Example 9]

### (Manufacturing of Support)

A hollow knitted-string support was manufactured in the same way as in Example 4.

### (Manufacturing of Hollow Fiber Membrane)

A hollow fiber membrane was manufactured in the same way as in Example 7, except that a porous element (sintered metal mesh FUJILLOY (registered trademark) with an outer diameter of 14 mm, an inner diameter of 11 mm, and a length of 13 mm, made by FUJI FILTER MFG. CO., LTD.) with a pore diameter of 150 µm was disposed in each liquid storage section.
In the membrane cracking test on the obtained hollow fiber membrane, membrane cracking was not observed.

### [Example 10]

### (Manufacturing of Support)

A hollow knitted-string support was manufactured in the same way as in Example 4 of PCT International Publication No. WO 2009/142279 pamphlet.

### (Manufacturing of Hollow Fiber Membrane)

A hollow fiber membrane was manufactured in the same way as in Example 1, except that a porous element (sintered metal element ESP-20-40-2-120 with a length of 13 mm, made by SMC Co., Ltd.) with a pore diameter of 120 µm was disposed in the liquid storage section 118a and a porous element in which pores with a diameter of 0.5 mm were punched at 72 positions with an interval of 5 degrees at a position with a length of 6.5 mm from the outer circumference to the inner circumference was disposed in a cylindrical shape with an outer diameter 30 mm, an inner diameter of 26 mm, and a length of 13 mm in the liquid storage section 121a.
The computed number of merging flows of the inner layer of the hollow fiber membrane after passing through the porous element disposed in the liquid storage section 118 was 1676 and the computed number of merging flows of the outer layer after passing through the porous element disposed in the liquid storage section 121 was 72.
The outer diameter d of the obtained hollow fiber membrane was 2.75 mm, the inner diameter dh was 1.5 mm, and the value of d/dh was 1.83.
In the membrane cracking test on the obtained hollow fiber membrane, membrane cracking was not observed.

### [Comparative Example 1]

A porous hollow fiber membrane was obtained in the same spinning way as in Example 1, except that the porous element in Example 1 was not disposed in any one of the liquid storage sections 118a and 121a.
The outer diameter d of the obtained hollow fiber membrane was 2.75 mm, the inner diameter dh was 1.5 mm, and the value of d/dh was 1.83.
In the membrane cracking test on the obtained hollow fiber membrane, membrane cracking was observed.

### [Comparative Example 2]

A porous hollow fiber membrane was obtained in the same spinning way as in Example 1, except that the porous element in Example 1 was not disposed in the liquid storage section 118a.
In the membrane cracking test on the obtained hollow fiber membrane, membrane cracking was observed.

### [Comparative Example 3]

A porous hollow fiber membrane was obtained in the same spinning way as in Example 1, except that the porous element in Example 1 was not disposed in the liquid storage sections 121a.
In the membrane cracking test on the obtained hollow fiber membrane, membrane cracking was observed.

### [Comparative Example 4]

A hollow fiber membrane was manufactured in the same way as in Example 10, except that a porous element in which pores with a diameter of 0.5 mm were punched at 36 positions with an interval of 10 degrees at a position with a length of 6.5 mm from the outer circumference to the inner circumference was disposed in a cylindrical shape with an outer diameter 20 mm, an inner diameter of 16 mm, and a length of 13 mm in the liquid storage section 121a in Example 10.
The computed number of merging flows of the inner layer of the hollow fiber membrane after passing through the porous element disposed in the liquid storage section 118 was 1676 and the computed number of merging flows of the outer layer after passing through the porous element disposed in the liquid storage section 121 was 36.
The outer diameter d of the obtained hollow fiber membrane was 2.75 mm, the inner diameter dh was 1.5 mm, and the value of d/dh was 1.83.
In the membrane cracking test on the obtained hollow fiber membrane, membrane cracking was observed.

### [Example 11]

### (Manufacturing of Support)

A hollow knitted-string support was manufactured in the same way as in Example 4 of PCT International Publication No. WO 2009/142279 pamphlet, except that the temperature of the heating dice was set to 190°C and the outer diameter of the support was set to 2.55 mm.

### (Manufacturing of Hollow Fiber Membrane)

Polyvinylidene fluoride A (product name: KYNAR 301F, made by Arkema Co., Ltd.), polyvinyl pyrrolidone (product name: K-79, made by Nippon Shokubai Co., Ltd.), and N,N-dimethylacetamide (DMAc) (made by SAMSUNG FINE CHEMICALS CO., LTD.) were mixed at the mass ratio shown in Table 1, whereby Membrane-forming Resin Solution (5) was prepared.
A hollow fiber membrane-spinning nozzle in which twelve outer circumferential portions concave to the outside were disposed in the liquid storage chambers, respectively, was used, the hollow knitted-string support was supplied from the support supply hole 214a in a state where the spinning nozzle was kept at 32°C and was made to travel at a traveling speed of 2 m/min. Membrane-forming Resin Solution (5) was supplied from the resin supply hole 215a, was ejected from the hollow fiber membrane-spinning nozzle, and was applied and stacked onto the hollow knitted-string support, and the resultant was made to pass through an air gap of 42 mm. A hollow fiber membrane was manufactured in the same way as in Example 4 of PCT International Publication No. WO 2009/142279 pamphlet, except for the above-mentioned details.
In the membrane cracking test on the obtained hollow fiber membrane, membrane cracking was not observed.

### [Example 12]

### (Manufacturing of Support)

A hollow knitted-string support was manufactured in the same way as in Example 4 of PCT International Publication No. WO 2009/142279 pamphlet, except that the temperature of the heating dice was set to 190°C and the outer diameter of the support was set to 2.55 mm.

### (Manufacturing of Hollow Fiber Membrane)

Polyvinylidene fluoride A (product name: KYNAR 301F, made by Arkema Co., Ltd.), polyvinyl pyrrolidone (product name: K-79, made by Nippon Shokubai Co., Ltd.), and N,N-dimethylacetamide (DMAc) (made by SAMSUNG FINE CHEMICALS CO., LTD.) were mixed at the mass ratio shown in Table 1, whereby Membrane-forming Resin Solution (5) was prepared.
A hollow fiber membrane-spinning nozzle in which seven steel balls with a diameter of 2.79 mm were disposed in the liquid storage section, respectively, was used, the hollow knitted-string support was supplied from the support supply hole 313a in a state where the spinning nozzle was kept at 32°C and was made to travel at a traveling speed of 4 m/min. Membrane-forming Resin Solution (5) was supplied form the resin supply hole 314a, was ejected from the hollow fiber membrane-spinning nozzle, and was applied and stacked onto the hollow knitted-string support, and the resultant was made to pass through an air gap of 42 mm. A hollow fiber membrane was manufactured in the same way as in Example 4 of PCT International Publication No. WO 2009/142279 pamphlet, except for the above-mentioned details.
In the membrane cracking test on the obtained hollow fiber membrane, membrane cracking was not observed.

### [Example 13]

### (Manufacturing of Support)

A hollow knitted-string support was manufactured in the same way as in Example 4 of PCT International Publication No. WO 2009/142279 pamphlet, except that the temperature of the heating dice was set to 190°C and the outer diameter of the support was set to 2.55 mm.

### (Manufacturing of Hollow Fiber Membrane)

A hollow fiber membrane was manufactured in the same way as in Example 12, except that 300 steel balls with a diameter of 1.51 mm were disposed in the liquid storage section.
In the membrane cracking test on the obtained hollow fiber membrane, membrane cracking was not observed.

### [Comparative Example 5]

A hollow fiber membrane was obtained in the same spinning way as in Example 12, except that the support manufactured in the same way as in Example 12 was used and the liquid storage section was not filled with the steel balls.
In the membrane cracking test on the obtained hollow fiber membrane, membrane cracking was observed.

### [Example 14]

A hollow knitted-string support was manufactured in the same way as in Example 4 of PCT International Publication No. WO 2009/142279 pamphlet, except that the temperature of the heating dice was set to 190°C and the outer diameter of the support was set to 2.55 mm.

### (Manufacturing of Hollow Fiber Membrane)

Polyvinylidene fluoride A (product name: KYNAR 301F, made by Arkema Co., Ltd.), polyvinylidene fluoride B (product name: KYNAR 9000LD, made by Arkema Co., Ltd.), polyvinyl pyrrolidone (product name: K-79, made by Nippon Shokubai Co., Ltd.), and N,N-dimethylacetamide (DMAc) (made by SAMSUNG FINE CHEMICALS CO., LTD.) were mixed at the mass ratio shown in Table 1, whereby Membrane-forming Resin Solutions (5) and (6) were prepared.
A hollow fiber membrane-spinning nozzle 41 in which two-stages of liquid storage sections were disposed in the resin flow channel of Membrane-forming Resin Solution (6), two-stages liquid storage sections were disposed in the resin flow channel of Membrane-forming Resin Solution (5), and the positions of the neighboring resin supply sections were different by 225 degrees was used. The hollow knitted-string support was supplied from the support supply hole in a state where the spinning nozzle was kept at 32°C and was made to travel at a traveling speed of 10 m/min, and Membrane-forming Resin Solutions (5) and (6) were supplied from the resin supply holes. These two types of Membrane-forming Resin Solutions (5) and (6) were stacked and combined in the spinning nozzle, were ejected from the nozzle, and were applied and stacked onto the hollow knitted-string support, and the resultant was made to pass through an air gap of 42 mm. A hollow fiber membrane was manufactured in the same way as in Example 4 of PCT International Publication No. WO 2009/142279 pamphlet, except for the above-mentioned details.
In the membrane cracking test on the obtained hollow fiber membrane, membrane cracking was not observed.

### [Comparative Example 6]

A hollow fiber membrane was obtained in the same spinning way as in Example 14, except that a nozzle in which each liquid storage section in Example 14 had one stage and the positions of the resin supply sections were set to be different by 180 degrees was used.
In the membrane cracking test on the obtained hollow fiber membrane, membrane cracking was observed.

### [Example 15]

### (Manufacturing of Support)

A hollow knitted-string support was manufactured in the same way as in Example 4 of PCT International Publication No. WO 2009/142279 pamphlet, except that the temperature of the heating dice was set to 190°C and the outer diameter of the support was set to 2.55 mm.

### (Manufacturing of Hollow Fiber Membrane)

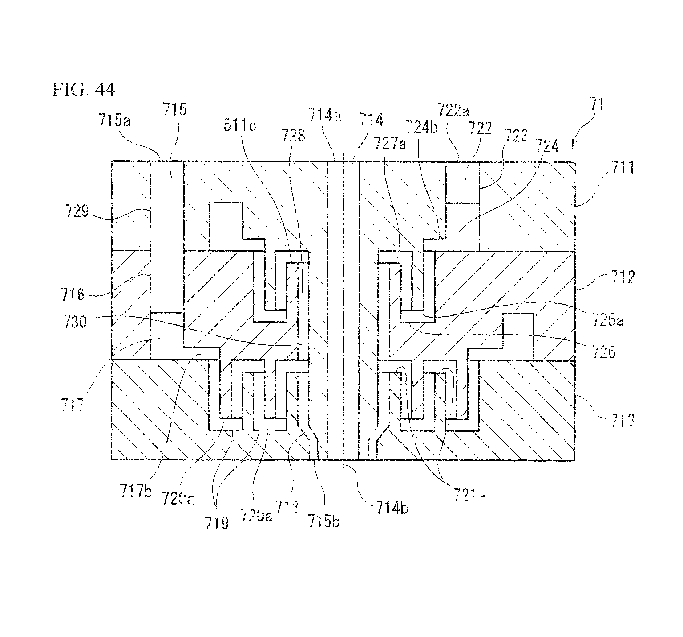

Polyvinylidene fluoride A (product name: KYNAR 301F, made by Arkema Co., Ltd.), polyvinylidene fluoride B (product name: KYNAR 9000LD, made by Arkema Co., Ltd.), polyvinyl pyrrolidone (product name: K-79, made by Nippon Shokubai Co., Ltd.), and N,N-dimethylacetamide (DMAc) (made by SAMSUNG FINE CHEMICALS CO., LTD.) were mixed at the mass ratio shown in Table 1, whereby Membrane-forming Resin Solutions (5) and (6) were prepared.
The hollow knitted-string support was supplied from the support supply hole 714a in a state where the spinning nozzle 71 shown in FIG. 44 was kept at 32°C and was made to travel at a traveling speed of 10 m/min. Membrane-forming Resin Solution (6) was supplied from the resin supply hole 722a of an inner layer as the membrane-forming resin solution of the inner layer, and Membrane-forming Resin Solution (5) was supplied from the resin supply hole 715a of an outer layer as the membrane-forming resin solution of the outer layer. The membrane-forming resin solutions were guided to the liquid storage section 717 or 724, respectively, and branched and merged in an annular cross-sectional shape. The inner layer was guided from the shaping section 728 to 718 with a stay time of about 10 seconds in the meandering section 726 while vertically meandering. The outer layer was guided to the shaping section 718 with a stay time of about 60 seconds in the meandering section 719 while vertically meandering. The membrane-forming resin solutions were stacked and combined in the spinning nozzle, were ejected from the nozzle, and were applied and stacked onto the hollow knitted-string support, and the resultant was made to pass through an air gap of 62 mm. A hollow fiber membrane was manufactured in the same way as in Example 4 of PCT International Publication No. WO 2009/142279 pamphlet, except for the above-mentioned details.
In the membrane cracking test on the obtained hollow fiber membrane, membrane cracking was not observed.

### [Example 16]

### (Manufacturing of Support)

A hollow knitted-string support was manufactured in the same way as in Example 15.

### (Manufacturing of Hollow Fiber Membrane)

Polyvinylidene fluoride A (product name: KYNAR 301F, made by Arkema Co., Ltd.), polyvinyl pyrrolidone (product name: K-79, made by Nippon Shokubai Co., Ltd.), and N,N-dimethylacetamide (DMAc) (made by SAMSUNG FINE CHEMICALS CO., LTD.) were mixed at the mass ratio shown in Table 1, whereby Membrane-forming Resin Solution (5) was prepared.
A hollow fiber membrane was manufactured in the same way as in Example 1, except that Membrane-forming Resin Solution (5) was supplied from the resin supply section 514a and was guided to the shaping section 517 with a stay time of about 10 seconds in the meandering section 518.
In the membrane cracking test on the obtained hollow fiber membrane, membrane cracking was not observed.

### [Comparative Example 7]

### (Manufacturing of Support)

A hollow knitted-string support was manufactured in the same way as in Example 15.

### (Manufacturing of Hollow Fiber Membrane)

Similarly to Example 16, mixing was performed to satisfy the mass ratio shown in Table 1, whereby Membrane-forming Resin Solution (5) was prepared.
A hollow fiber membrane was manufactured in the same way as in Example 2, except that Membrane-forming Resin Solution (5) was supplied from the resin supply section and was guided to the shaping section with a stay time of about 3 seconds in the meandering section.
In the membrane cracking test on the obtained hollow fiber membrane, membrane cracking was observed.

### [Example 17]

### (Manufacturing of Support)

A hollow knitted-string support was manufactured in the same way as in Example 4 of PCT International Publication No.WO 2009/142279 pamphlet, except that the temperature of the heating dice was set to 190°C and the outer diameter of the support was set to 2.55 mm.

### (Manufacturing of Hollow Fiber Membrane)

Polyvinylidene fluoride A (product name: KYNAR 301F, made by Arkema Co., Ltd.), polyvinyl pyrrolidone (product name: K-79, made by Nippon Shokubai Co., Ltd.), and N,N-dimethylacetamide (DMAc) (made by SAMSUNG FINE CHEMICALS CO., LTD.) were mixed at the mass ratio shown in Table 1, whereby Membrane-forming Resin Solution (5) was prepared.
A hollow fiber membrane-spinning nozzle in which a continuous spiral weir was disposed in the liquid storage section, the spiral weir was wound by 2.5 turns, and the gap between the tip of the weir and the top wall surface was set to 0.1 mm was used, the hollow knitted-string support was supplied from the support supply hole in a state where the spinning nozzle was kept at 32°C and was made to travel at a traveling speed of 10 m/min. Membrane-forming Resin Solution (5) was supplied form the resin supply hole, was ejected from the hollow fiber membrane-spinning nozzle, and was applied and stacked onto the hollow knitted-string support, and the resultant was made to pass through an air gap of 42 mm. A hollow fiber membrane was manufactured in the same way as in Example 4 of PCT International Publication No. WO 2009/142279 pamphlet, except for the above-mentioned details.
In the membrane cracking test on the obtained hollow fiber membrane, membrane cracking was not observed.

### [Example 18]

### (Manufacturing of Support)

A hollow knitted-string support was manufactured in the same way as in Example 1.

### (Manufacturing of Hollow Fiber Membrane)

Membrane-forming Resin Solution (5) was prepared in the same way as in Example 1.
A continuous spiral weir was disposed in the liquid storage section and the spiral weir was wound by about 6 turns. The tip of the weir was set to a conical shape with an angle of 14 degrees so as to be narrowed toward the ejection hole, and the outer wall surface was set to a conical shape with an angle of 10 degrees so as to be narrowed toward the ejection hole. A hollow fiber membrane-spinning nozzle in which the clearance from the outer wall surface in the spiral end portion was set to about 0.3 mm was used and the support was made to travel at a traveling speed of 5 m/min. A hollow fiber membrane was manufactured in the same way as in Example 1, except for the above-mentioned details.
In the membrane cracking test on the obtained hollow fiber membrane, membrane cracking was not observed.

### [Comparative Example 8]

A hollow knitted-string support with an outer diameter of 1.8 mm and an inner diameter of 1.5 mm was manufactured in the same way as in Example 4 of PCT International Publication No. WO 2009/142279 pamphlet, except that the fineness of polyester was set to 167 dtex, the number of filaments was set to 72, the number of bobbins was set to 3, the total fineness was set to 501 dtex, and the inner diameter of the heating dice was set to 1.8 mm.

The computed number of merging flows of the porous element disposed in each liquid storage section was 922.
A porous hollow fiber membrane was obtained in the same spinning way as in Example 3, except that the amount of solution ejected was adjusted to change the support and to obtain a desired diameter.
The outer diameter d of the obtained hollow fiber membrane was 1.8 mm, the inner diameter dh was 1.5 mm, and the value of d/dh was 1.2.
The obtained porous hollow fiber membrane was flat and the membrane was broken.

### [Comparative Example 9]

A hollow knitted-string support was manufactured in the same way as in Example 4 of PCT International Publication No. WO 2009/142279 pamphlet.

A porous hollow fiber membrane was obtained in the same spinning way as in Example 3, except that the amount of solution ejected was adjusted to obtain a desired diameter.
The outer diameter d of the obtained hollow fiber membrane was 8.5 mm, the inner diameter dh was 1.5 mm, and the value of d/dh was 5.67.
In the obtained porous hollow fiber membrane, the closing of the hollow portion due to the excessive flowing of the membrane-forming resin into the hollow portion was observed.

**[Table 1]**

| composition (% by mass) | membrane-forming resin solution | | | |
|---|---|---|---|---|
| | (3) | (4) | (5) | (6) |
| polyvinylidene fluoride A | 18 | 11.5 | 19 | 12 |
| polyvinylidene fluoride B | | | | 12 |
| polyvinylidene fluoride C | | 10.9 | | |
| polyvinyl pyrrolidone | 9.5 | 10.9 | 10 | 11 |
| N,N-dimethyl acetamide | 72.5 | 66.6 | 71 | 65 |
| melting temperature of membrane-forming source solution | 60°C | 60°C | 60°C | 60°C |
| concentration of polyvinylidene fluoride in membrane-forming source solution | 18 | 22.4 | 19 | 24 |

The computed numbers of merging flows in Examples 1 to 5 and 10 and Comparative Example 1 and 4 are shown in Table 2. As can be clearly seen from Table 2, in Examples 1 to 5 and 10 in which the computed number of merging flows is greater than 50, membrane cracking was not observed as the membrane cracking test on the obtained hollow fiber membrane. On the other hand, in Comparative Examples 1 and 4 in which the computed number of merging flows is smaller than 50, membrane cracking was observed as the membrane cracking test on the obtained hollow fiber membrane.

**[Table 2]**

| | | Ex. 10 | Ex. 1 | Ex. 2 | Ex. 3 | Ex. 4 | Ex. 5 | Com. Ex. 4 | Com. Ex. 1 | Com. Ex. 8 | Com. Ex. 9 |
|---|---|---|---|---|---|---|---|---|---|---|---|
| porous member emission diameter | (mm) | 16 | 16 | 16 | 11 | 10 | 10 | 16 | | 11 | 11 |
| porous member length | (mm) | 10 | 10 | 10 | 10 | 10 | 10 | 10 | | 10 | 10 |
| porosity | (%) | 40 | 40 | 40 | 40 | 40 | 40 | 40 | | 40 | 40 |
| filtration accuracy | (mm) | 0.12 | 0.07 | 0.12 | 0.15 | 0.07 | 0.12 | 0.12 | | 0.15 | 0.15 |
| filtration area (in consideration of porosity) | (mm²) | 201.06 | 201.06 | 201.06 | 138.23 | 125.66 | 125.66 | 201.06 | | 138.23 | 138.23 |
| number of pores (computed number of meging flows) of inner layer (118) | pieces | 1676 | 2872 | 1676 | 922 | 1795 | 1047 | 1676 | 1 | 922 | 922 |
| number of pores (computed number of meging flows) of outer layer (121) | pieces | 72 | 2872 | 2872 | 2872 | - | - | 36 | 1 | 922 | 922 |
| membrane outer diameter d | (mm) | 2.75 | 2.75 | 2.75 | 2.75 | 2.75 | 2.75 | 2.75 | 2.75 | 1.8 | 8.5 |
| membrane inner diameter dh | (mm) | 1.5 | 1.5 | 1.5 | 1.5 | 1.5 | 1.5 | 1.5 | 1.5 | 1.5 | 1.5 |
| d/dh | (-) | 1.83 | 1.83 | 1.83 | 1.83 | 1.83 | 1.83 | 1.83 | 1.83 | 1.20 | 5.67 |

### Industrial Applicability

Since a hollow fiber membrane in which occurrence of cracking along the axial direction is suppressed can be manufactured even when the spinning speed is raised, the hollow fiber membrane-spinning nozzle and the method of manufacturing the hollow fiber membrane-spinning nozzle according to the present invention can be applied to the fields of water treatment or the like.

### Reference Signs List

11∼13: hollow fiber membrane-spinning nozzle
111, 141: first nozzle
112, 112A, 142: second nozzle
113, 113A: third nozzle
114, 143: support passage
115, 116, 144: resin flow channel
117, 120, 145: introduction section
118: first liquid storage section
119: first shaping section
121: second liquid storage section
122: second shaping section
146: liquid storage section
147: shaping section
131, 132, 151: porous element
21: hollow fiber membrane-spinning nozzle
211: first nozzle
212: second nozzle
213 : third nozzle
214: support passage
215: resin flow channel
216: introduction section
217: liquid storage section
217A: first liquid storage chamber
217B: second liquid storage chamber
217a: supply channel
218: shaping section
31, 32: hollow fiber membrane-spinning nozzle
311, 331: first nozzle
312, 332: second nozzle
313,333: support passage
314; 334: resin flow channel
315, 335: introduction section
316; 336: liquid storage section
317, 337: shaping section
320, 340: filler layer
321, 341: particle
41: hollow fiber membrane-spinning nozzle
411: first nozzle
412a: second nozzle
412b: third nozzle
412c: fourth nozzle
412d: fifth nozzle
413: support passage
414: resin flow channel
415: introduction section
416: liquid storage section
416A: first liquid storage section
416B: second liquid storage section
416C: third liquid storage section
416D: fourth liquid storage section
416a: first resin supply section
416b: second resin supply section
416c: third resin supply section
417: combining section
417A: first shaping section
417B: second shaping section
417C: third shaping section
417D: fourth shaping section
51: hollow fiber membrane-spinning nozzle
511: first nozzle
512: second nozzle
513: support passage
514: resin flow channel
515: introduction section
516: liquid storage section
517: shaping section
518: meandering section
61, 62: hollow fiber membrane-spinning nozzle
611, 621: first nozzle
612, 622: second nozzle
613, 623: support passage
614, 624: resin flow channel
615, 625: introduction section
616, 626: liquid storage section
617, 627: shaping section
618, 618 A, 619, 628: weir
71: hollow fiber membrane-spinning nozzle
711: first nozzle
712: second nozzle
713: third nozzle
714: support passage
715, 722: resin flow channel
716, 723, 729: introduction section
717, 724: liquid storage section
718, 728: shaping section
719, 726: meandering section
730: combining section

## Claims

1. A hollow fiber membrane-spinning nozzle that spins a hollow fiber membrane comprising a porous membrane layer and a support,
wherein the nozzle comprises a resin flow channel through which a membrane-forming resin solution forming the porous membrane layer flows, and
the resin flow channel comprises a liquid storage section that stores the membrane-forming resin solution and a shaping section that shapes the membrane-forming resin solution in a cylindrical shape and satisfies at least one condition selected from a group of (a) to (c):
(a) the resin flow channel is disposed to cause the membrane-forming resin solution to branch and merge,
(b) delay means for delaying the flow of the membrane-forming resin solution is disposed in the resin flow; and
(c) the liquid storage section or the shaping section comprises branching and merging means for the membrane-forming resin solution therein.

2. The hollow fiber membrane-spinning nozzle according to Claim 1, wherein the liquid storage section has an annular cross-sectional shape.

3. The hollow fiber membrane-spinning nozzle according to Claim 1 or 2, wherein the resin flow channel comprises two or more merging portions in which the membrane-forming resin solution merges.

4. The hollow fiber membrane-spinning nozzle according to any one of Claims 1 to 3, wherein the liquid storage section or the shaping section comprises the branching and merging means for the membrane-forming resin solution therein, and
the branching and merging means is a porous element which is disposed in the liquid storage section and through which the membrane-forming resin solution passes.

5. The hollow fiber membrane-spinning nozzle according to any one of Claims 1 to 4, wherein the porous element is a porous member having a three-dimensional mesh structure.

6. The hollow fiber membrane-spinning nozzle according to any one of Claims 1 to 5, wherein the porous element has a cylindrical shape.

7. The hollow fiber membrane-spinning nozzle according to Claim 4, wherein the cylindrical porous element is disposed to cause the membrane-forming resin solution to pass from an outer circumferential surface to an inner circumferential surface.

8. The hollow fiber membrane-spinning nozzle according to any one of Claims 1 to 5, wherein the porous element has a disk-like shape.

9. The hollow fiber membrane-spinning nozzle according to any one of Claims 1 to 8, wherein the porous element is made of a sintered compact of metal.

10. The hollow fiber membrane-spinning nozzle according to Claim 9, wherein the porous element is made of a sintered compact of metal particulates or a sintered compact of metallic meshes.

11. The hollow fiber membrane-spinning nozzle according to any one of Claims 1 to 10, further comprising a circular support passage through which the support passes,
wherein the diameter of the support passage is in a range of 95% to 200% of the outer diameter of the support.

12. The hollow fiber membrane-spinning nozzle according to any one of Claims 1 to 11, wherein the support is made of a twisted string or a braided string.

13. The hollow fiber membrane-spinning nozzle according to any one of Claims 1 to 12, wherein the hollow fiber membrane-spinning nozzle comprises two or more resin flow channels having two or more liquid storage sections that store the membrane-forming resin solution and a shaping section that shapes the membrane-forming resin solution in a cylindrical shape, and
the branching and merging means is the porous element disposed in each of the liquid storage sections.

14. The hollow fiber membrane-spinning nozzle according to any one of Claims 1 to 13, wherein the computed number of merging flows in an annular cross-sectional shape of the hollow fiber membrane is equal to or more than 50.

15. The hollow fiber membrane-spinning nozzle according to any one of Claims 1 to 14, further comprising an ejection hole through which the membrane-forming resin solution is ejected,
wherein a pressure loss when the membrane-forming resin solution passes through the porous element is greater than a pressure loss until the membrane-forming resin solution reaches the porous element and a pressure loss until the membrane-forming resin solution reaches the ejection hole after passing through the porous element.

16. The hollow fiber membrane-spinning nozzle according to any one of Claims 1 to 3, wherein the resin flow channel is disposed to cause the membrane-forming resin solution to branch and merge,
the resin flow channel comprises a liquid storage section that is divided into liquid storage chambers of two or more stages, and
two or more supply channels supplying the membrane-forming resin solution from the top-stage liquid storage chamber to the lower-stage liquid storage chamber are disposed along an outer wall of the liquid storage section.

17. The hollow fiber membrane-spinning nozzle according to any one of Claims 1 to 3, wherein the liquid storage section or the shaping section comprises the branching and merging means for the membrane-forming resin solution therein, and
the branching and merging means is a filler layer filled with particles and disposed in the liquid storage section.

18. The hollow fiber membrane-spinning nozzle according to any one of Claims 1 to 3, wherein the resin flow channel is disposed to cause the membrane-forming resin solution to branch and merge,
the resin flow channel comprises the liquid storage section that is vertically divided into two or more stages, and
the top-stage liquid storage section and the lower-stage liquid storage section communicate with a resin supply section.

19. The hollow fiber membrane-spinning nozzle according to Claim 18, wherein the liquid storage section is divided into three or more stages, and
the resin supply section causing the n-th-stage (where n is a natural number) liquid storage section and the (n+1)-th-stage liquid storage section to communicate with each other and the resin supply section causing the (n+1)-th-stage liquid storage section and the (n+2)-th-stage liquid storage section to communicate with each other are arranged at positions shifted along a circumferential direction of the liquid storage section.

20. The hollow fiber membrane-spinning nozzle according to Claim 18 or 19, wherein the resin supply sections are arranged with a constant angle interval in a circumferential direction of the liquid storage section about a central axis of the shaping section sequentially from the top stage.

21. The hollow fiber membrane-spinning nozzle according to any one of Claims I to 3, wherein the resin flow channel is provided with delay means for delaying the flow of the membrane-forming resin solution, and
the delay means is a meandering section that causes the membrane-forming resin solution to vertically meander between the liquid storage section and the shaping section.

22. The hollow fiber membrane-spinning nozzle according to any one of Claims 1 to 3, wherein the resin flow channel is disposed to cause the membrane-forming resin solution to branch and merge, and
the resin flow channel is a weir that extends from one wall surface of the liquid storage section to the other wall surface and that regulates the flow of the membrane-forming resin solution in the liquid storage section so as to cause the flow of the membrane-forming resin solution to revolve.

23. A method of manufacturing a hollow fiber membrane having a hollow porous membrane layer and a support, comprising:
spinning a hollow fiber membrane from a membrane-forming resin solution;
coagulating the spun hollow fiber membrane using a coagulating liquid;
removing a solvent from the coagulated hollow fiber membrane;
decomposing an additive in the hollow fiber membrane from which the solvent has been removed and washing the hollow fiber membrane; and
drying the washed hollow fiber membrane,
wherein the spinning of the hollow fiber membrane from the membrane-forming resin solution comprises spinning the hollow fiber membrane from the membrane-forming resin solution using the hollow fiber membrane-spinning nozzle according to any one of Claims 1 to 22.

24. The method of manufacturing a hollow fiber membrane according to Claim 23, wherein an outer diameter of the hollow fiber membrane spun in the spinning of the hollow fiber membrane is in a range of 0.5 mm to 5.0 mm, and
a value d/dh obtained by dividing the outer diameter d of the hollow fiber membrane by the inner diameter dh thereof is in a range of 1.3 to 5.0.

25. The method of manufacturing a hollow fiber membrane according to Claim 23 or 24, wherein a computed number of merging flows in an annular cross-sectional shape of the hollow fiber membrane spun in the spinning of the hollow fiber membrane is equal to or more than 50.
